# EUROPEAN PATENT APPLICATION

(11) **EP 4 769 810 A1**
(43) Date of publication of application: **01.07.2026**
(21) Application number: 24899160.6
(22) Date of filing: 03.06.2024
(51) Int. Cl.: H01M 50/531, H01M 50/258, H01M 50/242, H01M 50/172

(54) **BATTERY CELL, BATTERY, ELECTRIC DEVICE AND ENERGY STORAGE CABINET**

(30) Priority: 06.12.2023 CN 202311675447
(71) Applicant: Contemporary Amperex Technology Co., Limited, Ningde, Fujian 352100 (CN)
(72) Inventor: XU, Hu, Ningde, Fujian 352100 (CN); JIN, Haizu, Ningde, Fujian 352100 (CN); ZHAO, Fenggang, Ningde, Fujian 352100 (CN); NIU, Shaojun, Ningde, Fujian 352100 (CN); GUO, Jipeng, Ningde, Fujian 352100 (CN)
(74) Representative: Gong, Jinping
(86) International application number: PCT/CN2024/097105
(87) International publication number: WO 2025/118508

(57) **Abstract**

The present disclosure provides a battery cell (20), a battery (100), an electrical apparatus, and an energy storage cabinet, which belongs to the technical field of batteries. The battery cell (20) comprises a shell (21), a first electrode terminal (22), a first current collecting member (23) and a plurality of electrode assemblies (24). The shell (21) has a wall portion (211). The first electrode terminal (22) is mounted on the wall portion (211). The plurality of electrode assemblies (24) are accommodated inside the shell (21), and the plurality of electrode assemblies (24) are stacked along a first direction. The electrode assembly (24) comprises a main body portion (241) and a first tab (242). Along a second direction, the first tab (242) is provided at an end of the main body portion (241), and the first tabs (242) of the plurality of electrode assemblies (24) are located at the same end of the main body portion (241). The second direction intersects with the first direction. The first current collecting member (23) electrically connects the first electrode terminal (22) and each of the first tabs (242). Therefore, there is no need to provide a plurality of first current collecting members (23) inside the shell (21) to connect with the first tabs (242) of the plurality of electrode assemblies (24), and there is no need to increase the thickness or volume of a single electrode assembly (24), which can effectively reduce the manufacturing difficulty of the electrode assembly (24) and reduce the manufacturing difficulty of the large-capacity battery cell (20).

## Description

### CROSS-REFERENCE TO RELATED APPLICATION

The present application claims priority to Chinese Patent Application No. 2023116754474 filed on December 6, 2023 and entitled "BATTERY CELL, BATTERY, ELECTRICAL APPARATUS, AND ENERGY STORAGE CABINET", which is incorporated herein by reference in its entirety.

### TECHNICAL FIELD

The present application relates to the technical field of batteries, and in particular, to a battery cell, a battery, an electrical apparatus, and an energy storage cabinet.

### BACKGROUND

In recent years, new energy vehicles have made a leap forward in development. In the field of electric vehicles, power batteries, as power sources of electric vehicles, play an irreplaceable and important role. With the vigorous promotion of new energy vehicles, the demand for power battery products is also growing. Batteries, as core components of new energy vehicles, have relatively high requirements in terms of use performance. Among them, the battery cell of the battery usually comprises a shell and an electrode assembly accommodated inside the shell. In order to increase the electric capacity of the battery cell, it is usually necessary to increase the volume of the electrode assembly to achieve a large-capacity battery cell. However, the existing large-capacity battery cells are difficult to manufacture, which is not conducive to improving the production efficiency of the battery cells and reducing the manufacturing cost of the battery cells.

### SUMMARY

Embodiments of the present application provide a battery cell, a battery, an electrical apparatus, and an energy storage cabinet, which can effectively improve the manufacturing difficulty of the battery cell.

In a first aspect, an embodiment of the present application provides a battery cell, comprising a shell, a first electrode terminal, a first current collecting member and a plurality of electrode assemblies; the shell has a wall portion; the first electrode terminal is mounted on the wall portion; the plurality of the electrode assemblies are accommodated inside the shell, the plurality of the electrode assemblies are stacked along a first direction, the electrode assembly comprises a main body portion and a first tab, along a second direction, the first tab is provided at an end of the main body portion, the first tabs of the plurality of the electrode assemblies are located at the same end of the main body portion, and the second direction intersects with the first direction; the first current collecting member electrically connects the first electrode terminal and each of the first tabs.

In the above technical solution, a plurality of electrode assemblies stacked along the first direction are provided inside the shell of the battery cell, the first tabs of the plurality of electrode assemblies are all located at the same end of the main body portion in the second direction, and the first tabs of the plurality of electrode assemblies are all electrically connected to the first electrode terminal through the first current collecting member to realize the input or output of electric energy of the battery cell; the plurality of electrode assemblies are stacked inside the shell to increase the number of electrode assemblies accommodated inside the shell of the battery cell, which is conducive to improving the electric capacity of the battery cell. The battery cell adopting such a structure only needs to stack a plurality of electrode assemblies inside the shell and connect the first tabs of the plurality of electrode assemblies through one first current collecting member to realize the input or output of electric energy of the large-capacity battery cell, there is no need to provide a plurality of first current collecting members inside the shell to connect the first tabs of the plurality of electrode assemblies, and there is no need to increase the thickness or volume of a single electrode assembly, thereby effectively reducing the manufacturing difficulty of the electrode assembly, so as to reduce the manufacturing difficulty of the large-capacity battery cell, which is conducive to improving the production efficiency of the battery cell and reducing the manufacturing cost of the battery cell.

In some embodiments, along the second direction, at least part of the first current collecting member is located on a side of the main body portion provided with the first tab, and part of the first tab is located on a side of the first current collecting member away from the main body portion and is connected to the first current collecting member.

In the above technical solution, at least part of the first current collecting member is configured to be located on a side of the main body portion provided with the first tab so as to facilitate the connection between the first current collecting member and the first tab, which is conducive to reducing the assembly difficulty between the first current collecting member and the first tab, wherein part of the first tab is configured to be located on a side of the first current collecting member away from the main body portion in the second direction and this part is connected to the first current collecting member, so that the first tab is of a structure that bypasses the first current collecting member and is connected to a side of the first current collecting member away from the main body portion. On the one hand, it can reduce the difficulty of connecting the first tab to the first current collecting member, and on the other hand, it can reduce the phenomenon that the first current collecting member presses the first tab downward toward the main body portion, so as to reduce the risk of short circuit caused by the first tab being inserted upside down into the main body portion.

In some embodiments, a first clearance area is provided on the first current collecting member, the first clearance area runs through the first current collecting member along the second direction, and the first tab passes through the first clearance area and is connected to a side of the first current collecting member away from the main body portion.

In the above technical solution, by providing the first clearance area on the first current collecting member and making the first clearance area run through opposite sides of the first current collecting member along the second direction, the first tab can be connected to a side of the first current collecting member away from the main body portion after passing through the first clearance area. For the battery cell adopting such a structure, it is convenient to connect the first tab to a side of the first current collecting member away from the main body portion, which can reduce the difficulty of the first tab bypassing the first current collecting member and optimize the length of the first tab bypassing the first current collecting member, thereby alleviating the redundancy of the first tab and reducing the manufacturing cost of the battery cell.

In some embodiments, the first clearance area is a through hole provided on the first current collecting member; or, the first clearance area is a notch provided at the edge of the first current collecting member.

In the above technical solution, the first clearance area can be a through hole provided on the first current collecting member or a notch provided at the edge of the first current collecting member, so that the first tab can be connected to a side of the first current collecting member away from the main body portion after passing through the first clearance area. The structure is simple and easy to manufacture.

In some embodiments, the first current collecting member is provided inside the shell; or, along the second direction, a first pore channel for each of the first tabs to extend out is provided on a side of the shell close to the first tab, each of the first tabs can extend out of the shell through the corresponding first pore channel, the first current collecting member is provided outside the shell, and the first current collecting member is electrically connected to the first tab that extends out.

In the above technical solution, by providing the first current collecting member inside the shell, it helps to reduce the assembly difficulty of electrically connecting the first tab to the first electrode terminal through the first current collecting member, so as to improve the production efficiency of the battery cell. Also, the shell can protect the first current collecting member to a certain degree, so as to reduce the wear or damage of the first current collecting member during use. By providing the first current collecting member outside the shell and providing a first pore channel on the shell for the first tab to pass through, the first tab can be electrically connected to the first electrode terminal through the first current collecting member after passing through the shell. For the battery cell adopting such a structure, it is convenient to inspect the first current collecting member later and to maintain and replace the first current collecting member, which is conducive to reducing the maintenance cost of the battery cell.

In some embodiments, the electrode assembly further comprises a second tab, along the second direction, the second tab is provided at an end of the main body portion, the second tabs of the plurality of the electrode assemblies are located at the same end of the main body portion, and the polarity of the second tab is opposite to that of the first tab; wherein the battery cell further comprises a second electrode terminal and a second current collecting member, the second electrode terminal is mounted on the wall portion, and the second current collecting member electrically connects the second electrode terminal and each of the second tabs.

In the above technical solution, the electrode assembly is also provided with a second tab with polarity opposite to that of the first tab, the second tabs of the plurality of electrode assemblies are all located at the same end of the main body portion in the second direction, and the second tabs of the plurality of electrode assemblies are all electrically connected to the second electrode terminal through the second current collecting member to realize the input or output of electric energy of the battery cell. The battery cell adopting such a structure only needs to stack a plurality of electrode assemblies inside the shell and connect the second tabs of the plurality of electrode assemblies through one second current collecting member to realize the input or output of electric energy of the large-capacity battery cell, and there is no need to provide a plurality of second current collecting members inside the shell to connect with the second tabs of the plurality of electrode assemblies, and there is no need to increase the thickness or volume of a single electrode assembly, thereby effectively reducing the manufacturing difficulty of the electrode assembly, so as to reduce the manufacturing difficulty of the large-capacity battery cell, which is conducive to improving the production efficiency of the battery cell and reducing the manufacturing cost of the battery cell.

In some embodiments, along the second direction, at least part of the second current collecting member is located on a side of the main body portion provided with the second tab, and part of the second tab is located on a side of the second current collecting member away from the main body portion and is connected to the second current collecting member.

In the above technical solution, at least part of the second current collecting member is configured to be located on a side of the main body portion provided with the second tab so as to facilitate the connection between the second current collecting member and the second tab, which is conducive to reducing the assembly difficulty between the second current collecting member and the second tab, wherein part of the second tab is configured to be located on a side of the second current collecting member away from the main body portion in the second direction and this part is connected to the second current collecting member, so that the second tab is of a structure that bypasses the second current collecting member and is connected to a side of the second current collecting member away from the main body portion. On the one hand, it can reduce the difficulty of connecting the second tab to the second current collecting member, and on the other hand, it can reduce the phenomenon that the second current collecting member presses the second tab downward toward the main body portion, so as to reduce the risk of short circuit caused by the second tab being inserted upside down into the main body portion.

In some embodiments, a second clearance area is provided on the second current collecting member, the second clearance area runs through the second current collecting member along the second direction, and the second tab passes through the second clearance area and is connected to a side of the second current collecting member away from the main body portion.

In the above technical solution, by providing the second clearance area on the second current collecting member and making the second clearance area run through opposite sides of the second current collecting member along the second direction, the second tab can be connected to a side of the second current collecting member away from the main body portion after passing through the second clearance area. For the battery cell adopting such a structure, it is convenient to connect the second tab to a side of the second current collecting member away from the main body portion, which can reduce the difficulty of the second tab bypassing the second current collecting member and optimize the length of the second tab bypassing the second current collecting member, thereby alleviating the redundancy of the second tab and reducing the manufacturing cost of the battery cell.

In some embodiments, the second clearance area is a through hole provided on the second current collecting member; or, the second clearance area is a notch provided at the edge of the second current collecting member.

In the above technical solution, the second clearance area can be a through hole provided on the second current collecting member or a notch provided at the edge of the second current collecting member, so that the second tab can be connected to a side of the second current collecting member away from the main body portion after passing through the second clearance area. The structure is simple and easy to manufacture.

In some embodiments, the second current collecting member is provided inside the shell; or, along the second direction, a second pore channel for each of the second tabs to extend out is provided on a side of the shell close to the second tab, each of the second tabs can extend out of the shell through the corresponding second pore channel, the second current collecting member is provided outside the shell, and the second current collecting member is electrically connected to the second tab that extends out.

In the above technical solution, by providing the second current collecting member inside the shell, it helps to reduce the assembly difficulty of electrically connecting the second tab to the second electrode terminal through the second current collecting member, so as to improve the production efficiency of the battery cell. Also, the shell can protect the second current collecting member to a certain degree, so as to reduce the wear or damage of the second current collecting member during use. By providing the second current collecting member outside the shell and providing a second pore channel on the shell for the second tab to pass through, the second tab can be electrically connected to the second electrode terminal through the second current collecting member after passing through the shell. For the battery cell adopting such a structure, it is convenient to inspect the second current collecting member later and to maintain and replace the second current collecting member, which is conducive to reducing the maintenance cost of the battery cell.

In some embodiments, along the second direction, the first tab and the second tab are both provided at the same end of the main body portion, the first tab and the second tab are provided at intervals along a third direction, and the first direction, the second direction and the third direction are not coplanar and every two of them intersect with each other; wherein the first current collecting member comprises a first connecting portion electrically connecting each of the first tabs, the second current collecting member comprises a second connecting portion electrically connecting each of the second tabs, the first connecting portion and the second connecting portion are both located on a side of the main body portion provided with the first tab and the second tab in the second direction, and the first connecting portion and the second connecting portion are provided at intervals along the third direction.

In the above technical solution, by providing both the first tab and the second tab at the same end of the main body portion in the second direction, and providing both the first connecting portion of the first current collecting member and the second connecting portion of the second current collecting member on a side of the main body portion provided with the first tab and the second tab, on the one hand, it facilitates the connection between the first current collecting member and the first tab and the connection between the second current collecting member and the second tab, which is conducive to reducing the assembly difficulty of the first current collecting member and the second current collecting member; on the other hand, it enables the first current collecting member and the second current collecting member to share space in the second direction, which is conducive to saving the space occupied by the first current collecting member and the second current collecting member in the second direction, thereby improving the space utilization of the battery cell and enhancing the energy density of the battery cell.

In some embodiments, the battery cell further comprises a first insulating member; the first insulating member is provided on a side of the first connecting portion and the second connecting portion away from the main body portion along the second direction to insulate and isolate the first connecting portion from the shell and the second connecting portion from the shell.

In the above technical solution, the battery cell is also provided with a first insulating member, and the first insulating member is provided on a side of the first connecting portion and the second connecting portion away from the main body portion, so that the first insulating member is located between the first connecting portion and the second connecting portion and the shell in the second direction. For the battery cell adopting such a structure, it can, on the one hand, realize insulation and isolation between the first connecting portion and the shell and between the second connecting portion and the shell, which helps to reduce the risk of short circuit between the first current collecting member and the second current collecting member and the shell; on the other hand, it can realize that the first connecting portion of the first current collecting member and the second connecting portion of the second current collecting member share one first insulating member, which helps to optimize the assembly process of the battery cell and can reduce the manufacturing cost of the battery cell.

In some embodiments, the battery cell further comprises a second insulating member; the second insulating member is provided between the first connecting portion and the second connecting portion and the main body portion along the second direction to insulate and isolate the first connecting portion from the main body portion and the second connecting portion from the main body portion.

In the above technical solution, the battery cell is also provided with a second insulating member, and the second insulating member is provided on a side of the first connecting portion and the second connecting portion facing the main body portion, so that the second insulating member is located between the first connecting portion and the second connecting portion and the main body portion in the second direction. For the battery cell adopting such a structure, it can, on the one hand, realize insulation and isolation between the first connecting portion and the main body portion and between the second connecting portion and the main body portion, which helps to reduce the risk of short circuit between the first current collecting member and the second current collecting member and the main body portion; on the other hand, it can realize that the first connecting portion of the first current collecting member and the second connecting portion of the second current collecting member share one second insulating member, which helps to optimize the assembly process of the battery cell and can reduce the manufacturing cost of the battery cell.

In some embodiments, along the second direction, the wall portion is located on a side of the plurality of electrode assemblies, the first tab and the second tab are both provided at an end of the main body portion facing the wall portion, and the first current collecting member and the second current collecting member are both provided on a side of the main body portion facing the wall portion.

In the above technical solution, the wall portion is located on a side of the plurality of electrode assemblies provided with the first tab and the second tab in the second direction, and both the first current collecting member and the second current collecting member are provided on a side of the main body portion facing the wall portion. On one hand, it is convenient for the first current collecting member to connect the first tab and the first electrode terminal provided on the wall portion, and for the second current collecting member to connect the second tab and the second electrode terminal provided on the wall portion, which is conducive to reducing the assembly difficulty of the battery cell. On the other hand, the first current collecting member and the second current collecting member can be entirely provided on a side of the main body portion facing the wall portion, which is conducive to saving the space occupied by the first current collecting member and the second current collecting member, thereby enhancing the energy density of the battery cell.

In some embodiments, along the second direction, a first protrusion is provided on a side of the first current collecting member facing the wall portion, and the first protrusion is connected to the first electrode terminal; and/or, along the second direction, a second protrusion is provided on a side of the second current collecting member facing the wall portion, and the second protrusion is connected to the second electrode terminal.

In the above technical solution, a first protrusion is provided on a side of the first current collecting member facing the wall portion in the second direction, and the first protrusion is connected to the first electrode terminal to realize the electrical connection between the first current collecting member and the first electrode terminal. The first current collecting member adopting such a structure can reduce the assembly difficulty between the first current collecting member and the first electrode terminal, and the connection reliability between the first current collecting member and the first electrode terminal can be improved through the structure where the first protrusion is connected to the first electrode terminal. Similarly, a second protrusion is provided on a side of the second current collecting member facing the wall portion in the second direction, and the second protrusion is connected to the second electrode terminal to realize the electrical connection between the second current collecting member and the second electrode terminal. The second current collecting member adopting such a structure can reduce the assembly difficulty between the second current collecting member and the second electrode terminal, and the connection reliability between the second current collecting member and the second electrode terminal can be improved through the structure where the second protrusion is connected to the second electrode terminal.

In some embodiments, along the first direction, the wall portion is located on at least one side of the plurality of electrode assemblies; wherein the first current collecting member further comprises a third connecting portion connected to the first connecting portion, the third connecting portion is located on a side of the plurality of electrode assemblies facing the wall portion in the first direction, and the third connecting portion is connected to the first electrode terminal; the second current collecting member further comprises a fourth connecting portion connected to the second connecting portion, the fourth connecting portion is located on a side of the plurality of electrode assemblies facing the wall portion in the first direction, and the fourth connecting portion is connected to the second electrode terminal.

In the above technical solution, the wall portion of the shell is located on at least one side of the plurality of electrode assemblies in the first direction, so that the wall portion is provided in the same direction as the plurality of electrode assemblies, and the first current collecting member has a third connecting portion located on a side of the plurality of electrode assemblies facing the wall portion in the first direction, the third connecting portion and the first connecting portion are connected to each other. The third connecting portion is connected to the first electrode terminal provided on the wall portion, and the first connecting portion is connected to the first tab of the plurality of electrode assemblies, so that the first tab is electrically connected to the first electrode terminal through the first current collecting member. For the battery cell adopting such a structure, on the one hand, it can separate the region of the shell provided with the first electrode terminal from the region of the main body portion provided with the first tab, so that the region of the shell toward which a side of the main body portion provided with the first tab faces is not provided with the first electrode terminal, thereby facilitating stacking a plurality of battery cells along the second direction. On the other hand, the region where the first current collecting member is connected to the first electrode terminal and the region where the first current collecting member is connected to the first tab can be separated from each other, which is conducive to reducing the difficulty in assembling the first current collecting member with the first electrode terminal and the first tab, and can reduce the interference between the first electrode terminal and the first tab. Especially when the first electrode terminal and the first tab are both welded to the first current collecting member, the mutual influence between the weld pool of the first electrode terminal and the first current collecting member and the weld pool of the first tab and the first current collecting member can be effectively reduced, which is conducive to improving the assembly quality and stability of the first electrode terminal and the first tab connected to the first current collecting member. Similarly, the second current collecting member has a fourth connecting portion located on a side of the plurality of electrode assemblies facing the wall portion in the first direction. The fourth connecting portion is connected to the second electrode terminal provided on the wall portion, and the second connecting portion is connected to the second tabs of the plurality of electrode assemblies, so that the second tab is electrically connected to the second electrode terminal through the second current collecting member. For the battery cell adopting such a structure, on the one hand, it can separate the region of the shell where the second electrode terminal is provided from the region of the main body portion provided with the second tab, so that the region of the shell toward which a side of the main body portion provided with the second tab faces is not provided with the second electrode terminal, thereby facilitating stacking a plurality of battery cells along the second direction. On the other hand, the region where the second current collecting member is connected to the second electrode terminal and the region where the second current collecting member is connected to the second tab can be separated from each other, which is conducive to reducing the difficulty in assembling the second current collecting member with the second electrode terminal and the second tab, and can reduce the interference between the second electrode terminal and the second tab. Especially when the second electrode terminal and the second tab are both welded to the second current collecting member, the mutual influence between the weld pool of the second electrode terminal and the second current collecting member and the weld pool of the second tab and the second current collecting member can be effectively reduced, which is conducive to improving the assembly quality and stability of the second electrode terminal and the second tab connected to the second current collecting member.

In some embodiments, along the first direction, a first protrusion is provided on a side of the third connecting portion facing the wall portion, and the first protrusion is connected to the first electrode terminal; and/or, along the first direction, a second protrusion is provided on a side of the fourth connecting portion facing the wall portion, and the second protrusion is connected to the second electrode terminal.

In the above technical solution, a first protrusion is provided on a side of the third connecting portion of the first current collecting member facing the wall portion in the first direction, and the first protrusion is connected to the first electrode terminal to realize the electrical connection between the first current collecting member and the first electrode terminal. The first current collecting member adopting such a structure can reduce the assembly difficulty between the third connecting portion of the first current collecting member and the first electrode terminal, and the connection reliability between the third connecting portion of the first current collecting member and the first electrode terminal can be improved through the structure where the first protrusion is connected to the first electrode terminal. Similarly, a second protrusion is provided on a side of the fourth connecting portion of the second current collecting member facing the wall portion in the first direction, and the second protrusion is connected to the second electrode terminal to realize the electrical connection between the second current collecting member and the second electrode terminal. The second current collecting member adopting such a structure can reduce the assembly difficulty between the fourth connecting portion of the second current collecting member and the second electrode terminal, and the connection reliability between the fourth connecting portion of the second current collecting member and the second electrode terminal can be improved through the structure where the second protrusion is connected to the second electrode terminal.

In some embodiments, along the first direction, the first electrode terminal and the second electrode terminal are both provided on the same side of the plurality of electrode assemblies, and the third connecting portion and the fourth connecting portion are both located on a side of the plurality of electrode assemblies facing the first electrode terminal and the second electrode terminal.

In the above technical solution, by providing the first electrode terminal and the second electrode terminal on the same side of the plurality of electrode assemblies in the first direction, the first electrode terminal and the second electrode terminal are both mounted on the same wall portion, and the third connecting portion of the first current collecting member and the fourth connecting portion of the second current collecting member are both located on a side of the plurality of electrode assemblies facing the first electrode terminal and the second electrode terminal. On the one hand, it is convenient to connect the third connecting portion of the first current collecting member to the first electrode terminal, and to connect the fourth connecting portion of the second current collecting member to the second electrode terminal. On the other hand, the battery cell is of a structure where the first electrode terminal and the second electrode terminal are provided at the same end in the first direction, and the third connecting portion and the fourth connecting portion can share space in the first direction, thereby improving the space utilization of the battery cell and enhancing the energy density of the battery cell.

In some embodiments, the battery cell further comprises a third insulating member; the third insulating member is provided between the third connecting portion and the fourth connecting portion and the plurality of electrode assemblies along the first direction to insulate and isolate the third connecting portion from the electrode assembly and the fourth connecting portion from the electrode assembly.

In the above technical solution, the battery cell is also provided with a third insulating member, and the third insulating member is provided on a side of the third connecting portion and the fourth connecting portion facing the plurality of electrode assemblies, so that the third insulating member is located between the third connecting portion and the fourth connecting portion and the plurality of electrode assemblies. For the battery cell adopting such a structure, it can, on the one hand, realize the insulation and isolation between the third connecting portion and the electrode assembly and between the fourth connecting portion and the electrode assembly, which helps to reduce the risk of short circuit; on the other hand, it can realize that the third connecting portion of the first current collecting member and the fourth connecting portion of the second current collecting member share one third insulating member, which helps to optimize the assembly process of the battery cell and can reduce the manufacturing cost of the battery cell.

In some embodiments, along the first direction, a first clamping groove is provided on a side of the third insulating member away from the electrode assembly, and the third connecting portion is accommodated in the first clamping groove; and/or, along the first direction, a second clamping groove is provided on a side of the third insulating member away from the electrode assembly, and the fourth connecting portion is accommodated in the second clamping groove.

In the above technical solution, by providing a first clamping groove on a side of the third insulating member away from the electrode assembly along the first direction, the third connecting portion of the first current collecting member can be accommodated in the first clamping groove, thereby improving the structural stability of the third insulating assembly between the third connecting portion and the plurality of electrode assemblies, and the third insulating member and the third connecting portion can share space in the first direction, which is conducive to improving the internal space utilization of the battery cell. Similarly, by providing a second clamping groove on a side of the third insulating member away from the electrode assembly along the first direction, the fourth connecting portion of the second current collecting member can be accommodated in the second clamping groove, thereby improving the structural stability of the third insulating assembly between the fourth connecting portion and the plurality of electrode assemblies, and the third insulating member and the fourth connecting portion can share space in the first direction, which is conducive to improving the internal space utilization of the battery cell.

In some embodiments, along the first direction, the shell has two wall portions provided oppositely, the two wall portions are respectively located on opposite sides of the plurality of electrode assemblies, and the first electrode terminal and the second electrode terminal are respectively provided on the two wall portions; wherein the third connecting portion is located on a side of the plurality of electrode assemblies facing the first electrode terminal, and the fourth connecting portion is located on a side of the plurality of electrode assemblies facing the second electrode terminal.

In the above technical solution, the first electrode terminal and the second electrode terminal are respectively provided on two wall portions located on opposite sides of the plurality of electrode assemblies in the first direction, and the third connecting portion of the first current collecting member and the fourth connecting portion of the second current collecting member are respectively located on opposite sides of the plurality of electrode assemblies. On the one hand, it is convenient to connect the third connecting portion of the first current collecting member to the first electrode terminal, and to connect the fourth connecting portion of the second current collecting member to the second electrode terminal. On the other hand, it is possible to realize that the third connecting portion of the first current collecting member and the fourth connecting portion of the second current collecting member are away from each other, which is conducive to alleviating the interference between the third connecting portion and the fourth connecting portion, and can reduce the risk of short circuit between the third connecting portion and the fourth connecting portion, so as to improve the reliability of the battery cell.

In some embodiments, the battery cell also comprises a third insulating member and a fourth insulating member; the third insulating member and the fourth insulating member are respectively provided on opposite sides of the plurality of electrode assemblies along the first direction, the third insulating member is located between the third connecting portion and the plurality of electrode assemblies to insulate and isolate the third connecting portion from the electrode assembly, and the fourth insulating member is located between the fourth connecting portion and the plurality of electrode assemblies to insulate and isolate the fourth connecting portion from the electrode assembly.

In the above technical solution, the battery cell is also provided with a third insulating member and a fourth insulating member, and the third insulating member and the fourth insulating member are respectively provided on opposite sides of the plurality of electrode assemblies in the first direction, so that the third insulating member is located between the third connecting portion and the plurality of electrode assemblies, and the fourth insulating member is located between the fourth connecting portion and the plurality of electrode assemblies, thereby achieving insulation and isolation between the third connecting portion and the electrode assembly and between the fourth connecting portion and the electrode assembly, which helps to reduce the risk of short circuit of the battery cell and improve the reliability of the battery cell.

In some embodiments, along the first direction, a first clamping groove is provided on a side of the third insulating member away from the electrode assembly, and the third connecting portion is accommodated in the first clamping groove; and/or, along the first direction, a second clamping groove is provided on a side of the fourth insulating member away from the electrode assembly, and the fourth connecting portion is accommodated in the second clamping groove.

In the above technical solution, by providing a first clamping groove on a side of the third insulating member away from the electrode assembly along the first direction, the third connecting portion of the first current collecting member can be accommodated in the first clamping groove, thereby improving the structural stability of the third insulating assembly between the third connecting portion and the plurality of electrode assemblies, and the third insulating member and the third connecting portion can share space in the first direction, which is conducive to improving the internal space utilization of the battery cell. Similarly, by providing a second clamping groove on a side of the fourth insulating member away from the electrode assembly along the first direction, the fourth connecting portion of the second current collecting member can be accommodated in the second clamping groove, thereby improving the structural stability of the fourth insulating assembly between the fourth connecting portion and the plurality of electrode assemblies, and the fourth insulating member and the fourth connecting portion can share space in the first direction, which is conducive to improving the internal space utilization of the battery cell.

In some embodiments, along the second direction, the first tab and the second tab are respectively provided at opposite ends of the main body portion; wherein the first current collecting member comprises a first connecting portion electrically connecting each of the first tabs, the first connecting portion is located on a side of the main body portion provided with the first tab in the second direction, the second current collecting member comprises a second connecting portion electrically connecting each of the second tabs, and the second connecting portion is located on a side of the main body portion provided with the second tab in the second direction.

In the above technical solution, by respectively providing the first tab and the second tab at opposite ends of the main body portion in the second direction, and respectively providing the first connecting portion of the first current collecting member and the second connecting portion of the second current collecting member on opposite sides of the plurality of electrode assemblies in the second direction, on the one hand, it is convenient for the first current collecting member and the second current collecting member to be connected to the first tab and the second tab respectively, which is conducive to alleviating the mutual interference between the first current collecting member and the second current collecting member; on the other hand, the first tab and the second tab with opposite polarities can be kept away from each other, and the first connecting portion of the first current collecting member and the second connecting portion of the second current collecting member can be kept away from each other, which is conducive to reducing the risk of short circuit between the first tab and the second tab and between the first current collecting member and the second current collecting member, so as to improve the reliability of the battery cell.

In some embodiments, the battery cell also comprises two first insulating members; the two first insulating members are respectively provided on opposite sides of the plurality of electrode assemblies along the second direction, one of the first insulating members is located on a side of the first connecting portion away from the main body portion to insulate and isolate the first connecting portion from the shell, and the other first insulating member is located on a side of the second connecting portion away from the main body portion to insulate and isolate the second connecting portion from the shell.

In the above technical solution, the battery cell is also provided with two first insulating members, and the two first insulating members are respectively provided on a side of the first connecting portion of the first current collecting member away from the electrode assembly and a side of the second connecting portion of the second current collecting member away from the electrode assembly, so that the first insulating member is provided both between the first connecting portion and the shell and between the second connecting portion and the shell, and as a result, the two first insulating members can achieve insulation and isolation between the first connecting portion and the shell and between the second connecting portion and the shell, respectively, which helps to reduce the risk of short circuit between the first current collecting member and the second current collecting member and the shell, so as to improve the reliability of the battery cell.

In some embodiments, the battery cell also comprises two second insulating members; the two second insulating members are respectively provided on opposite sides of the plurality of electrode assemblies along the second direction, one of the second insulating members is located between the first connecting portion and the main body portion to insulate and isolate the first connecting portion from the main body portion, and the other second insulating member is located between the second connecting portion and the main body portion to insulate and isolate the second connecting portion from the main body portion.

In the above technical solution, the battery cell is also provided with two second insulating members, and the two second insulating members are respectively provided on a side of the first connecting portion facing the main body portion and a side of the second connecting portion facing the main body portion, so that the second insulating members are provided both between the first connecting portion and the main body portion and between the second connecting portion and the main body portion, and as a result, the insulation and isolation between the first connecting portion and the main body portion and between the second connecting portion and the main body portion can be achieved respectively through the two first insulating members, which helps to reduce the risk of short circuit between the first current collecting member and the second current collecting member and the main body portion, so as to improve the reliability of the battery cell.

In some embodiments, along the first direction, the wall portion is located on at least one side of the plurality of electrode assemblies; wherein the first current collecting member further comprises a third connecting portion connected to the first connecting portion, the third connecting portion is located on a side of the plurality of electrode assemblies facing the wall portion in the first direction, and the third connecting portion is connected to the first electrode terminal; the second current collecting member further comprises a fourth connecting portion connected to the second connecting portion, the fourth connecting portion is located on a side of the plurality of electrode assemblies facing the wall portion in the first direction, and the fourth connecting portion is connected to the second electrode terminal.

In the above technical solution, the wall portion of the shell is located on at least one side of the plurality of electrode assemblies in the first direction, so that the wall portion is provided in the same direction as the plurality of electrode assemblies, and the first current collecting member has a third connecting portion located on a side of the plurality of electrode assemblies facing the wall portion in the first direction, the third connecting portion and the first connecting portion are connected to each other. The third connecting portion is connected to the first electrode terminal provided on the wall portion, and the first connecting portion is connected to the first tab of the plurality of electrode assemblies, so that the first tab is electrically connected to the first electrode terminal through the first current collecting member. For the battery cell adopting such a structure, on the one hand, it can separate the region of the shell provided with the first electrode terminal from the region of the main body portion provided with the first tab, so that the region of the shell toward which a side of the main body portion provided with the first tab faces is not provided with the first electrode terminal, thereby facilitating stacking a plurality of battery cells along the second direction. On the other hand, the region where the first current collecting member is connected to the first electrode terminal and the region where the first current collecting member is connected to the first tab can be separated from each other, which is conducive to reducing the difficulty in assembling the first current collecting member with the first electrode terminal and the first tab, and can reduce the interference between the first electrode terminal and the first tab. Especially when the first electrode terminal and the first tab are both welded to the first current collecting member, the mutual influence between the weld pool of the first electrode terminal and the first current collecting member and the weld pool of the first tab and the first current collecting member can be effectively reduced, which is conducive to improving the assembly quality and stability of the first electrode terminal and the first tab connected to the first current collecting member. Similarly, the second current collecting member has a fourth connecting portion located on a side of the plurality of electrode assemblies facing the wall portion in the first direction. The fourth connecting portion is connected to the second electrode terminal provided on the wall portion, and the second connecting portion is connected to the second tabs of the plurality of electrode assemblies, so that the second tab is electrically connected to the second electrode terminal through the second current collecting member. For the battery cell adopting such a structure, on the one hand, it can separate the region of the shell where the second electrode terminal is provided from the region of the main body portion provided with the second tab, so that the region of the shell toward which a side of the main body portion provided with the second tab faces is not provided with the second electrode terminal, thereby facilitating stacking a plurality of battery cells along the second direction. On the other hand, the region where the second current collecting member is connected to the second electrode terminal and the region where the second current collecting member is connected to the second tab can be separated from each other, which is conducive to reducing the difficulty in assembling the second current collecting member with the second electrode terminal and the second tab, and can reduce the interference between the second electrode terminal and the second tab. Especially when the second electrode terminal and the second tab are both welded to the second current collecting member, the mutual influence between the weld pool of the second electrode terminal and the second current collecting member and the weld pool of the second tab and the second current collecting member can be effectively reduced, which is conducive to improving the assembly quality and stability of the second electrode terminal and the second tab connected to the second current collecting member.

In some embodiments, along the first direction, a first protrusion is provided on a side of the third connecting portion facing the wall portion, and the first protrusion is connected to the first electrode terminal; and/or, along the first direction, a second protrusion is provided on a side of the fourth connecting portion facing the wall portion, and the second protrusion is connected to the second electrode terminal.

In the above technical solution, a first protrusion is provided on a side of the third connecting portion of the first current collecting member facing the wall portion in the first direction, and the first protrusion is connected to the first electrode terminal to realize the electrical connection between the first current collecting member and the first electrode terminal. The first current collecting member adopting such a structure can reduce the assembly difficulty between the third connecting portion of the first current collecting member and the first electrode terminal, and the connection reliability between the third connecting portion of the first current collecting member and the first electrode terminal can be improved through the structure where the first protrusion is connected to the first electrode terminal. Similarly, a second protrusion is provided on a side of the fourth connecting portion of the second current collecting member facing the wall portion in the first direction, and the second protrusion is connected to the second electrode terminal to realize the electrical connection between the second current collecting member and the second electrode terminal. The second current collecting member adopting such a structure can reduce the assembly difficulty between the fourth connecting portion of the second current collecting member and the second electrode terminal, and the connection reliability between the fourth connecting portion of the second current collecting member and the second electrode terminal can be improved through the structure where the second protrusion is connected to the second electrode terminal.

In some embodiments, along the first direction, the first electrode terminal and the second electrode terminal are both provided on the same side of the plurality of electrode assemblies, and the third connecting portion and the fourth connecting portion are both located on a side of the plurality of electrode assemblies facing the first electrode terminal and the second electrode terminal.

In the above technical solution, by providing the first electrode terminal and the second electrode terminal on the same side of the plurality of electrode assemblies in the first direction, the first electrode terminal and the second electrode terminal are both mounted on the same wall portion, and the third connecting portion of the first current collecting member and the fourth connecting portion of the second current collecting member are both provided on a side of the plurality of electrode assemblies facing the first electrode terminal and the second electrode terminal. On the one hand, it is convenient to connect the third connecting portion of the first current collecting member to the first electrode terminal, and to connect the fourth connecting portion of the second current collecting member to the second electrode terminal. On the other hand, the battery cell is of a structure where the first electrode terminal and the second electrode terminal are provided at the same end in the first direction, and the third connecting portion and the fourth connecting portion can share space in the first direction, thereby improving the space utilization of the battery cell and enhancing the energy density of the battery cell.

In some embodiments, the battery cell further comprises a third insulating member; the third insulating member is provided between the third connecting portion and the fourth connecting portion and the plurality of electrode assemblies along the first direction to insulate and isolate the third connecting portion from the electrode assembly and the fourth connecting portion from the electrode assembly.

In the above technical solution, the battery cell is also provided with a third insulating member, and the third insulating member is provided on a side of the third connecting portion and the fourth connecting portion facing the plurality of electrode assemblies, so that the third insulating member is located between the third connecting portion and the fourth connecting portion and the plurality of electrode assemblies. For the battery cell adopting such a structure, it can, on the one hand, realize the insulation and isolation between the third connecting portion and the electrode assembly and between the fourth connecting portion and the electrode assembly, which helps to reduce the risk of short circuit; on the other hand, it can realize that the third connecting portion of the first current collecting member and the fourth connecting portion of the second current collecting member share one third insulating member, which helps to optimize the assembly process of the battery cell and can reduce the manufacturing cost of the battery cell.

In some embodiments, along the first direction, a first clamping groove is provided on a side of the third insulating member away from the electrode assembly, and the third connecting portion is accommodated in the first clamping groove; and/or, along the first direction, a second clamping groove is provided on a side of the third insulating member away from the electrode assembly, and the fourth connecting portion is accommodated in the second clamping groove.

In the above technical solution, by providing a first clamping groove on a side of the third insulating member away from the electrode assembly along the first direction, the third connecting portion of the first current collecting member can be accommodated in the first clamping groove, thereby improving the structural stability of the third insulating assembly between the third connecting portion and the plurality of electrode assemblies, and the third insulating member and the third connecting portion can share space in the first direction, which is conducive to improving the internal space utilization of the battery cell. Similarly, by providing a second clamping groove on a side of the third insulating member away from the electrode assembly along the first direction, the fourth connecting portion of the second current collecting member can be accommodated in the second clamping groove, thereby improving the structural stability of the third insulating assembly between the fourth connecting portion and the plurality of electrode assemblies, and the third insulating member and the fourth connecting portion can share space in the first direction, which is conducive to improving the internal space utilization of the battery cell.

In some embodiments, along the first direction, the shell has two wall portions provided oppositely, the two wall portions are respectively located on opposite sides of the plurality of electrode assemblies, and the first electrode terminal and the second electrode terminal are respectively provided on the two wall portions; wherein the third connecting portion is located on a side of the plurality of electrode assemblies facing the first electrode terminal, and the fourth connecting portion is located on a side of the plurality of electrode assemblies facing the second electrode terminal.

In the above technical solution, the first electrode terminal and the second electrode terminal are respectively provided on two wall portions located on opposite sides of the plurality of electrode assemblies in the first direction, and the third connecting portion of the first current collecting member and the fourth connecting portion of the second current collecting member are respectively located on opposite sides of the plurality of electrode assemblies. On the one hand, it is convenient to connect the third connecting portion of the first current collecting member to the first electrode terminal, and to connect the fourth connecting portion of the second current collecting member to the second electrode terminal. On the other hand, it is possible to realize that the third connecting portion of the first current collecting member and the fourth connecting portion of the second current collecting member are away from each other, which is conducive to reducing the risk of short circuit between the third connecting portion and the fourth connecting portion, so as to improve the reliability of the battery cell.

In some embodiments, the battery cell also comprises a third insulating member and a fourth insulating member; the third insulating member and the fourth insulating member are respectively provided on opposite sides of the plurality of electrode assemblies along the first direction, the third insulating member is located between the third connecting portion and the plurality of electrode assemblies to insulate and isolate the third connecting portion from the electrode assembly, and the fourth insulating member is located between the fourth connecting portion and the plurality of electrode assemblies to insulate and isolate the fourth connecting portion from the electrode assembly.

In the above technical solution, the battery cell is also provided with a third insulating member and a fourth insulating member, and the third insulating member and the fourth insulating member are respectively provided on opposite sides of the plurality of electrode assemblies in the first direction, so that the third insulating member is located between the third connecting portion and the plurality of electrode assemblies, and the fourth insulating member is located between the fourth connecting portion and the plurality of electrode assemblies, thereby achieving insulation and isolation between the third connecting portion and the electrode assembly and between the fourth connecting portion and the electrode assembly, which helps to reduce the risk of short circuit of the battery cell and improve the reliability of the battery cell.

In some embodiments, along the first direction, a first clamping groove is provided on a side of the third insulating member away from the electrode assembly, and the third connecting portion is accommodated in the first clamping groove; and/or, along the first direction, a second clamping groove is provided on a side of the fourth insulating member away from the electrode assembly, and the fourth connecting portion is accommodated in the second clamping groove.

In the above technical solution, by providing a first clamping groove on a side of the third insulating member away from the electrode assembly along the first direction, the third connecting portion of the first current collecting member can be accommodated in the first clamping groove, thereby improving the structural stability of the third insulating assembly between the third connecting portion and the plurality of electrode assemblies, and the third insulating member and the third connecting portion can share space in the first direction, which is conducive to improving the internal space utilization of the battery cell. Similarly, by providing a second clamping groove on a side of the fourth insulating member away from the electrode assembly along the first direction, the fourth connecting portion of the second current collecting member can be accommodated in the second clamping groove, thereby improving the structural stability of the fourth insulating assembly between the fourth connecting portion and the plurality of electrode assemblies, and the fourth insulating member and the fourth connecting portion can share space in the first direction, which is conducive to improving the internal space utilization of the battery cell.

In some embodiments, a buffer member is provided between two adjacent electrode assemblies along the first direction.

In the above technical solution, a buffer member is provided between two adjacent electrode assemblies in the first direction, so that the buffer member can play a buffering role between the two adjacent electrode assemblies to allow the buffer member to absorb the expansion force and collision force between the plurality of electrode assemblies, thereby effectively alleviating collision between the two adjacent electrode assemblies, and effectively alleviating mutual extrusion due to expansion of the two adjacent electrode assemblies, which can effectively improve the reliability and service life of the battery cell.

In some embodiments, the battery cell comprises N electrode assemblies stacked along the first direction, with N≥5.

In the above technical solution, by setting the number of electrode assemblies stacked along the first direction of the battery cell to be greater than or equal to 5, a large-capacity battery cell can be achieved. The large-capacity battery cell can be achieved without increasing the winding size or stacking size of a single electrode assembly, which is conducive to reducing the manufacturing difficulty and manufacturing cost of a single electrode assembly.

In some embodiments, the shell comprises a shell body and an end cover; an accommodating cavity having an opening is formed inside the shell body, and the accommodating cavity is configured to accommodate the electrode assembly; and the end cover closes the opening; wherein the end cover is the wall portion; or the shell body comprises the wall portion.

In the above technical solution, by providing the wall portion of the shell as the end cover of the shell for closing the opening, for the battery cell adopting such a structure, it is convenient to assemble components such as the first electrode terminal on the end cover, and to connect the first current collecting member and the first electrode terminal, which is conducive to reducing the assembly difficulty of the battery cell, so as to improve the production efficiency of the battery cell. Similarly, by providing the wall portion of the shell as a wall of the shell body, the battery cell adopting such a structure can make the region of the shell mounted with the first electrode terminal and other components away from the end cover, thereby alleviating the phenomenon that the force generated by the first electrode terminal and other components pulling or twisting the wall portion directly acts on the end cover, which is conducive to reducing the risk of connection failure between the end cover and the shell body, and further effectively reducing the risk of liquid leakage of the battery cell during use.

In a second aspect, an embodiment of the present application further provides a battery, comprising the above-mentioned battery cell.

In a third aspect, an embodiment of the present application further provides an electrical apparatus, comprising the above-mentioned battery cell, the battery cell being configured to provide electric energy.

In a fourth aspect, an embodiment of the present application further provides an energy storage cabinet, which comprises a plurality of the battery cells described above.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle according to some embodiments of the present application;
FIG. 2 is an exploded structural view of a battery according to some embodiments of the present application;
FIG. 3 is a schematic structural view of a battery cell according to some embodiments of the present application;
FIG. 4 is an exploded structural view of a battery cell according to some embodiments of the present application;
FIG. 5 is a schematic structural view of an electrode assembly provided by some embodiments of the present application;
FIG. 6 is a schematic view showing assembling of a first current collecting member and an electrode assembly in a battery cell according to some embodiments of the present application;
FIG. 7 is a schematic structural view of a first current collecting member in a battery cell according to some embodiments of the present application;
FIG. 8 is a schematic structural view of a first current collecting member in a battery cell in other embodiments according to some embodiments of the present application;
FIG. 9 is a schematic structural view of a second current collecting member in a battery cell according to some embodiments of the present application;
FIG. 10 is a schematic structural view of a battery cell provided in some other embodiments of the present application;
FIG. 11 is an exploded structural view of a battery cell according to some other embodiments of the present application;
FIG. 12 is a schematic view showing assembling of a first current collecting member and an electrode assembly in a battery cell according to some other embodiments of the present application;
FIG. 13 is a schematic structural view of a first current collecting member in a battery cell according to some other embodiments of the present application;
FIG. 14 is a schematic structural view of a second current collecting member in a battery cell according to some other embodiments of the present application;
FIG. 15 is a schematic structural view of a battery cell in other embodiments according to some other embodiments of the present application;
FIG. 16 is an exploded structural view of a battery cell in other embodiments according to some other embodiments of the present application;
FIG. 17 is a schematic structural view of a battery cell according to some further embodiments of the present application;
FIG. 18 is an exploded structural view of a battery cell according to some further embodiments of the present application;
FIG. 19 is a schematic view showing assembling of a first current collecting member and an electrode assembly in a battery cell according to some further embodiments of the present application;
FIG. 20 is a schematic structural view of a first current collecting member in a battery cell according to some further embodiments of the present application;
FIG. 21 is a schematic structural view of a second current collecting member in a battery cell according to some further embodiments of the present application;
FIG. 22 is an exploded structural view of a battery cell in other embodiments according to some further embodiments of the present application;
FIG. 23 is a schematic view showing assembling of a first current collecting member and an electrode assembly in a battery cell according to still other embodiments of the present application;
FIG. 24 is a schematic view showing assembling of a first current collecting member and an electrode assembly in a battery cell according to still some further embodiments of the present application.

Reference numerals: 1000 - Vehicle; 100 - Battery; 10 - Box; 11 - First box body; 12 - Second box body; 20 - Battery cell; 21 - Shell; 211 - Wall portion; 212 - Shell body; 2121 - Opening; 213 - End cover; 22 - First electrode terminal; 23 - First current collecting member; 231 - First clearance area; 232 - First connecting portion; 233 - Third connecting portion; 234 - First protrusion; 24 - Electrode assembly; 241 - Main body portion; 242 - First tab; 243 - Second tab; 25 - Second electrode terminal; 26 - Second current collecting member; 261 - Second clearance area; 262 - Second connecting portion; 263 - Fourth connecting portion; 264 - Second protrusion; 27 - First insulating member; 28 - Second insulating member; 29 - Third insulating member; 30 - Fourth insulating member; 31 - First clamping groove; 32 - Second clamping groove; 200 - Controller; 300 - Motor; X - First direction; Y - Second direction; Z - Third direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, or the like, which is not limited in the embodiments of the present application.

The battery cell generally comprises an electrode assembly. The electrode assembly comprises a positive electrode, a negative electrode, and a separator. During charging and discharging of the battery cell, active ions (such as lithium ions) are intercalated and deintercalated back and forth between the positive electrode and the negative electrode. The spacer is provided between the positive electrode and the negative electrode, and can function to prevent short circuit between the positive electrode and the negative electrode and allow the active ions to pass through.

In some embodiments, the positive electrode may be a positive electrode plate, and the positive electrode plate may comprise a positive electrode current collector and a positive electrode active material provided on at least one surface of the positive electrode current collector.

As an example, the positive electrode current collector has two surfaces opposite in its own thickness direction, and the positive electrode active material is provided on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, carbon electrode, carbon, nickel or titanium and the like can be adopted. The composite current collector may comprise a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.3}Co_{0.2}Mn_{0.3}O₂ (also abbreviated as NCM₅₂₃), LiNi_{0.3}Co_{0.23}Mn_{0.23}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium-nickel-cobalt-aluminum oxide (such as LiNi_{0.83}Co_{0.13}Al_{0.03}O₂) and their respective modified compounds.

In some embodiments, the positive electrode may adopt a foam metal. The foam metal may be foam nickel, foam copper, foam aluminum, a foam alloy, etc. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may comprise a negative electrode current collector.

As an example, the negative electrode current collector may be a metal foil, a foam metal, or a composite current collector. For example, as the metal foil, silver surface-treated aluminum or stainless steel, stainless steel, copper, aluminum, nickel, carbon electrode, nickel, titanium, or the like can be used. The foam metal may be foam nickel, foam copper, foam aluminum, a foam alloy, etc. The composite current collector may comprise a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may comprise a negative electrode current collector and a negative electrode active material provided on at least one surface of the negative electrode current collector.

For example, the negative electrode current collector has two surfaces opposite to each other in its own thickness direction, and the negative electrode active material is provided on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some implementations, the electrode assembly further comprises a spacer, and the spacer is provided between the positive electrode and the negative electrode.

In some implementations, the spacer is a separator. There may be various types of separators, and any well-known separator with a porous structure having good chemical stability and mechanical stability may be selected.

For example, the material of the separator may include at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some implementations, the spacer is a solid electrolyte. The solid electrolyte is provided between the positive electrode and the negative electrode, and plays roles in transmitting ions and isolating the positive electrode from the negative electrode.

In some implementations, the battery cell further comprises an electrolyte, and the electrolyte plays a role in conducting ions between the positive electrode and the negative electrode. The electrolyte may be liquid, gel or solid. The liquid electrolyte comprises electrolyte salt and a solvent.

In some implementations, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate and lithium tetrafluoro(oxalato)phosphate.

In some implementations, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfone, ethyl methyl sulfone and diethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte comprises a skeleton network with a polymer as the electrolyte, paired with an ionic liquid-lithium salt.

The solid electrolyte comprises a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some implementations, the electrode assembly is of a wound structure. The positive electrode plate and the negative electrode plate are wound into the wound structure.

In some implementations, the electrode assembly is of a laminated structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously provided between any adjacent positive electrode plates or negative electrode plates by folding or winding.

In some implementations, the shape of the electrode assembly can be flat, polygonal prism, etc.

In some implementations, the electrode assembly is provided with tabs that can conduct current out from the electrode assembly. The tabs include a positive tab and a negative tab.

In some implementations, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a prismatic battery cell, a pouch battery cell, or a battery cell in another shape. The prismatic battery cell includes, but is not limited to, a square-shell battery cell, a blade-shaped battery cell, and a multi-prism battery. For example, the multi-prism battery may be a hexagonal prism battery, and the like.

The battery mentioned in the embodiments of the present application refers to a single physical module comprising one or more battery cells to provide higher voltage and capacity.

In some embodiments, the battery may be a battery module. When there are a plurality of battery cells, the plurality of battery cells are provided and fixed to form a battery module.

In some embodiments, the battery may be a battery pack. The battery pack comprises a box and a battery cell. The battery cell or the battery module is accommodated in the box.

In some embodiments, the box may be a part of a vehicle chassis structure. For example, part of the box may become at least part of a vehicle floor, or part of the box may become at least part of a cross beam and a longitudinal beam of a vehicle.

In some embodiments, the battery may be an energy storage apparatus. The energy storage apparatus comprises an energy storage container, an energy storage cabinet, or the like.

The battery has outstanding advantages such as high energy density, low environmental pollution, high power density, long service life, wide application range, and low self-discharge coefficient, thus being an important component for the current development of new energy. The development of the battery technology needs to consider many design factors at the same time, such as energy density, cycle life, electric capacity, charge-discharge rate and other performance parameters.

For a general battery cell, the battery cell usually comprises a shell and an electrode assembly accommodated inside the shell. As the demand for the electric capacity of the battery cell becomes higher and higher, in a large-capacity battery cell in the related art, the electrode assembly of the battery cell is usually configured to be of a stacked structure, that is, a plurality of positive electrode plates and a plurality of negative electrode plates are stacked in the electrode assembly, and the stacking thickness of the electrode assembly is increased to increase the electric capacity of the electrode assembly. However, for the battery cell with such a structure, when the stacking thickness of the electrode assembly is increased, the size of the electrode plate needs to be correspondingly increased. This on the one hand easily leads to greater difficulty in the manufacturing process of the electrode plate, and when the electrode plates with larger sizes are stacked, the stacked surface is prone to unevenness, resulting in poor production quality of the electrode assembly. On the other hand, when the electrode plates with larger sizes are stacked, the requirements for manufacturing equipment are higher, and the stacking difficulty is greater, leading to greater difficulty in the assembly process of the battery cell, which is not conducive to improving the production efficiency of the battery cell and reducing the manufacturing cost of the battery cell.

Based on the above-mentioned considerations, in order to address the difficulty in manufacturing large-capacity battery cells, an embodiment of the present application provides a battery cell, and the battery cell comprises a shell, a first electrode terminal, a first current collecting member and a plurality of electrode assemblies. The shell has a wall portion. The first electrode terminal is mounted on the wall portion. The plurality of electrode assemblies are accommodated inside the shell, and the plurality of electrode assemblies are stacked along a first direction. The electrode assembly comprises a main body portion and a first tab. Along a second direction, the first tab is provided at an end of the main body portion, and the first tabs of the plurality of electrode assemblies are located at the same end of the main body portion. The second direction intersects with the first direction. The first current collecting member electrically connects the first electrode terminal and each of the first tabs.

In the battery cell with such a structure, a plurality of electrode assemblies stacked along the first direction are provided inside the shell of the battery cell, the first tabs of the plurality of electrode assemblies are all located at the same end of the main body portion in the second direction, and the first tabs of the plurality of electrode assemblies are all electrically connected to the first electrode terminal through the first current collecting member to realize the input or output of electric energy of the battery cell; the plurality of electrode assemblies are stacked inside the shell to increase the number of electrode assemblies accommodated inside the shell of the battery cell, which is conducive to improving the electric capacity of the battery cell. The battery cell adopting such a structure only needs to stack a plurality of electrode assemblies inside the shell and connect the first tabs of the plurality of electrode assemblies through one first current collecting member to realize the input or output of electric energy of the large-capacity battery cell, there is no need to provide a plurality of first current collecting members inside the shell to connect with the first tabs of the plurality of electrode assemblies, and there is no need to increase the thickness or volume of a single electrode assembly, thereby effectively reducing the manufacturing difficulty of the electrode assembly, so as to reduce the manufacturing difficulty of the large-capacity battery cell, which is conducive to improving the production efficiency of the battery cell and reducing the manufacturing cost of the battery cell.

The battery cell disclosed in the embodiments of the present application can be used, but is not limited to, in an electrical apparatus, such as a vehicle, a ship, or an aircraft. A power source system of the electrical apparatus may be composed by the battery cell or battery disclosed in the present application, which is conducive to alleviating the problem of excessively large difficulty in the assembling process of the battery cell, so as to improve the production efficiency of the battery cell and reduce the manufacturing cost of the battery cell.

An embodiment of the present application provides an electrical apparatus with a battery used as a power source. The electrical apparatus may be, but is not limited to, a mobile phone, a tablet, a laptop, an electric toy, an electric tool, a storage battery car, an electric vehicle, a ship, a spacecraft, etc. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For convenience of description, the following embodiments are illustrated by taking an example in which an electrical apparatus according to an embodiment of the present application is a vehicle.

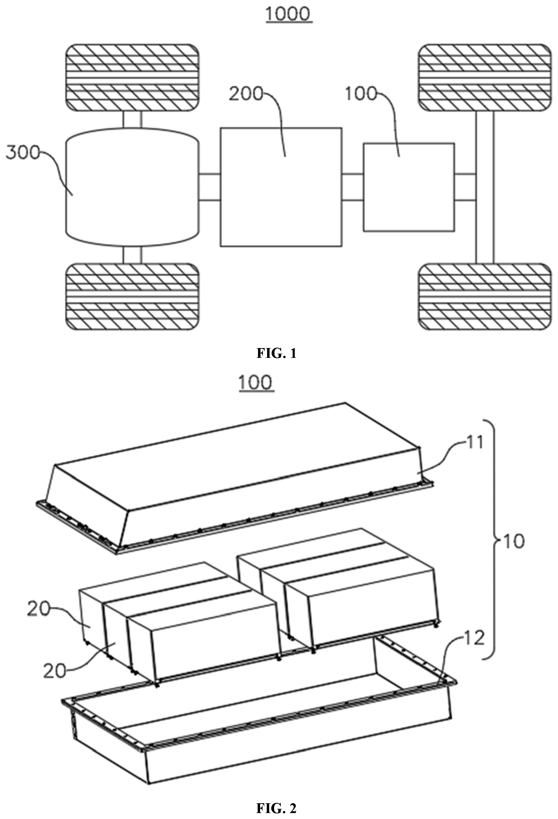

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended range electric vehicle, or the like. A battery 100 is provided in the vehicle 1000. The battery 100 may be provided at the bottom of the vehicle 1000, or the head of the vehicle 1000, or the tail of the vehicle 1000. The battery 100 may be configured to supply power to the vehicle 1000. For example, the battery 100 may be used as an operating power source or usage power source for the vehicle 1000. The vehicle 1000 may further comprise a controller 200 and a motor 300. The controller 200 is used for controlling the battery 100 to supply power to the motor 300, for example, to satisfy the operating power demand when the vehicle 1000 is starting, navigating, and traveling.

In some embodiments of the present application, the battery 100 can not only be used as the operating power source or usage power source for the vehicle 1000, but also as the driving power source for the vehicle 1000 to replace or partially replace fuel or natural gas to provide driving power for the vehicle 1000.

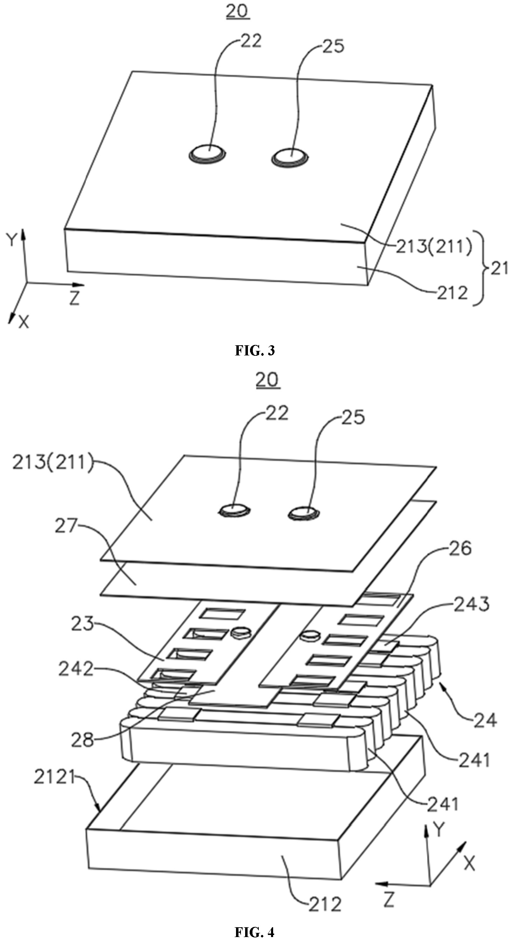

Referring to FIG. 2 and FIG. 3, FIG. 2 is an exploded structural view of a battery 100 according to some embodiments of the present application, and FIG. 3 is a schematic structural view of a battery cell 20 according to some embodiments of the present application. The battery 100 comprises a box 10 and battery cells 20, and the battery cells 20 are accommodated in the box 10.

The box 10 is configured to provide an assembling space for the battery cells 20, and the box 10 may be of various structures. In some embodiments, the box 10 may comprise a first box body 11 and a second box body 12. The first box body 11 and the second box body 12 cover each other, and the first box body 11 and the second box body 12 together define an assembling space for accommodating the battery cell 20. The second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box 10 formed by the first box body 11 and the second box body 12 may be in various shapes, such as a cylinder, a cuboid, or a cube. Exemplarily, in FIG. 2, the box 10 is in a cuboid shape.

In the battery 100, one or a plurality of battery cells 20 may be provided in the box 10. If a plurality of battery cells 20 are provided in the box 10, the plurality of battery cells 20 may be connected in series, parallel or parallel-series connection, where the parallel-series connection means that some of the plurality of battery cells 20 are connected in series and some are connected in parallel. The plurality of battery cells 20 may be directly connected in series, parallel or parallel-series connection together, and then, the whole formed by the plurality of battery cells 20 is accommodated in the box 10. Of course, the battery 100 may also be in the form of a battery module composed of a plurality of battery cells 20 in series, parallel or parallel-series connection first, and then, a plurality of battery modules are connected in series, parallel or parallel-series connection to form a whole which is accommodated in the box 10.

In some embodiments, the battery 100 may further comprise other structures. For example, the battery 100 may further comprise a busbar, and the busbar is configured to connect the plurality of battery cells 20 so as to realize the electrical connection between the plurality of battery cells 20.

Each battery cell 20 may be a secondary battery or a primary battery, or may be a lithium-sulfur battery, a sodium-ion battery or a magnesium-ion battery, but is not limited thereto. The battery cell 20 may be in a cuboid shape, a prism shape or other shapes. Exemplarily, in FIG. 3, the battery cell 20 is of a cuboid structure.

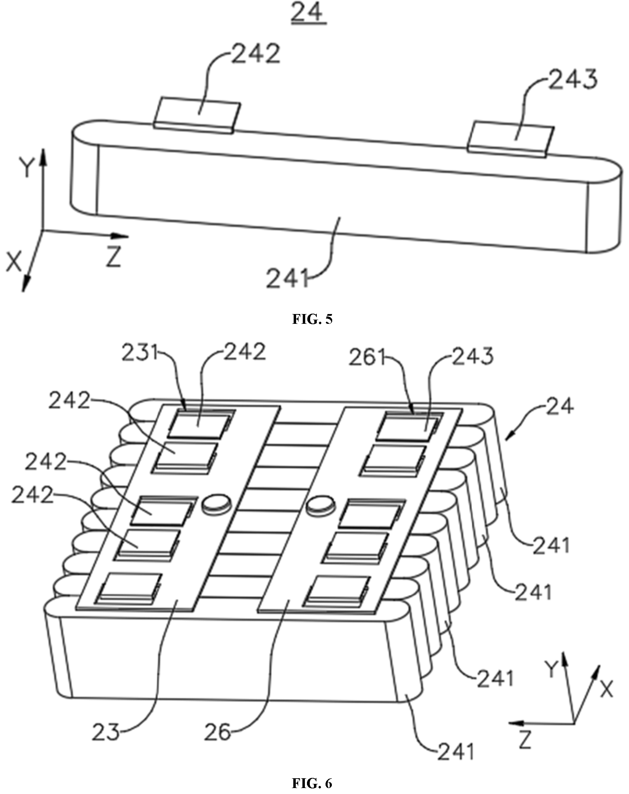

According to some embodiments of the present application, referring to FIG. 3, and further referring to FIG. 4, FIG. 5, and FIG. 6, FIG. 4 is an exploded structural view of a battery cell 20 according to some embodiments of the present application, FIG. 5 is a schematic structural view of an electrode assembly 24 according to some embodiments of the present application, and FIG. 6 is a schematic view showing assembling of a first current collecting member 23 and an electrode assembly 24 in a battery cell 20 according to some embodiments of the present application. The present application provides a battery cell 20, and the battery cell 20 comprises a shell 21, a first electrode terminal 22, a first current collecting member 23 and a plurality of electrode assemblies 24. The shell 21 has a wall portion 211. The first electrode terminal 22 is mounted on the wall portion 211. The plurality of electrode assemblies 24 are accommodated inside the shell 21, and the plurality of electrode assemblies 24 are stacked along a first direction X. The electrode assemblies 24 comprise a main body portion 241 and a first tab 242. Along a second direction Y, the first tab 242 is provided at an end of the main body portion 241, and the first tabs 242 of the plurality of electrode assemblies 24 are located at the same end of the main body portion 241. The second direction Y intersects with the first direction X. The first current collecting member 23 electrically connects the first electrode terminal 22 and each of the first tabs 242.

The shell 21 may be further configured to accommodate an electrolyte, such as an electrolyte solution. The shell 21 may also be made of various materials, such as copper, iron, aluminum, steel, or aluminum alloy.

In some embodiments, the shell 21 may comprise a shell body 212 and an end cover 213. The shell body 212 is provided with an accommodating cavity therein, the accommodating cavity is configured to accommodate the electrode assembly 24, and the accommodating cavity has an opening 2121. In other words, the shell body 212 is of a hollow structure having the opening 2121 at one end, and the end cover 213 covers the opening 2121 of the shell body 212 and forms a sealed connection to form a sealed space for accommodating the electrode assembly 24 and the electrolyte solution.

When the battery cell 20 is assembled, the electrode assembly 24 may be placed in the shell body 212 first, the shell body 212 is filled with the electrolyte solution, and then the opening 2121 of the shell body 212 is covered by the end cover 213, so as to complete the assembling of the battery cell 20.

The shell body 212 may have a variety of shapes, such as a cuboid or prismatic structure. The shape of the shell body 212 may be determined according to the specific shape of the electrode assembly 24. For example, if the electrode assembly 24 is of a cuboid structure, a cuboid shell body 212 may be selected. Of course, the end cover 213 may be of various structures. For example, the end cover 213 may be a plate-like structure or a hollow structure with one end open. Exemplarily, in FIG. 4, the shell body 212 is of a cuboid structure, and the end cover 213 is of a plate structure.

It should be noted that the wall portion 211 for mounting the electrode terminal may be the end cover 213 of the shell 21, or may be a wall of the shell body 212. Exemplarily, in FIG. 3 and FIG. 4, the wall portion 211 is the end cover 213 of the shell 21. Of course, in some embodiments, the wall portion 211 may also be the bottom wall of the shell body 212 of the shell 21 opposite to the end cover 213 or the side wall of the shell body 212 of the shell 21 connected to and adjacent to the end cover 213.

Of course, it is understandable that the shell 21 is not limited to the above-mentioned structure, and the shell 21 may also be of other structures. For example, the shell 21 may comprise a shell body 212 and two end covers 213, the shell body 212 is of a hollow structure with openings 2121 on opposite sides, and each end cover 213 correspondingly covers each opening 2121 of the shell body 212 and forms a sealed connection, so as to form a sealed space for accommodating the electrode assembly 24 and the electrolyte solution. In other words, the shell body 212 is provided with openings 2121 on opposite sides, and the two end covers 213 respectively cover opposite sides of the shell body 212 to close the corresponding openings 2121.

The electrode assembly 24 is a component in the battery cell 20 where an electrochemical reaction occurs. The structure of the electrode assembly 24 may be diversified. For example, the electrode assembly 24 may be of a wound structure formed by winding a positive electrode plate, a spacer, and a negative electrode plate, or of a stacked structure formed by stacking a positive electrode plate, a spacer, and a negative electrode plate.

Exemplarily, the spacer is a separator, and the main material of the separator may be selected from at least one of glass fiber, non-woven fabric, polyethylene, polypropylene, and polyvinylidene fluoride.

The electrode assembly 24 comprises a main body portion 241, and a first tab 242 and a second tab 243 connected to the main body portion 241. The polarities of the first tab 242 and the second tab 243 are opposite. The first tab 242 and the second tab 243 are respectively the positive and negative electrodes of the electrode assembly 24. The main body portion 241 of the electrode assembly 24 is the major region of the electrode assembly 24 where chemical reactions occur in the battery cell 20. The main body portion 241 is of a structure formed by winding a region of the positive electrode plate coated with a positive electrode active material layer, a spacer, and a region of the negative electrode plate coated with a negative electrode active material layer, and mainly works by moving metal ions between the positive electrode plate and the negative electrode plate with opposite polarities.

Along the second direction Y, the first tab 242 is provided at an end of the main body portion 241, and the first tabs 242 of the plurality of electrode assemblies 24 are located at the same end of the main body portion 241, that is, the first tab 242 is connected to one end of the main body portion 241 in the second direction Y, and in the plurality of electrode assemblies 24, the plurality of first tabs 242 are all located at the same end of the corresponding main body portion 241.

Exemplarily, the second direction Y is perpendicular to the first direction X. The first direction X is the stacking direction of the plurality of electrode assemblies 24 and also the thickness direction of the main body portion 241 of the electrode assembly 24. The second direction Y is the arrangement direction of the first tab 242 and the main body portion 241 of the electrode assembly 24.

The second tab 243 is also provided at an end of the main body portion 241 in the second direction Y. The second tabs 243 and the second tabs 243 of the plurality of electrode assemblies 24 are located at the same end of the main body portion 241. It should be noted that the second tab 243 and the first tab 242 can be located at the same end of the main body portion 241 in the second direction Y, or can be located at opposite ends of the main body portion 241 in the second direction Y respectively.

The first tab 242 and the second tab 243 are respectively the positive electrode and the negative electrode of the electrode assembly 24. If the first tab 242 is the positive electrode of the electrode assembly 24, the first tab 242 is a component formed by mutually stacking and connecting the regions on the positive electrode plate that are not coated with the positive electrode active material layer; and correspondingly, if the second tab 243 is the negative electrode of the electrode assembly 24, the second tab 243 is a component formed by mutually stacking and connecting the regions on the negative electrode plate that are not coated with the negative electrode active material layer. If the first tab 242 is the negative electrode of the electrode assembly 24, the first tab 242 is a component formed by mutually stacking and connecting the regions on the negative electrode plate that are not coated with the negative electrode active material layer; and correspondingly, if the second tab 243 is the positive electrode of the electrode assembly 24, the second tab 243 is a component formed by mutually stacking and connecting the regions on the positive electrode plate that are not coated with the positive electrode active material layer.

The first electrode terminal 22 functions to input or output electric energy of the battery cell 20, and may be made of various materials, such as copper, iron, aluminum, steel, aluminum alloy, or the like.

Exemplarily, the first electrode terminal 22 is mounted on the wall portion 211 in an insulated manner, that is, no electrical connection is formed between the first electrode terminal 22 and the wall portion 211.

In FIG. 3 and FIG. 4, the battery cell 20 can also comprise a second electrode terminal 25, the second electrode terminal 25 is mounted on the wall portion 211 in an insulated manner. The second electrode terminal 25 and the first electrode terminal 22 are respectively configured to input or output the positive and negative electrodes of the battery cell 20, so that the first electrode terminal 22 and the second electrode terminal 25 cooperate to output or input electric energy of the battery cell 20. Correspondingly, the battery cell 20 comprises a first current collecting member 23 and a second current collecting member 26, the first tabs 242 of the plurality of electrode assemblies 24 are connected to the first electrode terminal 22 through the first current collecting member 23, and the second tabs 243 of the plurality of electrode assemblies 24 are connected to the second electrode terminal 25 through the second current collecting member 26 to realize the input or output of electric energy of the battery cell 20.

Exemplarily, the second electrode terminal 25 may also be made of various materials, such as copper, iron, aluminum, steel, or aluminum alloy.

It should be noted that when the first electrode terminal 22 is mounted on the wall portion 211 in an insulated manner, the second electrode terminal 25 can be mounted on the wall portion 211 in an insulated manner, or can be directly mounted on the wall portion 211, so that the second electrode terminal 25 is electrically connected to the wall portion 211. At this time, the wall portion 211 and the second electrode terminal 25 carry the same charge. Similarly, when the second electrode terminal 25 is mounted on the wall portion 211 in an insulated manner, the first electrode terminal 22 can be mounted on the wall portion 211 in an insulated manner, or can be directly mounted on the wall portion 211, so that the first electrode terminal 22 is electrically connected to the wall portion 211. At this time, the wall portion 211 and the second electrode terminal 25 carry the same charge.

There can be various structures for mounting the first electrode terminal 22 and the second electrode terminal 25 on the shell 21. Exemplarily, in FIG. 3, the first electrode terminal 22 and the second electrode terminal 25 are both mounted on the end cover 213 of the shell 21, that is, the shell 21 comprises the end cover 213 and the shell body 212, the shell body 212 is of a hollow structure with an opening 2121 at one end, the end cover 213 covers the opening 2121, and the end cover 213 is the wall portion 211. Of course, the structure of the battery cell 20 is not limited thereto. In other embodiments, the first electrode terminal 22 and the second electrode terminal 25 can also be both mounted on the shell body 212 of the shell 21. Similarly, in some embodiments, the shell 21 can also be of a hollow structure including the shell body 212 and two end covers 213, with opposite ends of the shell body 212 having openings 2121. The two end covers 213 respectively cover the openings 2121 at opposite ends of the shell body 212, and the first electrode terminal 22 and the second electrode terminal 25 are respectively mounted on the two end covers 213, that is, the shell 21 comprises two wall portions 211, and the wall portion 211 is the end cover 213, so that the first electrode terminal 22 and the second electrode terminal 25 are respectively located at opposite ends of the shell 21 in the thickness direction of the wall portion 211.

The first current collecting member 23 functions to connect the first electrode terminal 22 and the first tabs 242 of the plurality of electrode assemblies 24. The first current collecting member 23 may be made of various materials, for example, copper, iron, aluminum, steel, aluminum alloy, or the like. Similarly, the second current collecting member 26 functions to connect the second electrode terminal 25 and the second tabs 243 of the plurality of electrode assemblies 24. The second current collecting member 26 may be made of various materials, for example, copper, iron, aluminum, steel, aluminum alloy, or the like.

In some embodiments, the battery cell 20 may further comprise a pressure relief mechanism, the pressure relief mechanism is provided on the shell 21, and the pressure relief mechanism is configured to relieve the pressure inside the battery cell 20 when the internal pressure or temperature of the battery cell 20 reaches a predetermined value.

Optionally, the pressure relief mechanism may be provided on the end cover 213 of the shell 21, or provided on the shell body 212 of the shell 21. Similarly, the pressure relief mechanism and the shell 21 may be of an integrally formed structure or split structure. **If** the pressure relief mechanism and the shell 21 are integrally formed, the pressure relief mechanism is a region on the shell 21 where a weak structure is formed, for example, a region on the shell 21 where a score groove is provided. If the pressure relief mechanism and the shell 21 are of a split structure, the pressure relief mechanism can be connected to the shell 21 by welding or other means. Correspondingly, the pressure relief mechanism can be a pressure relief component such as explosion-proof valve, rupture disk, gas valve, pressure relief valve or safety valve.

The plurality of electrode assemblies 24 stacked along the first direction X are provided inside the shell 21 of the battery cell 20, the first tabs 242 of the plurality of electrode assemblies 24 are all located at the same end of the main body portion 241 in the second direction Y, and the first tabs 242 of the plurality of electrode assemblies 24 are all electrically connected to the first electrode terminal 22 through the first current collecting member 23 to realize the input or output of electric energy of the battery cell 20; the plurality of electrode assemblies 24 are stacked inside the shell 21 to increase the number of electrode assemblies 24 accommodated inside the shell 21 of the battery cell 20, which is conducive to improving the electric capacity of the battery cell 20. A battery cell 20 adopting such a structure only needs to stack a plurality of electrode assemblies 24 inside the shell 21 and connect the first tabs 242 of the plurality of electrode assemblies 24 through one first current collecting member 23 to realize the input or output of electric energy of the large-capacity battery cell 20, and there is no need to provide a plurality of first current collecting members 23 inside the shell 21 to connect with the first tabs 242 of the plurality of electrode assemblies 24, and there is no need to increase the thickness or volume of a single electrode assembly 24, thereby effectively reducing the manufacturing difficulty of the electrode assembly 24, so as to reduce the manufacturing difficulty of the large-capacity battery cell 20, which is conducive to improving the production efficiency of the battery cell 20 and reducing the manufacturing cost of the battery cell 20.

According to some embodiments of the present application, referring to FIG. 4, FIG. 5 and FIG. 6, along the second direction Y, at least part of the first current collecting member 23 is located on a side of the main body portion 241 provided with the first tab 242, and part of the first tab 242 is located on a side of the first current collecting member 23 away from the main body portion 241 and is connected to the first current collecting member 23.

At least part of the first current collecting member 23 is located on a side of the main body portion 241 provided with the first tab 242, that is, the first current collecting member 23 can be entirely located on a side of the main body portion 241 provided with the first tab 242, or it can be only partially located on a side of the main body portion 241 provided with the first tab 242. Of course, in the structure where at least part of the first current collecting member 23 is located on a side of the main body portion 241 provided with the first tab 242, the first current collecting member 23 may be located inside the shell 21 or outside the shell 21.

Part of the first tab 242 is located on a side of the first current collecting member 23 away from the main body portion 241 and is connected to the first current collecting member 23, that is, the first tab 242 is connected to a side of the first current collecting member 23 away from the main body portion 241. Optionally, the structure where part of the first tab 242 is located on a side of the first current collecting member 23 away from the main body portion 241 and is connected to the first current collecting member 23 can be of various types. For example, the first tab 242 can be of a structure which bypasses the edge of the first current collecting member 23 from a side of the first current collecting member 23 facing the main body portion 241 and is then connected to a side of the first current collecting member 23 away from the main body portion 241. Alternatively, a channel for the first tab 242 to pass through is provided on the first current collecting member 23, so that the first tab 242 passes through the first current collecting member 23 and is then connected to a side of the first current collecting member 23 away from the main body portion 241.

At least part of the first current collecting member 23 is configured to be located on a side of the main body portion 241 provided with the first tab 242 so as to facilitate the connection between the first current collecting member 23 and the first tab 242, which is conducive to reducing the assembly difficulty between the first current collecting member 23 and the first tab 242, wherein part of the first tab 242 is configured to be located on a side of the first current collecting member 23 away from the main body portion 241 in the second direction Y and this part is connected to the first current collecting member 23, so that the first tab 242 is of a structure that bypasses the first current collecting member 23 and is connected to a side of the first current collecting member 23 away from the main body portion 241. On the one hand, it can reduce the difficulty of connecting the first tab 242 to the first current collecting member 23, and on the other hand, it can reduce the phenomenon that the first current collecting member 23 presses the first tab 242 downward toward the main body portion 241, so as to reduce the risk of short circuit caused by the first tab 242 being inserted upside down into the main body portion 241.

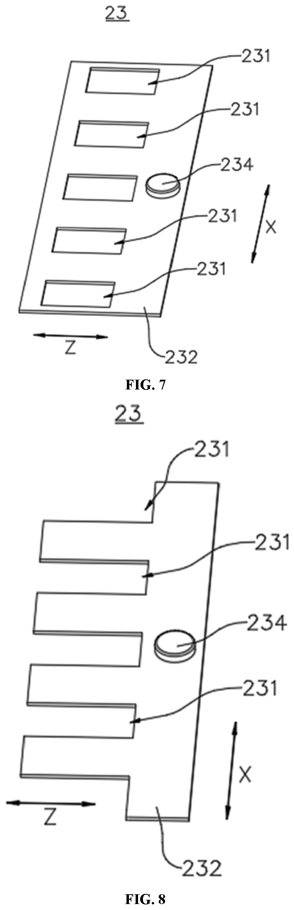

According to some embodiments of the present application, referring to FIG. 4 and FIG. 6 and further referring to FIG. 7, FIG. 7 is a schematic structural view of a first current collecting member 23 of a battery cell 20 according to some embodiments of the present application. The first current collecting member 23 is provided with a first clearance area 231, the first clearance area 231 runs through the first current collecting member 23 along the second direction Y. The first tab 242 passes through the first clearance area 231 and is connected to a side of the first current collecting member 23 away from the main body portion 241.

The first clearance area 231 runs through the first current collecting member 23 along the second direction Y, that is, the first clearance area 231 runs through the surfaces of opposite sides of the first current collecting member 23 in the second direction Y.

Optionally, the structure of providing the first clearance area 231 on the first current collecting member 23 can be of various types. The first current collecting member 23 may be provided with only one first clearance area 231, so that the first tabs 242 of the plurality of electrode assemblies 24 all pass through the first current collecting member 23 through the same first clearance area 231 and then are connected to a side of the first current collecting member 23 away from the main body portion 241. Alternatively, the first current collecting member 23 may have a first clearance area 231 provided for the first tab 242 of each electrode assembly 24. Further alternatively, the first current collecting member 23 may be provided with a plurality of first clearance areas 231 thereon, and each first clearance area 231 may allow the first tab 242 of one electrode assembly 24 or the first tabs 242 of the plurality of electrode assemblies 24 to pass through.

Exemplarily, a row of first clearance areas 231 are provided on the first current collecting member 23 corresponding to the first tabs 242 of the plurality of electrode assemblies 24, and each row of first clearance areas 231 comprise a plurality of first clearance areas 231 provided at intervals along the first direction X, and the first tabs 242 of two adjacent electrode assemblies 24 among the plurality of electrode assemblies 24 pass through the first current collecting member 23 through one first clearance area 231 and are connected to a side of the first current collecting member 23 away from the main body portion 241.

By providing the first clearance area 231 on the first current collecting member 23 and making the first clearance area 231 run through opposite sides of the first current collecting member 23 along the second direction Y, the first tab 242 can be connected to a side of the first current collecting member 23 away from the main body portion 241 after passing through the first clearance area 231. For the battery cell 20 adopting such a structure, it is convenient to connect the first tab 242 to a side of the first current collecting member 23 away from the main body portion 241, which can reduce the difficulty of the first tab 242 bypassing the first current collecting member 23 and optimize the length of the first tab 242 bypassing the first current collecting member 23, thereby alleviating the redundancy of the first tab 242 and reducing the manufacturing cost of the battery cell 20.

In some embodiments, as shown in FIG. 7, the first clearance area 231 is a through hole provided on the first current collecting member 23. Of course, in other embodiments, the first clearance area 231 can also be of other structures. For example, referring to FIG. 8, FIG. 8 is a schematic structural view of the first current collecting member 23 of the battery cell 20 in other embodiments according to some embodiments of the present application. The first clearance area 231 is a notch provided on the edge of the first current collecting member 23, that is, the first clearance area 231 is a notch provided on the surface of the edge of the first current collecting member 23 in the third direction Z, and the notch runs through opposite sides of the first current collecting member 23 along the second direction Y.

The first direction X, the second direction Y and the third direction Z are not coplanar and every two of them intersect with each other. Exemplarily, every two of the first direction X, the second direction Y and the third direction Z are perpendicular to each other.

The first clearance area 231 can be a through hole provided on the first current collecting member 23 or a notch provided at the edge of the first current collecting member 23, so that the first tab 242 can be connected to a side of the first current collecting member 23 away from the main body portion 241 after passing through the first clearance area 231. The structure is simple and easy to manufacture.

In some embodiments, referring to FIG. 3 and FIG. 4, the first current collecting member 23 is provided inside the shell 21, that is, the first current collecting member 23 is provided between the main body portion 241 of the electrode assembly 24 and the shell 21.

By providing the first current collecting member 23 inside the shell 21, it helps to reduce the assembly difficulty of electrically connecting the first tab 242 to the first electrode terminal 22 through the first current collecting member 23, so as to improve the production efficiency of the battery cell 20. Also, the shell 21 can protect the first current collecting member 23 to a certain degree, so as to reduce the wear or damage of the first current collecting member 23 during use.

Of course, the structure of the battery cell 20 is not limited thereto. In other embodiments, the battery cell 20 can also be of other structures. For example, along the second direction Y, a first pore channel for each first tab 242 to extend out is provided on a side of the shell 21 close to the first tab 242, and each first tab 242 can extend out of the shell 21 through the corresponding first pore channel. The first current collecting member 23 is provided outside the shell 21, and the first current collecting member 23 is electrically connected to the first tab 242 that extends out.

Along the second direction Y, a first pore channel for each first tab 242 to extend out is provided on a side of the shell 21 close to the first tab 242, that is, the region of the shell 21 facing a side of the main body portion 241 provided with the first tab 242 in the second direction Y is provided with a first pore channel for the first tab 242 to pass through, so that the first tabs 242 of the plurality of electrode assemblies 24 can extend outside the shell 21 and then be connected to the first current collecting member 23 located outside the shell 21, and the first current collecting member 23 is connected to the first electrode terminal 22 outside the shell 21.

Exemplarily, a plurality of first pore channels may be provided on the shell 21, and the first pores channels correspond one-to-one to the first tabs 242, so that the first tab 242 of each electrode assembly 24 can extend out of the shell 21 through one first pore channel, which is conducive to reducing the interference between the first tabs 242 of the plurality of electrode assemblies 24. Of course, in other embodiments, only one first pore channel may be provided on the shell 21, and the first tabs 242 of the plurality of electrode assemblies 24 all extend out of the shell 21 through the same first pore channel.

By providing the first current collecting member 23 outside the shell 21 and providing a first pore channel on the shell 21 for the first tab 242 to pass through, the first tab 242 can be electrically connected to the first electrode terminal 22 through the first current collecting member 23 after passing through the shell 21. For the battery cell 20 adopting such a structure, it is convenient to inspect the first current collecting member 23 later and to maintain and replace the first current collecting member 23, which is conducive to reducing the maintenance cost of the battery cell 20.

According to some embodiments of the present application, referring to FIG. 3, FIG. 4, FIG. 5 and FIG. 6, the electrode assembly 24 further comprises a second tab 243, the second tab 243 is provided at an end of the main body portion 241 along the second direction Y, the second tabs 243 of the plurality of electrode assemblies 24 are located at the same end of the main body portion 241, and the polarity of the second tab 243 is opposite to that of the first tab 242. The battery cell 20 further comprises a second electrode terminal 25 and a second current collecting member 26, the second electrode terminal 25 is mounted on the wall portion 211, and the second current collecting member 26 electrically connects the second electrode terminal 25 and each of the second tabs 243.

Along the second direction Y, the second tab 243 is provided at an end of the main body portion 241, and the second tabs 243 of the plurality of electrode assemblies 24 are located at the same end of the main body portion 241, that is, the second tab 243 is connected to one end of the main body portion 241 in the second direction Y, and in the plurality of electrode assemblies 24, the plurality of second tabs 243 are all located at the same end of the corresponding main body portion 241.

The polarity of the second tab 243 is opposite to that of the first tab 242, that is, the first tab 242 and the second tab 243 are respectively the positive electrode and the negative electrode of the electrode assembly 24.

Exemplarily, the second electrode terminal 25 is mounted on the wall portion 211 in an insulated manner, that is, no electrical connection is formed between the first electrode terminal 22 and the wall portion 211.

It should be noted that the first tab 242 and the second tab 243 may be provided at the same end of the main body portion 241 in the second direction Y, or may be provided at opposite ends of the main body portion 241 in the second direction Y, respectively. Exemplarily, in FIG. 4, the first tab 242 and the second tab 243 are both provided at an end of the main body portion 241 facing the wall portion 211 in the second direction Y.

The electrode assembly 24 is also provided with a second tab 243 with polarity opposite to that of the first tab 242, the second tabs 243 of the plurality of electrode assemblies 24 are all located at the same end of the main body portion 241 in the second direction Y, and the second tabs 243 of the plurality of electrode assemblies 24 are all electrically connected to the second electrode terminal 25 through one second current collecting member 26 to realize the input or output of electric energy of the battery cell 20. The battery cell 20 adopting such a structure only needs to stack a plurality of electrode assemblies 24 inside the shell 21 and connect the second tabs 243 of the plurality of electrode assemblies 24 through the second current collecting member 26 to realize the input or output of electric energy of the large-capacity battery cell 20, and there is no need to provide a plurality of second current collecting members 26 inside the shell 21 to connect with the second tabs 243 of the plurality of electrode assemblies 24, and there is no need to increase the thickness or volume of a single electrode assembly 24, thereby effectively reducing the manufacturing difficulty of the electrode assembly 24, so as to reduce the manufacturing difficulty of the large-capacity battery cell 20, which is conducive to improving the production efficiency of the battery cell 20 and reducing the manufacturing cost of the battery cell 20.

According to some embodiments of the present application, referring to FIG. 4, FIG. 5 and FIG. 6, along the second direction Y, at least part of the second current collecting member 26 is located on a side of the main body portion 241 provided with the second tab 243, and part of the second tab 243 is located on a side of the second current collecting member 26 away from the main body portion 241 and is connected to the second current collecting member 26.

At least part of the second current collecting member 26 is located on a side of the main body portion 241 provided with the second tab 243, that is, the second current collecting member 26 can be entirely located on a side of the main body portion 241 provided with the second tab 243, or it can be only partially located on a side of the main body portion 241 provided with the second tab 243. Of course, in the structure where at least part of the second current collecting member 26 is located on a side of the main body portion 241 provided with the second tab 243, the second current collecting member 26 may be located inside the shell 21 or outside the shell 21.

Part of the second tab 243 is located on a side of the second current collecting member 26 away from the main body portion 241 and is connected to the second current collecting member 26, that is, the second tab 243 is connected to a side of the second current collecting member 26 away from the main body portion 241. Optionally, the structure where part of the second tab 243 is located on a side of the second current collecting member 26 away from the main body portion 241 and is connected to the second current collecting member 26 can be of various types. For example, the second tab 243 can be of a structure which bypasses the edge of the second current collecting member 26 from a side of the second current collecting member 26 facing the main body portion 241 and is then connected to a side of the second current collecting member 26 away from the main body portion 241. Alternatively, a channel for the second tab 243 to pass through is provided on the second current collecting member 26, so that the second tab 243 passes through the second current collecting member 26 and is then connected to a side of the second current collecting member 26 away from the main body portion 241.

At least part of the second current collecting member 26 is configured to be located on a side of the main body portion 241 provided with the second tab 243 so as to facilitate the connection between the second current collecting member 26 and the second tab 243, which is conducive to reducing the assembly difficulty between the second current collecting member 26 and the second tab 243, wherein part of the second tab 243 is configured to be located on a side of the second current collecting member 26 away from the main body portion 241 in the second direction Y and this part is connected to the second current collecting member 26, so that the second tab 243 is of a structure that bypasses the second current collecting member 26 and is connected to a side of the second current collecting member 26 away from the main body portion 241. On the one hand, it can reduce the difficulty of connecting the second tab 243 to the second current collecting member 26, and on the other hand, it can reduce the phenomenon that the second current collecting member 26 presses the second tab 243 downward toward the main body portion 241, so as to reduce the risk of short circuit caused by the second tab 243 being inserted upside down into the main body portion 241.

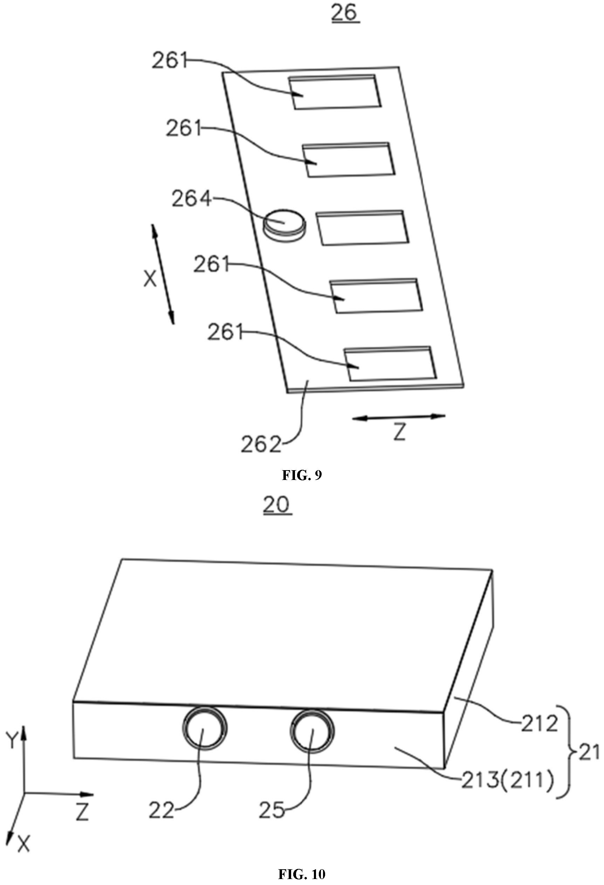

According to some embodiments of the present application, referring to FIG. 4 and FIG. 6 and further referring to FIG. 9, FIG. 9 is a schematic structural view of a second current collecting member 26 of a battery cell 20 according to some embodiments of the present application. The second current collecting member 26 is provided with a second clearance area 261, the second clearance area 261 runs through the second current collecting member 26 along the second direction Y. The second tab 243 passes through the second clearance area 261 and is connected to a side of the second current collecting member 26 away from the main body portion 241.

The second clearance area 261 runs through the second current collecting member 26 along the second direction Y, that is, the second clearance area 261 runs through the surfaces of opposite sides of the second current collecting member 26 in the second direction Y.

Optionally, the structure of providing the second clearance area 261 on the second current collecting member 26 can be of various types. The second current collecting member 26 may be provided with only one second clearance area 261, so that the second tabs 243 of the plurality of electrode assemblies 24 all pass through the second current collecting member 26 through the same second clearance area 261 and then are connected to a side of the second current collecting member 26 away from the main body portion 241. Alternatively, the second current collecting member 26 may have a second clearance area 261 provided for the second tab 243 of each electrode assembly 24. Further alternatively, the second current collecting member 26 may be provided with a plurality of second clearance areas 261 thereon, and each second clearance area 261 may allow the second tab 243 of one electrode assembly 24 or the second tabs 243 of the plurality of electrode assemblies 24 to pass through.

Exemplarily, a row of second clearance areas 261 are provided on the second current collecting member 26 corresponding to the second tabs 243 of the plurality of electrode assemblies 24, and each row of second clearance areas 261 comprise a plurality of second clearance areas 261 provided at intervals along the first direction X, and the second tabs 243 of two adjacent electrode assemblies 24 among the plurality of electrode assemblies 24 pass through the second current collecting member 26 through one second clearance area 261 and are connected to a side of the second current collecting member 26 away from the main body portion 241.

By providing the second clearance area 261 on the second current collecting member 26 and making the second clearance area 261 run through opposite sides of the second current collecting member 26 along the second direction Y, the second tab 243 can be connected to a side of the second current collecting member 26 away from the main body portion 241 after passing through the second clearance area 261. For the battery cell 20 adopting such a structure, it is convenient to connect the second tab 243 to a side of the second current collecting member 26 away from the main body portion 241, which can reduce the difficulty of the second tab 243 bypassing the second current collecting member 26 and optimize the length of the second tab 243 bypassing the second current collecting member 26, thereby alleviating the redundancy of the second tab 243 and reducing the manufacturing cost of the battery cell 20.

In some embodiments, as shown in FIG. 9, the second clearance area 261 is a through hole provided on the second current collecting member 26. Of course, in other embodiments, the second clearance area 261 can also be of other structures. For example, the second clearance area 261 is a notch provided on the edge of the second current collecting member 26. That is to say, the second clearance area 261 is a notch provided on the surface of the edge of the second current collecting member 26 in the third direction Z, and the notch runs through opposite sides of the second current collecting member 26 along the second direction Y.

The second clearance area 261 can be a through hole provided on the second current collecting member 26 or a notch provided at the edge of the second current collecting member 26, so that the second tab 243 can be connected to a side of the second current collecting member 26 away from the main body portion 241 after passing through the second clearance area 261. The structure is simple and easy to manufacture.

In some embodiments, referring to FIG. 3 and FIG. 4, the second current collecting member 26 is provided inside the shell 21, that is, the second current collecting member 26 is provided between the main body portion 241 of the electrode assembly 24 and the shell 21.

By providing the second current collecting member 26 inside the shell 21, it helps to reduce the assembly difficulty of electrically connecting the second tab 243 to the second electrode terminal 25 through the second current collecting member 26, so as to improve the production efficiency of the battery cell 20. Also, the shell 21 can protect the second current collecting member 26 to a certain degree, so as to reduce the wear or damage of the second current collecting member 26 during use.

Of course, the structure of the battery cell 20 is not limited thereto. In other embodiments, the battery cell 20 can also be of other structures. For example, along the second direction Y, a second pore channel for each second tab 243 to extend out is provided on a side of the shell 21 close to the second tab 243, and each second tab 243 can extend out of the shell 21 through the corresponding second pore channel. The second current collecting member 26 is provided outside the shell 21, and the second current collecting member 26 is electrically connected to the second tab 243 that extends out.

Along the second direction Y, a second pore channel for each second tab 243 to extend out is provided on a side of the shell 21 close to the second tab 243, that is, the region of the shell 21 facing a side of the main body portion 241 provided with the second tab 243 in the second direction Y is provided with a second pore channel for the second tab 243 to pass through, so that the second tabs 243 of the plurality of electrode assemblies 24 can extend outside the shell 21 and then be connected to the second current collecting member 26 located outside the shell 21, and the second current collecting member 26 is connected to the second electrode terminal 25 outside the shell 21.

Exemplarily, a plurality of second pore channels may be provided on the shell 21, and the second pore channels correspond one-to-one to the second tabs 243, so that the second tab 243 of each electrode assembly 24 can extend out of the shell 21 through one second pore channel, which is conducive to reducing the interference between the second tabs 243 of the plurality of electrode assemblies 24. Of course, in other embodiments, only one second pore channel may be provided on the shell 21, and the second tabs 243 of the plurality of electrode assemblies 24 all extend out of the shell 21 through the same second pore channel.

By providing the second current collecting member 26 outside the shell 21 and providing a second pore channel on the shell 21 for the second tab 243 to pass through, the second tab 243 can be electrically connected to the second electrode terminal 25 through the second current collecting member 26 after passing through the shell 21. For the battery cell 20 adopting such a structure, it is convenient to inspect the second current collecting member 26 later and to maintain and replace the second current collecting member 26, which is conducive to reducing the maintenance cost of the battery cell 20.

According to some embodiments of the present application, referring to FIG. 4, FIG. 5 and FIG. 6, along the second direction Y, the first tab 242 and the second tab 243 are both provided at the same end of the main body portion 241, the first tab 242 and the second tab 243 are provided at intervals along the third direction Z, and the first direction X, the second direction Y and the third direction Z are not coplanar and every two of them intersect with each other. The first current collecting member 23 comprises a first connecting portion 232 electrically connecting each first tab 242, the second current collecting member 26 comprises a second connecting portion 262 electrically connecting each second tab 243, the first connecting portion 232 and the second connecting portion 262 are both located on a side of the main body portion 241 provided with the first tab 242 and the second tab 243 in the second direction Y, and the first connecting portion 232 and the second connecting portion 262 are provided at intervals along the third direction Z.

The first direction X, the second direction Y and the third direction Z are not coplanar and every two of them intersect with each other, that is, every two of the first direction X, the second direction Y and the third direction Z intersect with each other, and every two directions form a plane, so that the three planes formed by the three directions are not coplanar. Exemplarily, every two of the first direction X, the second direction Y, and the third direction Z are perpendicular to each other.

The first current collecting member 23 comprises a first connecting portion 232, the first connecting portion 232 is a part of the first current collecting member 23 that is located on a side of the main body portion 241 provided with the first tab 242 in the second direction Y and the first connecting portion 232 serves to connect the first tabs 242 of the plurality of electrode assemblies 24. Similarly, the second current collecting member 26 comprises a second connecting portion 262, the second connecting portion 262 is a part of the second current collecting member 26 that is located on a side of the main body portion 241 provided with the second tab 243 in the second direction Y, and the second connecting portion 262 serves to connect the second tabs 243 of the plurality of electrode assemblies 24.

The first connecting portion 232 serves to connect the first tabs 242 of the plurality of electrode assemblies 24. The connection structure between the first connecting portion 232 and the first tab 242 may be various, such as welding connection, abutment connection or bolt connection. Similarly, the second connecting portion 262 serves to connect the second tabs 243 of the plurality of electrode assemblies 24. The connection structure between the second connecting portion 262 and the second tab 243 may be various, such as welding connection, abutment connection or bolt connection.

Optionally, in the embodiment where the first tab 242 and the second tab 243 are both provided at the same end of the main body portion 241 along the second direction Y, the wall portion 211 can be located on a side of the main body portion 241 provided with the first tab 242 and the second tab 243 in the second direction Y, or it can be provided on a side of the plurality of electrode assemblies 24 in the first direction X.

Exemplarily, in FIG. 4, the wall portion 211 is located on a side of the main body portion 241 provided with the first tab 242 and the second tab 243 in the second direction Y. Correspondingly, the first current collecting member 23 and the second current collecting member 26 are both entirely provided on a side of the main body portion 241 provided with the first tab 242 and the second tab 243. That is, in this embodiment, the first current collecting member 23 comprises only the first connecting portion 232, and the first connecting portion 232 connects the first tab 242 and the first electrode terminal 22. Similarly, the second current collecting member 26 comprises only the second connecting portion 262, and the second connecting portion 262 connects the second tab 243 and the second electrode terminal 25.

Exemplarily, in FIG. 4, the first current collecting member 23 and the second current collecting member 26 are both provided inside the shell 21 such that the first connecting portion 232 of the first current collecting member 23 and the second connecting portion 262 of the second current collecting member 26 are both located between the main body portion 241 and the wall portion 211. Of course, in the embodiment where the first current collecting member 23 and the second current collecting member 26 are both provided outside the shell 21, the first connecting portion 232 of the first current collecting member 23 and the second connecting portion 262 of the second current collecting member 26 are both located on a side of the wall portion 211 away from the main body portion 241.

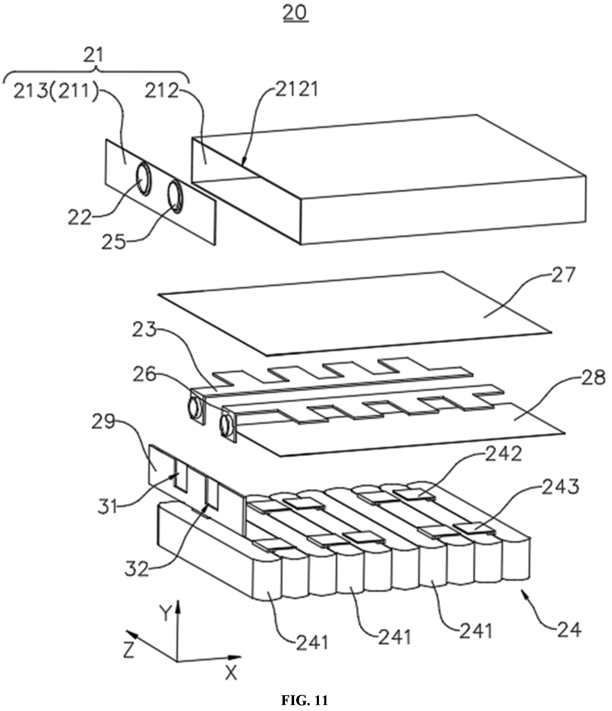

In some embodiments, referring to FIG. 10 and FIG. 11, FIG. 10 is a schematic structural view of a battery cell 20 according to some other embodiments of the present application, and FIG. 11 is an exploded structural view of a battery cell 20 according to some other embodiments of the present application. The wall portion 211 is provided on a side of the plurality of electrode assemblies 24 in the first direction X. In this embodiment, the first connecting portion 232 is part of the first current collecting member 23 that is located on a side of the main body portion 241 provided with the first tab 242 and is connected to the first tab 242 in the second direction Y, and the second connecting portion 262 is part of the second current collecting member 26 that is located on a side of the main body portion 241 provided with the second tab 243 and is connected to the second tab 243 in the second direction Y.

It should be noted that in the embodiment where the first clearance area 231 is provided on the first current collecting member 23, the first clearance area 231 is provided on the first connecting portion 232 of the first current collecting member 23, that is, the first clearance area 231 runs through opposite sides of the first connecting portion 232 along the second direction Y, so that the first tab 242 passes through the first clearance area 231 and is then connected to a side of the first connecting portion 232 away from the main body portion 241. Similarly, in the embodiment where the second clearance area 261 is provided on the second current collecting member 26, the second clearance area 261 is provided on the second connecting portion 262 of the second current collecting member 26, that is, the second clearance area 261 runs through opposite sides of the second connecting portion 262 along the second direction Y, so that the second tab 243 passes through the second clearance area 261 and is then connected to a side of the second connecting portion 262 away from the main body portion 241.

By providing both the first tab 242 and the second tab 243 at the same end of the main body portion 241 in the second direction Y, and providing both the first connecting portion 232 of the first current collecting member 23 and the second connecting portion 262 of the second current collecting member 26 on a side of the main body portion 241 provided with the first tab 242 and the second tab 243, on the one hand, it facilitates the connection between the first current collecting member 23 and the first tab 242 and the connection between the second current collecting member 26 and the second tab 243, which is conducive to reducing the assembly difficulty between the first current collecting member 23 and the second current collecting member 26; on the other hand, it enables the first current collecting member 23 and the second current collecting member 26 to share space in the second direction Y, which is conducive to saving the space occupied by the first current collecting member 23 and the second current collecting member 26 in the second direction Y, thereby improving the space utilization of the battery cell 20 and enhancing the energy density of the battery cell 20.

According to some embodiments of the present application, referring to FIG. 4 and FIG. 11, the first current collecting member 23 and the second current collecting member 26 are both provided inside the shell 21, and the battery cell 20 may further comprise a first insulating member 27. The first insulating member 27 is provided on a side of the first connecting portion 232 and the second connecting portion 262 away from the main body portion 241 along the second direction Y to insulate and isolate the first connecting portion 232 from the shell 21 and the second connecting portion 262 from the shell 21.

The first insulating member 27 is provided on a side of the first connecting portion 232 and the second connecting portion 262 away from the main body portion 241 along the second direction Y, that is, in the second direction Y, the first connecting portion 232 of the first current collecting member 23 and the second connecting portion 262 of the second current collecting member 26 are located between the main body portion 241 and the first insulating member 27, so that the first connecting portion 232 and the second connecting portion 262 can be insulated and isolated from the shell 21 by the first insulating member 27.

Exemplarily, the first insulating member 27 may be made of a variety of materials, such as rubber, silicone or plastic.

The battery cell 20 is also provided with a first insulating member 27, and the first insulating member 27 is provided on a side of the first connecting portion 232 and the second connecting portion 262 away from the main body portion 241, so that the first insulating member 27 is located between the first connecting portion 232 and the second connecting portion 262 and the shell 21 in the second direction Y. For the battery cell 20 adopting such a structure, it can, on the one hand, realize insulation and isolation between the first connecting portion 232 and the shell 21 and between the second connecting portion 262 and the shell 21, which helps to reduce the risk of short circuit between the first current collecting member 23 and the second current collecting member 26 and the shell 21; on the other hand, it can realize that the first connecting portion 232 of the first current collecting member 23 and the second connecting portion 262 of the second current collecting member 26 share one first insulating member 27, which helps to optimize the assembly process of the battery cell 20 and can reduce the manufacturing cost of the battery cell 20.

According to some embodiments of the present application, continuing to refer to FIG. 4 and FIG. 11, the first current collecting member 23 and the second current collecting member 26 are both provided inside the shell 21, and the battery cell 20 may further comprise a second insulating member 28. The second insulating member 28 is provided on a side of the first connecting portion 232 and the second connecting portion 262 and the main body portion 241 along the second direction Y to insulate and isolate the first connecting portion 232 from the main body portion 241 and the second connecting portion 262 from the main body portion 241.

The second insulating member 28 is provided between the first connecting portion 232 and the second connecting portion 262 and the main body portion 241 along the second direction Y, that is, in the second direction Y, the second insulating member 28 is provided on a side of the first connecting portion 232 and the second connecting portion 262 facing the main body portion 241, so that the main body portion 241 and the first connecting portion 232 and the main body portion 241 and the second connecting portion 262 are respectively located on opposite sides of the second insulating member 28, so as to insulate and isolate the first connecting portion 232 from the main body portion 241 and the second connecting portion 262 from the main body portion 241 through the second insulating member 28.

Exemplarily, the second insulating member 28 may be made of a variety of materials, such as rubber, silicone or plastic.

The battery cell 20 is also provided with a second insulating member 28, and the second insulating member 28 is provided on a side of the first connecting portion 232 and the second connecting portion 262 facing the main body portion 241, so that the second insulating member 28 is located between the first connecting portion 232 and the second connecting portion 262 and the main body portion 241 in the second direction Y. For the battery cell 20 adopting such a structure, it can, on the one hand, realize insulation and isolation between the first connecting portion 232 and the main body portion 241 and between the second connecting portion 262 and the main body portion 241, which helps to reduce the risk of short circuit between the first current collecting member 23 and the second current collecting member 26 and the main body portion 241; on the other hand, it can realize that the first connecting portion 232 of the first current collecting member 23 and the second connecting portion 262 of the second current collecting member 26 share one second insulating member 28, which helps to optimize the assembly process of the battery cell 20 and can reduce the manufacturing cost of the battery cell 20.

According to some embodiments of the present application, referring to FIG. 3 and FIG. 4, along the second direction Y, the wall portion 211 is located on a side of the plurality of electrode assemblies 24, the first tab 242 and the second tab 243 are both provided at an end of the main body portion 241 facing the wall portion 211, and the first current collecting member 23 and the second current collecting member 26 are both provided on a side of the main body portion 241 facing the wall portion 211.

The first tab 242 and the second tab 243 are both provided at an end of the main body portion 241 facing the wall portion 211, that is, the arrangement direction of the main body portion 241 and the wall portion 211 of the electrode assembly 24 is the same as the arrangement direction of the main body portion 241 and the first tab 242 and the second tab 243 of the electrode assembly 24, so that the main body portion 241 and the wall portion 211 are of a structure arranged along the second direction Y, and the first tab 242 and the second tab 243 are both connected to an end of the main body portion 241 facing the wall portion 211.

The first current collecting member 23 and the second current collecting member 26 are both provided on a side of the main body portion 241 facing the wall portion 211, that is, the first current collecting member 23 and the wall portion 211 are provided at an end of the main body portion 241 provided with the first tab 242 along the second direction Y, and the second current collecting member 26 and the wall portion 211 are also provided at an end of the main body portion 241 provided with the second tab 243 along the second direction Y.

Exemplarily, in FIG. 4, the first current collecting member 23 and the second current collecting member 26 are both provided inside the shell 21 such that the first current collecting member 23 and the second current collecting member 26 are located between the main body portion 241 and the wall portion 211 in the second direction Y. Of course, in the embodiment where the first current collecting member 23 and the second current collecting member 26 are both provided outside the shell 21, the first current collecting member 23 and the second current collecting member 26 are both provided on a side of the wall portion 211 away from the main body portion 241, so that the wall portion 211 is located between the main body portion 241 and the first current collecting member 23 and the second current collecting member 26 in the second direction Y.

The wall portion 211 is located on a side of the plurality of electrode assemblies 24 provided with the first tab 242 and the second tab 243 in the second direction Y, and both the first current collecting member 23 and the second current collecting member 26 are provided on a side of the main body portion 241 facing the wall portion 211. On one hand, it is convenient for the first current collecting member 23 to connect the first tab 242 and the first electrode terminal 22 provided on the wall portion 211 and for the second current collecting member 26 to connect the second tab 243 and the second electrode terminal 25 provided on the wall portion 211, which is conducive to reducing the assembly difficulty of the battery cell 20. On the other hand, the first current collecting member 23 and the second current collecting member 26 can be entirely provided on a side of the main body portion 241 facing the wall portion 211, which is conducive to saving the space occupied by the first current collecting member 23 and the second current collecting member 26, thereby enhancing the energy density of the battery cell 20.

In some embodiments, referring to FIG. 4, FIG. 6, and FIG. 7, in the second direction Y, a first protrusion 234 is provided on a side of the first current collecting member 23 facing the wall portion 211, and the first protrusion 234 is connected to the first electrode terminal 22.

Exemplarily, the first current collecting member 23 is provided inside the shell 21, and correspondingly, the first protrusion 234 is provided on a side of the first current collecting member 23 away from the main body portion 241. Of course, in the embodiment where the first current collecting member 23 is provided outside the shell 21, the first current collecting member 23 is located on a side of the wall portion 211 away from the main body portion 241, and the first protrusion 234 is provided on a side of the first current collecting member 23 facing the main body portion 241.

Exemplarily, the first current collecting member 23 is welded to the first electrode terminal 22 through the first protrusion 234.

A first protrusion 234 is provided on a side of the first current collecting member 23 facing the wall portion 211 in the second direction Y, and the first protrusion 234 is connected to the first electrode terminal 22 to realize the electrical connection between the first current collecting member 23 and the first electrode terminal 22. The first current collecting member 23 adopting such a structure can reduce the assembly difficulty between the first current collecting member 23 and the first electrode terminal 22, and the connection reliability between the first current collecting member 23 and the first electrode terminal 22 can be improved through the structure where the first protrusion 234 is connected to the first electrode terminal 22.

In some embodiments, referring to FIG. 4, FIG. 6, and FIG. 9, along the second direction Y, a second protrusion 264 is provided on a side of the second current collecting member 26 facing the wall portion 211, and the second protrusion 264 is connected to the second electrode terminal 25.

Exemplarily, the second current collecting member 26 is provided inside the shell 21, and correspondingly, the second protrusion 264 is provided on a side of the second current collecting member 26 away from the main body portion 241. Of course, in the embodiment where the second current collecting member 26 is provided outside the shell 21, the second current collecting member 26 is located on a side of the wall portion 211 away from the main body portion 241, and the second protrusion 264 is provided on a side of the second current collecting member 26 facing the main body portion 241.

Exemplarily, the second current collecting member 26 is welded to the second electrode terminal 25 through the second protrusion 264.

A second protrusion 264 is provided on a side of the second current collecting member 26 facing the wall portion 211 in the second direction Y, and the second protrusion 264 is connected to the second electrode terminal 25 to realize the electrical connection between the second current collecting member 26 and the second electrode terminal 25. The second current collecting member 26 adopting such a structure can reduce the assembly difficulty between the second current collecting member 26 and the second electrode terminal 25, and the connection reliability between the second current collecting member 26 and the second electrode terminal 25 can be improved through the structure where the second protrusion 264 is connected to the second electrode terminal 25.

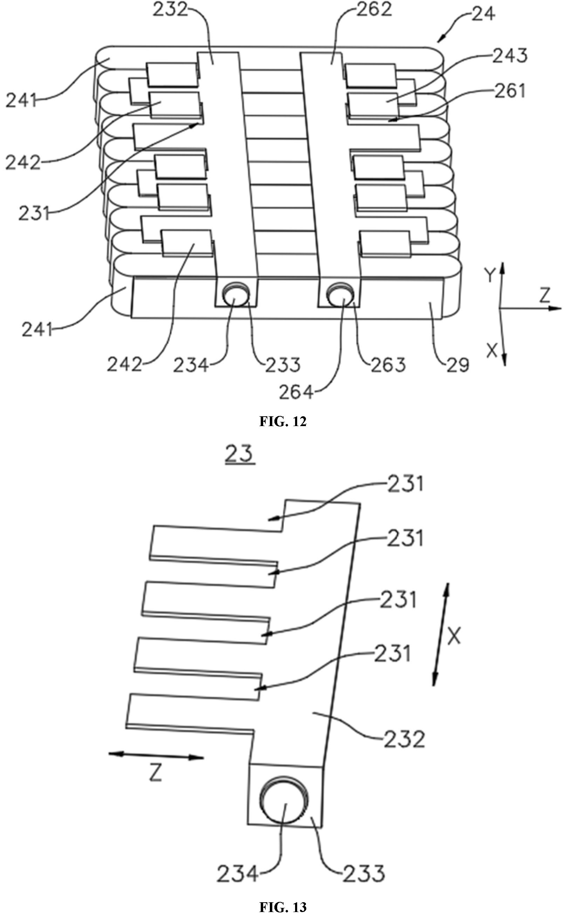

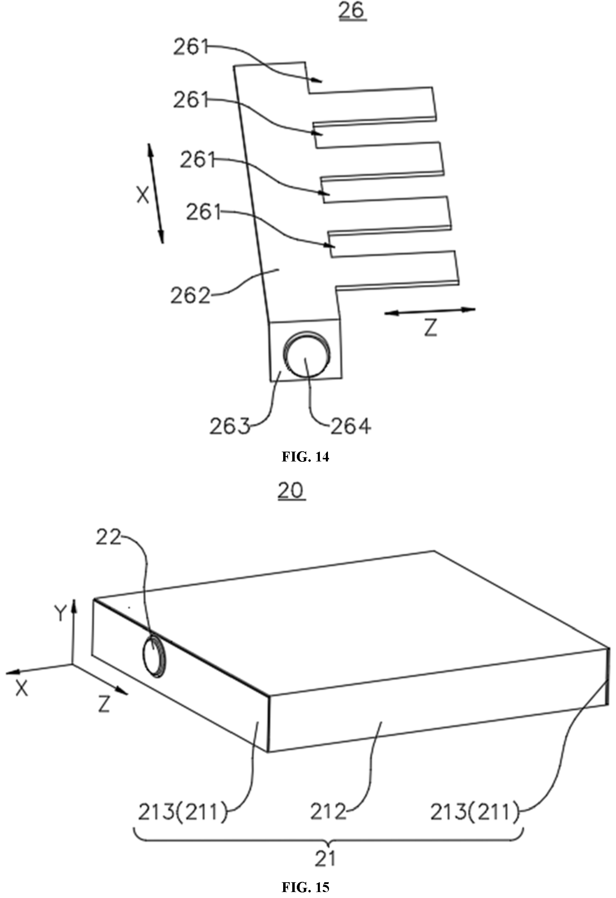

According to some embodiments of the present application, referring to FIG. 10 and FIG. 11, and further referring to FIG. 12, FIG. 13, and FIG. 14, FIG. 12 is a schematic view showing assembling of a first current collecting member 23 and an electrode assembly 24 in a battery cell 20 according to some other embodiments of the present application, FIG. 13 is a schematic structural view of a first current collecting member 23 of a battery cell 20 according to some other embodiments of the present application, and FIG. 14 is a schematic structural view of a second current collecting member 26 in a battery cell 20 according to some other embodiments of the present application. Along the first direction X, the wall portion 211 is located on at least one side of the plurality of electrode assemblies 24. The first current collecting member 23 further comprises a third connecting portion 233 connected to the first connecting portion 232. The third connecting portion 233 is located on a side of the plurality of electrode assemblies 24 facing the wall portion 211 in the first direction X. The third connecting portion 233 is connected to the first electrode terminal 22. The second current collecting member 26 further comprises a fourth connecting portion 263 connected to the second connecting portion 262. The fourth connecting portion 263 is located on a side of the plurality of electrode assemblies 24 facing the wall portion 211 in the first direction X. The fourth connecting portion 263 is connected to the second electrode terminal 25.

Along the first direction X, the wall portion 211 is located on at least one side of the plurality of electrode assemblies 24, that is, the wall of the shell 21 located on a side of the plurality of electrode assemblies 24 in the first direction X is the wall portion 211, so that the first electrode terminal 22 is located on a side of the plurality of electrode assemblies 24 in the first direction X, and the second electrode terminal 25 is located on a side of the plurality of electrode assemblies 24 in the first direction X.

Exemplarily, in FIG. 10 and FIG. 11, the battery cell 20 is provided with only one wall portion 211, and the first electrode terminal 22 and the second electrode terminal 25 are both mounted on the one wall portion 211, so that the third connecting portion 233 of the first current collecting member 23 and the fourth connecting portion 263 of the second current collecting member 26 are both located on a side of the plurality of electrode assemblies 24 facing the wall portion 211 in the first direction X.

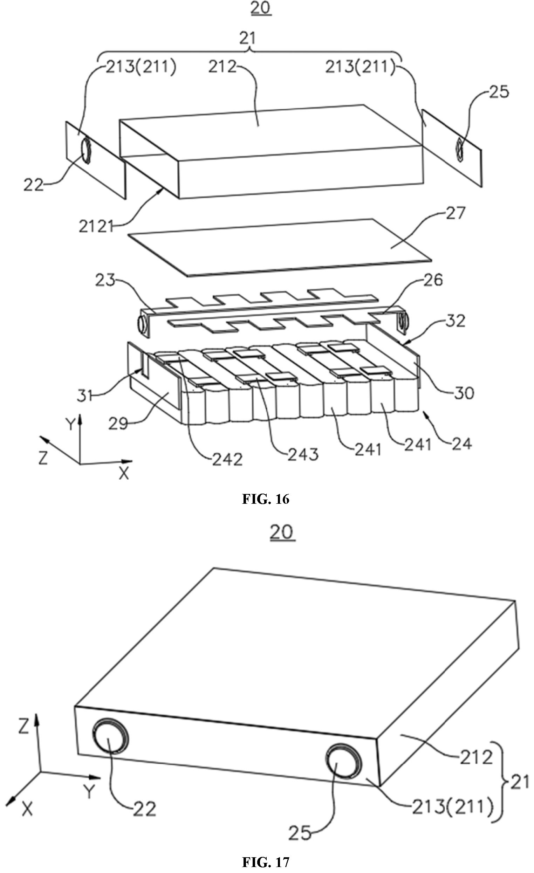

Of course, the structure of the battery cell 20 is not limited thereto. In some embodiments, referring to FIG. 15 and FIG. 16, FIG. 15 is a schematic structural view of a battery cell 20 in other embodiments according to some other embodiments of the present application, and FIG. 16 is an exploded structural view of a battery cell 20 in other embodiments according to some other embodiments of the present application. The battery cell 20 may also be provided with two wall portions 211, the two wall portions 211 are respectively located on opposite sides of the plurality of electrode assemblies 24 in the first direction X, and the first electrode terminal 22 and the second electrode terminal 25 are respectively mounted on the two wall portions 211, so that the first electrode terminal 22 and the second electrode terminal 25 are respectively located on opposite sides of the plurality of electrode assemblies 24 in the first direction X. Correspondingly, the third connecting portion 233 of the first current collecting member 23 and the fourth connecting portion 263 of the second current collecting member 26 are respectively located on opposite sides of the plurality of electrode assemblies 24 in the first direction X.

The third connecting portion 233 is located on a side of the plurality of electrode assemblies 24 facing the wall portion 211 in the first direction X. That is, along the first direction X, the third connecting portion 233 and the wall portion 211 are arranged on the same side of the plurality of electrode assemblies 24. Exemplarily, in FIG. 11, the first current collecting member 23 is provided inside the shell 21, and correspondingly, the first connecting portion 232 of the first current collecting member 23 is provided between the wall portion 211 and the plurality of electrode assemblies 24 in the first direction X. Of course, in the embodiment where the first current collecting member 23 is provided outside the shell 21, the first connecting portion 232 of the first current collecting member 23 is located on a side of the wall portion 211 away from the plurality of electrode assemblies 24 in the first direction X.

The fourth connecting portion 263 is located on a side of the plurality of electrode assemblies 24 facing the wall portion 211 in the first direction X. That is, along the first direction X, the fourth connecting portion 263 and the wall portion 211 are arranged on the same side of the plurality of electrode assemblies 24. Exemplarily, in FIG. 11, the second current collecting member 26 is provided inside the shell 21, and correspondingly, the fourth connecting portion 263 of the second current collecting member 26 is provided between the wall portion 211 and the plurality of electrode assemblies 24 in the first direction X. Of course, in the embodiment where the second current collecting member 26 is provided outside the shell 21, the fourth connecting portion 263 of the second current collecting member 26 is located on a side of the wall portion 211 away from the plurality of electrode assemblies 24 in the first direction X.

It should be noted that the first connecting portion 232 and the third connecting portion 233 can be of an integral structure, that is, the first connecting portion 232 and the third connecting portion 233 are integrally formed, and the first connecting portion 232 and the third connecting portion 233 can be made by an integral forming process such as stamping or casting. Of course, the first connecting portion 232 and the third connecting portion 233 can also be of a split structure, that is, the first connecting portion 232 and the third connecting portion 233 are separately provided, and the first connecting portion 232 and the third connecting portion 233 can be connected by welding or bolting. Similarly, the second connecting portion 262 and the fourth connecting portion 263 can be an integral structure, that is, the second connecting portion 262 and the fourth connecting portion 263 are integrally formed, and the second connecting portion 262 and the fourth connecting portion 263 can be made by an integral forming process such as stamping or casting. Of course, the second connecting portion 262 and the fourth connecting portion 263 can also be a split structure, that is, the second connecting portion 262 and the fourth connecting portion 263 are separately provided, and the second connecting portion 262 and the fourth connecting portion 263 can be connected by welding or bolting.

The wall portion 211 of the shell 21 is located on at least one side of the plurality of electrode assemblies 24 in the first direction X, so that the wall portion 211 is provided in the same direction as the plurality of electrode assemblies 24, and the first current collecting member 23 has a third connecting portion 233 located on a side of the plurality of electrode assemblies 24 facing the wall portion 211 in the first direction X, the third connecting portion 233 and the first connecting portion 232 are connected to each other. The third connecting portion 233 is connected to the first electrode terminal 22 provided on the wall portion 211, and the first connecting portion 232 is connected to the first tab 242 of the plurality of electrode assemblies 24, so that the first tab 242 is electrically connected to the first electrode terminal 22 through the first current collecting member 23. For the battery cell 20 adopting such a structure, on the one hand, it can separate the region of the shell 21 provided with the first electrode terminal 22 from the region of the main body portion 241 provided with the first tab 242, so that the region of the shell 21 toward which a side of the main body portion 241 provided with the first tab 242 faces is not provided with the first electrode terminal 22, thereby facilitating stacking a plurality of battery cells 20 along the second direction Y. On the other hand, the region where the first current collecting member 23 is connected to the first electrode terminal 22 and the region where the first current collecting member 23 is connected to the first tab 242 can be separated from each other, which is conducive to reducing the assembly difficulty between the first current collecting member 23 and the first electrode terminal 22 and the first tab 242, and can reduce the interference between the first electrode terminal 22 and the first tab 242. Especially when the first electrode terminal 22 and the first tab 242 are both welded to the first current collecting member 23, the mutual influence between the weld pool of the first electrode terminal 22 and the first current collecting member 23 and the weld pool of the first tab 242 and the first current collecting member 23 can be effectively reduced, which is conducive to improving the assembly quality and stability of the first electrode terminal 22 and the first tab 242 connected to the first current collecting member 23. Similarly, the second current collecting member 26 has a fourth connecting portion 263 located on a side of the plurality of electrode assemblies 24 facing the wall portion 211 in the first direction X. The fourth connecting portion 263 is connected to the second electrode terminal 25 provided on the wall portion 211, and the second connecting portion 262 is connected to the second tab 243 of the plurality of electrode assemblies 24, so that the second tab 243 is electrically connected to the second electrode terminal 25 through the second current collecting member 26. For the battery cell 20 adopting such a structure, on the one hand, it can separate the region of the shell 21 where the second electrode terminal 25 is provided from the region of the main body portion 241 provided with the second tab 243, so that the region of the shell 21 toward which a side of the main body portion 241 provided with the second tab 243 faces is not provided with the second electrode terminal 25, thereby facilitating stacking a plurality of battery cells 20 along the second direction Y. On the other hand, the region where the second current collecting member 26 is connected to the second electrode terminal 25 and the region where the second current collecting member 26 is connected to the second tab 243 can be separated from each other, which is conducive to reducing the assembly difficulty between the second current collecting member 26 and the second electrode terminal 25 as well as the second tab 243, and can reduce the interference between the second electrode terminal 25 and the second tab 243. Especially when the second electrode terminal 25 and the second tab 243 are both welded to the second current collecting member 26, the mutual influence between the weld pool of the second electrode terminal 25 and the second current collecting member 26 and the weld pool of the second tab 243 and the second current collecting member 26 can be effectively reduced, which is conducive to improving the assembly quality and stability of the second electrode terminal 25 and the second tab 243 connected to the second current collecting member 26.

**In** some embodiments, referring to FIG. 11, FIG. 12, and FIG. 13, in the first direction X, a first protrusion 234 is provided on a side of the third connecting portion 233 facing the wall portion 211, and the first protrusion 234 is connected to the first electrode terminal 22.

Exemplarily, the first current collecting member 23 is provided inside the shell 21, and correspondingly, the first protrusion 234 is provided on a side of the third connecting portion 233 of the first current collecting member 23 away from the plurality of electrode assemblies 24. Of course, in the embodiment where the first current collecting member 23 is provided outside the shell 21, the third connecting portion 233 of the first current collecting member 23 is located on a side of the wall portion 211 away from the plurality of electrode assemblies 24, and the first protrusion 234 is provided on a side of the third connecting portion 233 of the first current collecting member 23 facing the plurality of electrode assemblies 24.

Exemplarily, the third connecting portion 233 of the first current collecting member 23 is welded to the first electrode terminal 22 through the first protrusion 234.

A first protrusion 234 is provided on a side of the third connecting portion 233 of the first current collecting member 23 facing the wall portion 211 in the first direction X, and the first protrusion 234 is connected to the first electrode terminal 22 to realize the electrical connection between the first current collecting member 23 and the first electrode terminal 22. The first current collecting member 23 adopting such a structure can reduce the assembly difficulty between the third connecting portion 233 of the first current collecting member 23 and the first electrode terminal 22, and the connection reliability between the third connecting portion 233 of the first current collecting member 23 and the first electrode terminal 22 can be improved through the structure where the first protrusion 234 is connected to the first electrode terminal 22.

In some embodiments, referring to FIG. 11, FIG. 12, and FIG. 14, along the first direction X, a second protrusion 264 is provided on a side of the fourth connecting portion 263 facing the wall portion 211, and the second protrusion 264 is connected to the second electrode terminal 25.

Exemplarily, the second current collecting member 26 is provided inside the shell 21, and correspondingly, the second protrusion 264 is provided on a side of the fourth connecting portion 263 of the second current collecting member 26 away from the plurality of electrode assemblies 24. Of course, in the embodiment where the second current collecting member 26 is provided outside the shell 21, the fourth connecting portion 263 of the second current collecting member 26 is located on a side of the wall portion 211 away from the plurality of electrode assemblies 24, and the second protrusion 264 is provided on a side of the fourth connecting portion 263 of the second current collecting member 26 facing the plurality of electrode assemblies 24.

Exemplarily, the fourth connecting portion 263 of the second current collecting member 26 is welded to the second electrode terminal 25 through the second protrusion 264.

A second protrusion 264 is provided on a side of the fourth connecting portion 263 of the second current collecting member 26 facing the wall portion 211 in the first direction X, and the second protrusion 264 is connected to the second electrode terminal 25 to realize the electrical connection between the second current collecting member 26 and the second electrode terminal 25. The second current collecting member 26 adopting such a structure can reduce the assembly difficulty between the fourth connecting portion 263 of the second current collecting member 26 and the second electrode terminal 25, and the connection reliability between the fourth connecting portion 263 of the second current collecting member 26 and the second electrode terminal 25 can be improved through the structure where the second protrusion 264 is connected to the second electrode terminal 25.

According to some embodiments of the present application, referring to FIG. 10 and FIG. 11, along the first direction X, the first electrode terminal 22 and the second electrode terminal 25 are both provided on the same side of the plurality of electrode assemblies 24, and the third connecting portion 233 and the fourth connecting portion 263 are both located on a side of the plurality of electrode assemblies 24 facing the first electrode terminal 22 and the second electrode terminal 25.

Along the first direction X, the first electrode terminal 22 and the second electrode terminal 25 are both provided on the same side of the plurality of electrode assemblies 24, that is, the shell 21 only comprises one wall portion 211, and the wall portion 211 is located on a side of the plurality of electrode assemblies 24 in the first direction X, and the first electrode terminal 22 and the second electrode terminal 25 are both mounted on the same wall portion 211.

Exemplarily, in FIG. 10 and FIG. 11, the first current collecting member 23 and the second current collecting member 26 are both provided inside the shell 21, and correspondingly, the third connecting portion 233 of the first current collecting member 23 and the fourth connecting portion 263 of the second current collecting member 26 are both located between the wall portion 211 and the plurality of electrode assemblies 24 in the first direction X. Of course, in the embodiment where the first current collecting member 23 and the second current collecting member 26 are both provided outside the shell 21, the third connecting portion 233 of the first current collecting member 23 and the fourth connecting portion 263 of the second current collecting member 26 are both located on a side of the wall portion 211 away from the electrode assemblies 24 in the first direction X.

By providing the first electrode terminal 22 and the second electrode terminal 25 on the same side of the plurality of electrode assemblies 24 in the first direction X, the first electrode terminal 22 and the second electrode terminal 25 are both mounted on the same wall portion 211, and the third connecting portion 233 of the first current collecting member 23 and the fourth connecting portion 263 of the second current collecting member 26 are both located on a side of the plurality of electrode assemblies 24 facing the first electrode terminal 22 and the second electrode terminal 25. On the one hand, it is convenient to connect the third connecting portion 233 of the first current collecting member 23 to the first electrode terminal 22, and to connect the fourth connecting portion 263 of the second current collecting member 26 to the second electrode terminal 25. On the other hand, the battery cell 20 is of a structure where the first electrode terminal 22 and the second electrode terminal 25 are provided at the same end in the first direction X, and the third connecting portion 233 and the fourth connecting portion 263 can share space in the first direction X, thereby improving the space utilization of the battery cell 20 and enhancing the energy density of the battery cell 20.

According to some embodiments of the present application, as shown in FIG. 11, the first current collecting member 23 and the second current collecting member 26 are both provided inside the shell 21, and the battery cell 20 may further comprise a third insulating member 29. The third insulating member 29 is provided between the third connecting portion 233 and the fourth connecting portion 263 and the plurality of electrode assemblies 24 along the first direction X to insulate and isolate the third connecting portion 233 from the electrode assembly 24 and the fourth connecting portion 263 from the electrode assembly 24.

The third connecting portion 233 of the first current collecting member 23 and the fourth connecting portion 263 of the second current collecting member 26 are both located on the same side of the plurality of electrode assemblies 24 facing the wall portion 211 in the first direction X, so that the third connecting portion 233 of the first current collecting member 23 and the fourth connecting portion 263 of the second current collecting member 26 are both located between the third insulating member 29 and the wall portion 211 in the first direction X, so that the third insulating member 29 is located between the third connecting portion 233 and the plurality of electrode assemblies 24 and the fourth connecting portion 263 and the plurality of electrode assemblies 24.

Exemplarily, the third insulating member 29 may be made of a variety of materials, such as rubber, plastic, or silicone.

The battery cell 20 is also provided with a third insulating member 29, and the third insulating member 29 is provided on a side of the third connecting portion 233 and the fourth connecting portion 263 facing the plurality of electrode assemblies 24, so that the third insulating member 29 is located between the third connecting portion and the fourth connecting portion 263 and the plurality of electrode assemblies 24. For the battery cell 20 adopting such a structure, it can, on the one hand, realize the insulation and isolation between the third connecting portion 233 and the electrode assembly 24 and between the fourth connecting portion 263 and the electrode assembly 24, which helps to reduce the risk of short circuit; on the other hand, it can realize that the third connecting portion 233 of the first current collecting member 23 and the fourth connecting portion 263 of the second current collecting member 26 share one third insulating member 29, which helps to optimize the assembly process of the battery cell 20 and can reduce the manufacturing cost of the battery cell 20.

In some embodiments, as shown in FIG. 11, along the first direction X, a first clamping groove 31 is provided on a side of the third insulating member 29 away from the electrode assembly 24, and the third connecting portion 233 is accommodated in the first clamping groove 31.

The first clamping groove 31 is provided on a side of the third insulating member 29 facing the wall portion 211 in the first direction X, so that the third connecting portion 233 of the first current collecting member 23 can be clamped in the first clamping groove 31.

Exemplarily, the thickness of the third connecting portion 233 in the first direction X is less than or equal to the depth of the first clamping groove 31 in the first direction X, so that the third connecting portion 233 does not extend out of the first clamping groove 31 in the first direction X.

By providing a first clamping groove 31 on a side of the third insulating member 29 away from the electrode assembly 24 along the first direction X, the third connecting portion 233 of the first current collecting member 23 can be accommodated in the first clamping groove 31, thereby improving the structural stability of the third insulating assembly between the third connecting portion 233 and the plurality of electrode assemblies 24, and the third insulating member 29 and the third connecting portion 233 can share space in the first direction X, which is conducive to improving the internal space utilization of the battery cell 20.

In some embodiments, continuing to refer to FIG. 11, along the first direction X, a second clamping groove 32 is provided on a side of the third insulating member 29 away from the electrode assembly 24, and the fourth connecting portion 263 is accommodated in the second clamping groove 32.

The second clamping groove 32 is provided on a side of the third insulating member 29 facing the wall portion 211 in the first direction X, so that the fourth connecting portion 263 of the second current collecting member 26 can be clamped in the second clamping groove 32.

Exemplarily, the thickness of the fourth connecting portion 263 in the first direction X is less than or equal to the depth of the second clamping groove 32 in the first direction X, so that the fourth connecting portion 263 does not extend out of the second clamping groove 32 in the first direction X.

It should be noted that in the embodiment where the third connecting portion 233 of the first current collecting member 23 and the fourth connecting portion 263 of the second current collecting member 26 are both located on the same side of the plurality of electrode assemblies 24 in the first direction X, the first clamping groove 31 and the second clamping groove 32 are both located on the same side of the third insulating member 29 in the first direction X.

By providing a second clamping groove 32 on a side of the third insulating member 29 away from the electrode assembly 24 along the first direction X, the fourth connecting portion 263 of the second current collecting member 26 can be accommodated in the second clamping groove 32, thereby improving the structural stability of the third insulating assembly between the fourth connecting portion 263 and the plurality of electrode assemblies 24, and the third insulating member 29 and the fourth connecting portion 263 can share space in the first direction X, which is conducive to improving the internal space utilization of the battery cell 20.

According to some embodiments of the present application, referring to FIG. 15 and FIG. 16, along the first direction X, the shell 21 has two wall portions 211 provided oppositely, the two wall portions 211 are respectively located on opposite sides of the plurality of electrode assemblies 24, and the first electrode terminal 22 and the second electrode terminal 25 are respectively provided on the two wall portions 211. The third connecting portion 233 is located on a side of the plurality of electrode assemblies 24 facing the first electrode terminal 22, and the fourth connecting portion 263 is located on a side of the plurality of electrode assemblies 24 facing the second electrode terminal 25.

Along the first direction X, the shell 21 has two wall portions 211 provided oppositely, and the two wall portions 211 are respectively located on opposite sides of the plurality of electrode assemblies 24, that is, the walls of the shell 21 located on opposite sides of the plurality of electrode assemblies 24 in the first direction X are all wall portions 211, and the first electrode terminal 22 and the second electrode terminal 25 are respectively mounted on the two wall portions 211, so that the first electrode terminal 22 and the second electrode terminal 25 are respectively located on opposite sides of the plurality of electrode assemblies 24 in the first direction X, and the third connecting portion 233 of the first current collecting member 23 and the fourth connecting portion 263 of the second current collecting member 26 are respectively located on opposite sides of the plurality of electrode assemblies 24 in the first direction X.

Exemplarily, in FIG. 15 and FIG. 16, the first current collecting member 23 and the second current collecting member 26 are both provided inside the shell 21, and correspondingly, the third connecting portion 233 of the first current collecting member 23 is located between the wall portion 211 provided with the first electrode terminal 22 and the plurality of electrode assemblies 24 in the first direction X, and the fourth connecting portion 263 of the second current collecting member 26 is located between the wall portion 211 provided with the second electrode terminal 25 and the plurality of electrode assemblies 24 in the first direction X. Of course, in the embodiment where the first current collecting member 23 and the second current collecting member 26 are both provided outside the shell 21, the third connecting portion 233 of the first current collecting member 23 is located on a side of the wall portion 211 provided with the first electrode terminal 22 away from the plurality of electrode assemblies 24 in the first direction X, and the fourth connecting portion 263 of the second current collecting member 26 is located on a side of the wall portion 211 provided with the second electrode terminal 25 away from the plurality of electrode assemblies 24 in the first direction X. That is to say, the third connecting portion 233 of the first current collecting member 23 and the fourth connecting portion 263 of the second current collecting member 26 are respectively located on opposite sides of the shell 21 in the first direction X.

The first electrode terminal 22 and the second electrode terminal 25 are respectively provided on the two wall portions 211 located on opposite sides of the plurality of electrode assemblies 24 in the first direction X, and the third connecting portion 233 of the first current collecting member 23 and the fourth connecting portion 263 of the second current collecting member 26 are respectively located on opposite sides of the plurality of electrode assemblies 24. On the one hand, it is convenient to connect the third connecting portion 233 of the first current collecting member 23 to the first electrode terminal 22, and to connect the fourth connecting portion 263 of the second current collecting member 26 to the second electrode terminal 25. On the other hand, it is possible to realize that the third connecting portion 233 of the first current collecting member 23 and the fourth connecting portion 263 of the second current collecting member 26 are away from each other, which is conducive to alleviating the interference between the third connecting portion 233 and the fourth connecting portion 263, and can reduce the risk of short circuit between the third connecting portion 233 and the fourth connecting portion 263, so as to improve the reliability of the battery cell 20.

According to some embodiments of the present application, as shown in FIG. 16, the first current collecting member 23 and the second current collecting member 26 are both provided inside the shell 21, the battery cell 20 may further comprise a third insulating member 29 and a fourth insulating member 30, and the third insulating member 29 and the fourth insulating member 30 are respectively provided on opposite sides of the plurality of electrode assemblies 24 along the first direction X, the third insulating member 29 is located between the third connecting portion 233 and the plurality of electrode assemblies 24 to insulate and isolate the third connecting portion 233 from the electrode assembly 24, and the fourth insulating member 30 is located between the fourth connecting portion 263 and the plurality of electrode assemblies 24 to insulate and isolate the fourth connecting portion 263 from the electrode assembly 24.

The third connecting portion 233 of the first current collecting member 23 and the fourth connecting portion 263 of the second current collecting member 26 are respectively located on opposite sides of the plurality of electrode assemblies 24 in the first direction X, so that the third connecting portion 233 of the first current collecting member 23 is located between the third insulating member 29 and the wall portion 211 provided with the first electrode terminal 22 in the first direction X, and the third insulating member 29 is located between the third connecting portion 233 and the plurality of electrode assemblies 24. Likewise, the fourth connecting portion 263 of the second current collecting member 26 is located between the fourth insulating member 30 and the wall portion 211 provided with the second electrode terminal 25 in the first direction X so that the fourth insulating member 30 is located between the fourth connecting portion 263 and the plurality of electrode assemblies 24.

Exemplarily, the third insulating member 29 may be made of a variety of materials, such as rubber, plastic, or silicone. Similarly, the fourth insulating member 30 may also be made of a variety of materials, such as rubber, plastic, or silicone.

The battery cell 20 is also provided with a third insulating member 29 and a fourth insulating member 30, and the third insulating member 29 and the fourth insulating member 30 are respectively provided on opposite sides of the plurality of electrode assemblies 24 in the first direction X, so that the third insulating member 29 is located between the third connecting portion 233 and the plurality of electrode assemblies 24, and the fourth insulating member 30 is located between the fourth connecting portion 263 and the plurality of electrode assemblies 24, thereby achieving insulation and isolation between the third connecting portion 233 and the electrode assembly 24 and between the fourth connecting portion 263 and the electrode assembly 24, which helps to reduce the risk of short circuit of the battery cell 20 and improve the reliability of the battery cell 20.

In some embodiments, as shown in FIG. 16, along the first direction X, a first clamping groove 31 is provided on a side of the third insulating member 29 away from the electrode assembly 24, and the third connecting portion 233 is accommodated in the first clamping groove 31.

The first clamping groove 31 is provided on a side of the third insulating member 29 facing the wall portion 211 provided with the first electrode terminal 22 in the first direction X, so that the third connecting portion 233 of the first current collecting member 23 can be clamped in the first clamping groove 31.

Exemplarily, the thickness of the third connecting portion 233 in the first direction X is less than or equal to the depth of the first clamping groove 31 in the first direction X, so that the third connecting portion 233 does not extend out of the first clamping groove 31 in the first direction X.

By providing a first clamping groove 31 on a side of the third insulating member 29 away from the electrode assembly 24 along the first direction X, the third connecting portion 233 of the first current collecting member 23 can be accommodated in the first clamping groove 31, thereby improving the structural stability of the third insulating assembly between the third connecting portion 233 and the plurality of electrode assemblies 24, and the third insulating member 29 and the third connecting portion 233 can share space in the first direction X, which is conducive to improving the internal space utilization of the battery cell 20.

In some embodiments, continuing to refer to FIG. 16, along the first direction X, a second clamping groove 32 is provided on a side of the fourth insulating member 30 away from the electrode assembly 24, and the fourth connecting portion 263 is accommodated in the second clamping groove 32.

The second clamping groove 32 is provided on a side of the fourth insulating member 30 facing the wall portion 211 provided with the second electrode terminal 25 in the first direction X, so that the fourth connecting portion 263 of the second current collecting member 26 can be clamped in the second clamping groove 32.

Exemplarily, the thickness of the fourth connecting portion 263 in the first direction X is less than or equal to the depth of the second clamping groove 32 in the first direction X, so that the fourth connecting portion 263 does not extend out of the second clamping groove 32 in the first direction X.

By providing a second clamping groove 32 on a side of the fourth insulating member 30 away from the electrode assembly 24 along the first direction X, the fourth connecting portion 263 of the second current collecting member 26 can be accommodated in the second clamping groove 32, thereby improving the structural stability of the fourth insulating assembly between the fourth connecting portion 263 and the plurality of electrode assemblies 24, and the fourth insulating member 30 and the fourth connecting portion 263 can share space in the first direction X, which is conducive to improving the internal space utilization of the battery cell 20.

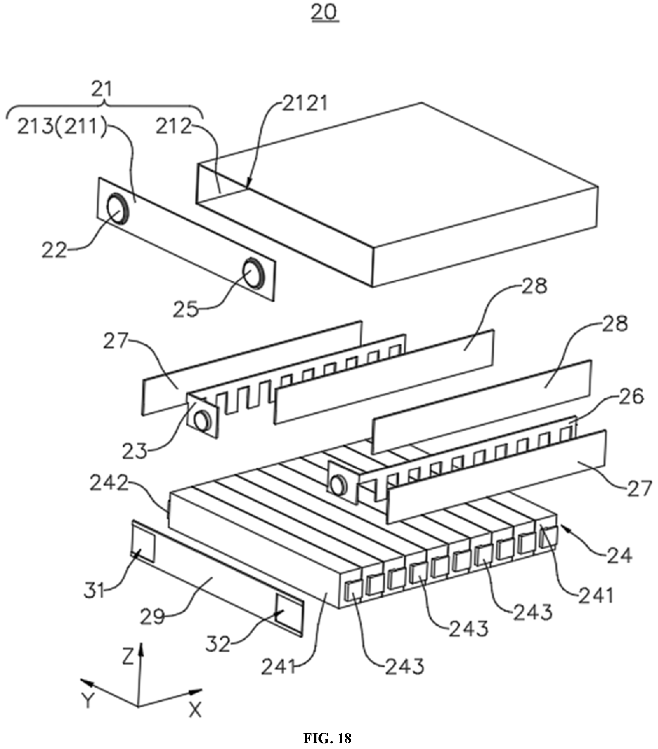

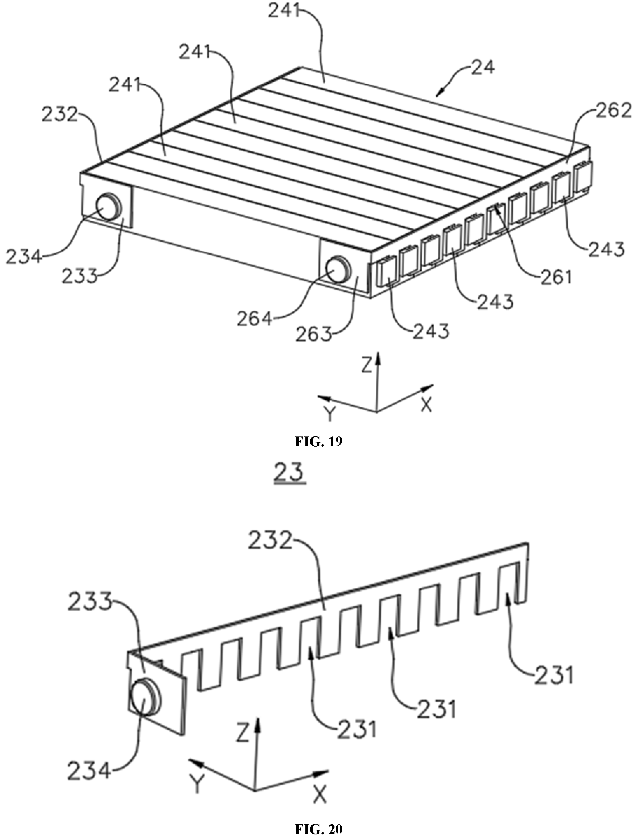

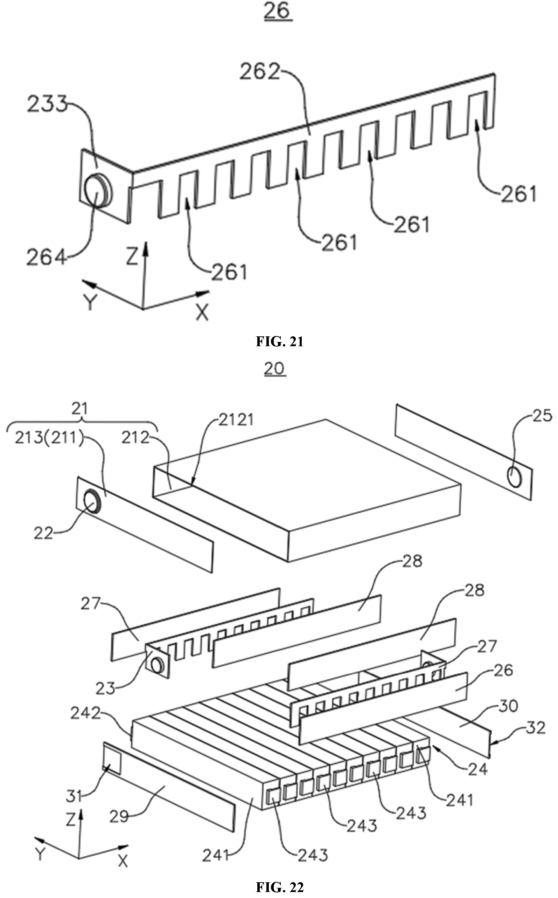

According to some embodiments of the present application, referring to FIG. 17, FIG. 18, FIG. 19, FIG. 20 and FIG. 21, FIG. 17 is a schematic structural view of a battery cell 20 according to some further embodiments of the present application, FIG. 18 is an exploded structural view of a battery cell 20 according to some further embodiments of the present application, FIG. 19 is a schematic view showing assembling of a first current collecting member 23 and an electrode assembly 24 in a battery cell 20 according to some further embodiments of the present application, FIG. 20 is a schematic structural view of a first current collecting member 23 in a battery cell 20 according to some further embodiments of the present application, and FIG. 21 is a schematic structural view of a second current collecting member 26 in a battery cell 20 according to some further embodiments of the present application. Along the second direction Y, the first tab 242 and the second tab 243 are respectively provided at opposite ends of the main body portion 241. The first current collecting member 23 comprises a first connecting portion 232 electrically connecting each of the first tabs 242, the first connecting portion 232 is located on a side of the main body portion 241 provided with the first tab 242 in the second direction Y, the second current collecting member 26 comprises a second connecting portion 262 electrically connecting each of the second tabs 243, and the second connecting portion 262 is located on a side of the main body portion 241 provided with the second tab 243 in the second direction Y.

The first current collecting member 23 comprises a first connecting portion 232, the first connecting portion 232 is a part of the first current collecting member 23 that is located on a side of the main body portion 241 provided with the first tab 242 in the second direction Y and the first connecting portion 232 serves to connect the first tabs 242 of the plurality of electrode assemblies 24. Similarly, the second current collecting member 26 comprises a second connecting portion 262, the second connecting portion 262 is a part of the second current collecting member 26 that is located on a side of the main body portion 241 provided with the second tab 243 in the second direction Y, and the second connecting portion 262 serves to connect the second tabs 243 of the plurality of electrode assemblies 24. Since the first tab 242 and the second tab 243 are respectively provided at opposite ends of the main body portion 241 in the second direction Y, the first connecting portion 232 of the first current collecting member 23 and the second connecting portion 262 of the second current collecting member 26 are respectively located at opposite ends of the main body portion 241 in the second direction Y.

Exemplarily, in FIG. 18, the first current collecting member 23 and the second current collecting member 26 are both provided inside the shell 21, so that the first connecting portion 232 of the first current collecting member 23 is located between a side of the main body portion 241 provided with the first tab 242 and the shell 21 in the second direction Y, and the second connecting portion 262 of the second current collecting member 26 is located between a side of the main body portion 241 provided with the second tab 243 and the shell 21 in the second direction Y, so that the main body portion 241 is located between the first connecting portion 232 of the first current collecting member 23 and the second connecting portion 262 of the second current collecting member 26 in the second direction Y.

It should be noted that in the embodiment where the first tab 242 and the second tab 243 are respectively provided at opposite ends of the main body portion 241 in the second direction Y, the structure of the battery cell 20 can be various. For example, in FIG. 17 and FIG. 18, the wall portion 211 can be located on a side of the plurality of electrode assemblies 24 in the first direction X, and the first electrode terminal 22 and the second electrode terminal 25 are both mounted on the same wall portion 211. Of course, the battery cell 20 may also be of other structures. Referring to FIG. 22, FIG. 22 is an exploded structural view of a battery cell 20 in other embodiments according to some further embodiments of the present application. The battery cell 20 may also comprise two wall portions 211, and the two wall portions 211 are respectively located on opposite sides of the plurality of electrode assemblies 24 in the first direction X, and the first electrode terminal 22 and the second electrode terminal 25 are respectively mounted on the two wall portions 211. In other embodiments, it is also possible that in the battery cell 20, the two wall portions 211 are respectively located on opposite sides of the plurality of electrode assemblies 24 in the second direction Y, the first electrode terminal 22 is mounted on the wall portion 211 among the two wall portions 211 that faces the first tab 242 in the second direction Y, and the second electrode terminal 25 is mounted on the wall portion 211 among the two wall portions 211 that faces the second tab 243 in the second direction Y. **In** these embodiments, the first current collecting member 23 may be entirely located on a side of the main body portion 241 provided with the first tab 242 in the second direction Y, and the second current collecting member 26 may be entirely located on a side of the main body portion 241 provided with the second tab 243 in the second direction Y.

By respectively providing the first tab 242 and the second tab 243 at opposite ends of the main body portion 241 in the second direction Y, and respectively providing the first connecting portion 232 of the first current collecting member 23 and the second connecting portion 262 of the second current collecting member 26 on opposite sides of the plurality of electrode assemblies 24 in the second direction Y, on the one hand, it is convenient for the first current collecting member 23 and the second current collecting member 26 to be connected to the first tab 242 and the second tab 243 respectively, which is conducive to alleviating the mutual interference between the first current collecting member 23 and the second current collecting member 26; on the other hand, the first tab 242 and the second tab 243 with opposite polarities can be kept away from each other, and the first connecting portion 232 of the first current collecting member 23 and the second connecting portion 262 of the second current collecting member 26 can be kept away from each other, which is conducive to reducing the risk of short circuit between the first tab 242 and the second tab 243 and between the first current collecting member 23 and the second current collecting member 26, so as to improve the reliability of the battery cell 20.

According to some embodiments of the present application, referring to FIG. 18 and FIG. 22, the first current collecting member 23 and the second current collecting member 26 are both provided inside the shell 21, the battery cell 20 may further comprise two first insulating members 27, the two first insulating members 27 are respectively provided on opposite sides of the plurality of electrode assemblies 24 along the second direction Y. One of the first insulating members 27 is located on a side of the first connecting portion 232 away from the main body portion 241 to insulate and isolate the first connecting portion 232 from the shell 21, and the other first insulating member 27 is located on a side of the second connecting portion 262 away from the main body portion 241 to insulate and isolate the second connecting portion 262 from the shell 21.

One of the first insulating member 27 is located on a side of the first connecting portion 232 away from the main body portion 241, and the other first insulating member 27 is located on a side of the second connecting portion 262 away from the main body portion 241, that is, the two first insulating members 27 are provided at intervals along the second direction Y, and the first connecting portion 232 of the first current collecting member 23, the main body portion 241 and the second connecting portion 262 of the second current collecting member 26 are provided in sequence between the two first insulating members 27 along the second direction Y.

Exemplarily, the first insulating member 27 may be made of a variety of materials, such as silicone, rubber or plastic.

The battery cell 20 is also provided with two first insulating members 27, and the two first insulating members 27 are respectively provided on a side of the first connecting portion 232 of the first current collecting member 23 away from the electrode assembly 24 and a side of the second connecting portion 262 of the second current collecting member 26 away from the electrode assembly 24, so that the first insulating member 27 is provided both between the first connecting portion 232 and the shell 21 and between the second connecting portion 262 and the shell 21, and as a result, the two first insulating members 27 can achieve insulation and isolation between the first connecting portion 232 and the shell 21 and between the second connecting portion 262 and the shell 21, respectively, which helps to reduce the risk of short circuit between the first current collecting member 23 and the second current collecting member 26 and the shell 21, so as to improve the reliability of the battery cell 20.

According to some embodiments of the present application, continuing to refer to FIG. 18 and FIG. 22, the first current collecting member 23 and the second current collecting member 26 are both provided inside the shell 21, the battery cell 20 may further comprise two second insulating members 28, the two second insulating members 28 are respectively provided on opposite sides of the plurality of electrode assemblies 24 along the second direction Y. One of the second insulating members 28 is located between the first connecting portion 232 and the main body portion 241 to insulate and isolate the first connecting portion 232 from the main body portion 241, and the other second insulating member 28 is located between the second connecting portion 262 and the main body portion 241 to insulate and isolate the second connecting portion 262 from the main body portion 241.

One of the second insulating member 28 is located between the first connecting portion 232 and the main body portion 241, and the other second insulating member 28 is located between the second connecting portion 262 and the main body portion 241, that is, the two second insulating members 28 are respectively provided on opposite sides of the main body portion 241 in the second direction Y, and the first connecting portion 232 of the first current collecting member 23 and the second connecting portion 262 of the second current collecting member 26 are respectively provided on opposite sides of the two second insulating members 28 along the second direction Y.

Exemplarily, the second insulating member 28 may be made of a variety of materials, such as plastic, silicone or rubber.

The battery cell 20 is also provided with two second insulating members 28, and the two second insulating members 28 are respectively provided on a side of the first connecting portion 232 facing the main body portion 241 and a side of the second connecting portion 262 facing the main body portion 241, so that the second insulating members 28 are provided both between the first connecting portion 232 and the main body portion 241 and between the second connecting portion 262 and the main body portion 241, and as a result, the insulation and isolation between the first connecting portion 232 and the main body portion 241 and between the second connecting portion 262 and the main body portion 241 can be achieved respectively through the two first insulating members 27, which helps to reduce the risk of short circuit between the first current collecting member 23 and the second current collecting member 26 and the main body portion 241 so as to improve the reliability of the battery cell 20.

According to some embodiments of the present application, referring to FIG. 17, FIG. 18, FIG. 19, FIG. 20 and FIG. 21, along the first direction X, the wall portion 211 is located on at least one side of the plurality of electrode assemblies 24. The first current collecting member 23 further comprises a third connecting portion 233 connected to the first connecting portion 232. The third connecting portion 233 is located on a side of the plurality of electrode assemblies 24 facing the wall portion 211 in the first direction X. The third connecting portion 233 is connected to the first electrode terminal 22. The second current collecting member 26 further comprises a fourth connecting portion 263 connected to the second connecting portion 262. The fourth connecting portion 263 is located on a side of the plurality of electrode assemblies 24 facing the wall portion 211 in the first direction X. The fourth connecting portion 263 is connected to the second electrode terminal 25.

Along the first direction X, the wall portion 211 is located on at least one side of the plurality of electrode assemblies 24, that is, the wall of the shell 21 located on a side of the plurality of electrode assemblies 24 in the first direction X is the wall portion 211, so that the first electrode terminal 22 is located on a side of the plurality of electrode assemblies 24 in the first direction X, and the second electrode terminal 25 is located on a side of the plurality of electrode assemblies 24 in the first direction X.

Exemplarily, in FIG. 18 and FIG. 19, the battery cell 20 is provided with only one wall portion 211, and the first electrode terminal 22 and the second electrode terminal 25 are both mounted on the one wall portion 211, so that the third connecting portion 233 of the first current collecting member 23 and the fourth connecting portion 263 of the second current collecting member 26 are both located on a side of the plurality of electrode assemblies 24 facing the wall portion 211 in the first direction X.

Of course, the structure of the battery cell 20 is not limited thereto. In some embodiments, as shown in FIG. 22, the battery cell 20 may also be provided with two wall portions 211, the two wall portions 211 are respectively located on opposite sides of the plurality of electrode assemblies 24 in the first direction X, and the first electrode terminal 22 and the second electrode terminal 25 are respectively mounted on the two wall portions 211, so that the first electrode terminal 22 and the second electrode terminal 25 are respectively located on opposite sides of the plurality of electrode assemblies 24 in the first direction X. Correspondingly, the third connecting portion 233 of the first current collecting member 23 and the fourth connecting portion 263 of the second current collecting member 26 are respectively located on opposite sides of the plurality of electrode assemblies 24 in the first direction X.

Exemplarily, the third connecting portion 233 of the first current collecting member 23 and the fourth connecting portion 263 of the second current collecting member 26 are both provided on the same side of the plurality of electrode assemblies 24 in the first direction X and are both located between the wall portion 211 and the plurality of electrode assemblies 24.

The wall portion 211 of the shell 21 is located on at least one side of the plurality of electrode assemblies 24 in the first direction X, so that the wall portion 211 is provided in the same direction as the plurality of electrode assemblies 24, and the first current collecting member 23 has a third connecting portion 233 located on a side of the plurality of electrode assemblies 24 facing the wall portion 211 in the first direction X, the third connecting portion 233 and the first connecting portion 232 are connected to each other. The third connecting portion 233 is connected to the first electrode terminal 22 provided on the wall portion 211, and the first connecting portion 232 is connected to the first tab 242 of the plurality of electrode assemblies 24, so that the first tab 242 is electrically connected to the first electrode terminal 22 through the first current collecting member 23. For the battery cell 20 adopting such a structure, on the one hand, it can separate the region of the shell 21 provided with the first electrode terminal 22 from the region of the main body portion 241 provided with the first tab 242, so that the region of the shell 21 toward which a side of the main body portion 241 provided with the first tab 242 faces is not provided with the first electrode terminal 22, thereby facilitating stacking a plurality of battery cells 20 along the second direction Y. On the other hand, the region where the first current collecting member 23 is connected to the first electrode terminal 22 and the region where the first current collecting member 23 is connected to the first tab 242 can be separated from each other, which is conducive to reducing the assembly difficulty between the first current collecting member 23 and the first electrode terminal 22 and the first tab 242, and can reduce the interference between the first electrode terminal 22 and the first tab 242. Especially when the first electrode terminal 22 and the first tab 242 are both welded to the first current collecting member 23, the mutual influence between the weld pool of the first electrode terminal 22 and the first current collecting member 23 and the weld pool of the first tab 242 and the first current collecting member 23 can be effectively reduced, which is conducive to improving the assembly quality and stability of the first electrode terminal 22 and the first tab 242 connected to the first current collecting member 23. Similarly, the second current collecting member 26 has a fourth connecting portion 263 located on a side of the plurality of electrode assemblies 24 facing the wall portion 211 in the first direction X. The fourth connecting portion 263 is connected to the second electrode terminal 25 provided on the wall portion 211, and the second connecting portion 262 is connected to the second tab 243 of the plurality of electrode assemblies 24, so that the second tab 243 is electrically connected to the second electrode terminal 25 through the second current collecting member 26. For the battery cell 20 adopting such a structure, on the one hand, it can separate the region of the shell 21 where the second electrode terminal 25 is provided from the region of the main body portion 241 provided with the second tab 243, so that the region of the shell 21 toward which a side of the main body portion 241 provided with the second tab 243 faces is not provided with the second electrode terminal 25, thereby facilitating stacking a plurality of battery cells 20 along the second direction Y. On the other hand, the region where the second current collecting member 26 is connected to the second electrode terminal 25 and the region where the second current collecting member 26 is connected to the second tab 243 can be separated from each other, which is conducive to reducing the assembly difficulty between the second current collecting member 26 and the second electrode terminal 25 as well as the second tab 243, and can reduce the interference between the second electrode terminal 25 and the second tab 243. Especially when the second electrode terminal 25 and the second tab 243 are both welded to the second current collecting member 26, the mutual influence between the weld pool of the second electrode terminal 25 and the second current collecting member 26 and the weld pool of the second tab 243 and the second current collecting member 26 can be effectively reduced, which is conducive to improving the assembly quality and stability of the second electrode terminal 25 and the second tab 243 connected to the second current collecting member 26.

In some embodiments, referring to FIG. 18, FIG. 19, and FIG. 20, in the first direction X, a first protrusion 234 is provided on a side of the third connecting portion 233 facing the wall portion 211, and the first protrusion 234 is connected to the first electrode terminal 22.

Exemplarily, the first current collecting member 23 is provided inside the shell 21, the first protrusion 234 is provided on a side of the third connecting portion 233 of the first current collecting member 23 away from the plurality of electrode assemblies 24, and the third connecting portion 233 of the first current collecting member 23 is welded to the first electrode terminal 22 through the first protrusion 234.

A first protrusion 234 is provided on a side of the third connecting portion 233 of the first current collecting member 23 facing the wall portion 211 in the first direction X, and the first protrusion 234 is connected to the first electrode terminal 22 to realize the electrical connection between the first current collecting member 23 and the first electrode terminal 22. The first current collecting member 23 adopting such a structure can reduce the assembly difficulty between the third connecting portion 233 of the first current collecting member 23 and the first electrode terminal 22, and the connection reliability between the third connecting portion 233 of the first current collecting member 23 and the first electrode terminal 22 can be improved through the structure where the first protrusion 234 is connected to the first electrode terminal 22.

In some embodiments, referring to FIG. 18, FIG. 19, and FIG. 21, in the first direction X, a second protrusion 264 is provided on a side of the fourth connecting portion 263 facing the wall portion 211, and the second protrusion 264 is connected to the second electrode terminal 25.

Exemplarily, the second current collecting member 26 is provided inside the shell 21, the second protrusion 264 is provided on a side of the fourth connecting portion 263 of the second current collecting member 26 away from the plurality of electrode assemblies 24, and the fourth connecting portion 263 of the second current collecting member 26 is welded to the second electrode terminal 25 through the second protrusion 264.

A second protrusion 264 is provided on a side of the fourth connecting portion 263 of the second current collecting member 26 facing the wall portion 211 in the first direction X, and the second protrusion 264 is connected to the second electrode terminal 25 to realize the electrical connection between the second current collecting member 26 and the second electrode terminal 25. The second current collecting member 26 adopting such a structure can reduce the assembly difficulty between the fourth connecting portion 263 of the second current collecting member 26 and the second electrode terminal 25, and the connection reliability between the fourth connecting portion 263 of the second current collecting member 26 and the second electrode terminal 25 can be improved through the structure where the second protrusion 264 is connected to the second electrode terminal 25.

According to some embodiments of the present application, referring to FIG. 17, FIG. 18 and FIG. 19, along the first direction X, the first electrode terminal 22 and the second electrode terminal 25 are both provided on the same side of the plurality of electrode assemblies 24, and the third connecting portion 233 and the fourth connecting portion 263 are both located on a side of the plurality of electrode assemblies 24 facing the first electrode terminal 22 and the second electrode terminal 25.

Along the first direction X, the first electrode terminal 22 and the second electrode terminal 25 are both provided on the same side of the plurality of electrode assemblies 24, that is, the shell 21 only comprises one wall portion 211, and the wall portion 211 is located on a side of the plurality of electrode assemblies 24 in the first direction X, and the first electrode terminal 22 and the second electrode terminal 25 are both mounted on the same wall portion 211.

Exemplarily, in FIG. 18, the first current collecting member 23 and the second current collecting member 26 are both provided inside the shell 21, and correspondingly, the third connecting portion 233 of the first current collecting member 23 and the fourth connecting portion 263 of the second current collecting member 26 are both located between the wall portion 211 and the plurality of electrode assemblies 24 in the first direction X.

By providing the first electrode terminal 22 and the second electrode terminal 25 on the same side of the plurality of electrode assemblies 24 in the first direction X, the first electrode terminal 22 and the second electrode terminal 25 are both mounted on the same wall portion 211, and the third connecting portion 233 of the first current collecting member 23 and the fourth connecting portion 263 of the second current collecting member 26 are both located on a side of the plurality of electrode assemblies 24 facing the first electrode terminal 22 and the second electrode terminal 25. On the one hand, it is convenient to connect the third connecting portion 233 of the first current collecting member 23 to the first electrode terminal 22, and to connect the fourth connecting portion 263 of the second current collecting member 26 to the second electrode terminal 25. On the other hand, the battery cell 20 is of a structure where the first electrode terminal 22 and the second electrode terminal 25 are provided at the same end in the first direction X, and the third connecting portion 233 and the fourth connecting portion 263 can share space in the first direction X, thereby improving the space utilization of the battery cell 20 and enhancing the energy density of the battery cell 20.

According to some embodiments of the present application, as shown in FIG. 18, the first current collecting member 23 and the second current collecting member 26 are both provided inside the shell 21, and the battery cell 20 may further comprise a third insulating member 29. The third insulating member 29 is provided between the third connecting portion 233 and the fourth connecting portion 263 and the plurality of electrode assemblies 24 along the first direction X to insulate and isolate the third connecting portion 233 from the electrode assembly 24 and the fourth connecting portion 263 from the electrode assembly 24.

The third connecting portion 233 of the first current collecting member 23 and the fourth connecting portion 263 of the second current collecting member 26 are both located on the side of the third insulating member 29 away from the plurality of electrode assemblies 24 in the first direction X.

Exemplarily, the third insulating member 29 may be made of a variety of materials, such as plastic, rubber or silicone.

The battery cell 20 is also provided with a third insulating member 29, and the third insulating member 29 is provided on a side of the third connecting portion 233 and the fourth connecting portion 263 facing the plurality of electrode assemblies 24, so that the third insulating member 29 is located between the third connecting portion and the fourth connecting portion 263 and the plurality of electrode assemblies 24. For the battery cell 20 adopting such a structure, it can, on the one hand, realize the insulation and isolation between the third connecting portion 233 and the electrode assembly 24 and between the fourth connecting portion 263 and the electrode assembly 24, which helps to reduce the risk of short circuit; on the other hand, it can realize that the third connecting portion 233 of the first current collecting member 23 and the fourth connecting portion 263 of the second current collecting member 26 share one third insulating member 29, which helps to optimize the assembly process of the battery cell 20 and can reduce the manufacturing cost of the battery cell 20.

In some embodiments, as shown in FIG. 18, along the first direction X, a first clamping groove 31 is provided on a side of the third insulating member 29 away from the electrode assembly 24, and the third connecting portion 233 is accommodated in the first clamping groove 31.

By providing a first clamping groove 31 on a side of the third insulating member 29 away from the electrode assembly 24 along the first direction X, the third connecting portion 233 of the first current collecting member 23 can be accommodated in the first clamping groove 31, thereby improving the structural stability of the third insulating assembly between the third connecting portion 233 and the plurality of electrode assemblies 24, and the third insulating member 29 and the third connecting portion 233 can share space in the first direction X, which is conducive to improving the internal space utilization of the battery cell 20.

In some embodiments, continuing to refer to FIG. 18, along the first direction X, a second clamping groove 32 is provided on a side of the third insulating member 29 away from the electrode assembly 24, and the fourth connecting portion 263 is accommodated in the second clamping groove 32.

By providing a second clamping groove 32 on a side of the third insulating member 29 away from the electrode assembly 24 along the first direction X, the fourth connecting portion 263 of the second current collecting member 26 can be accommodated in the second clamping groove 32, thereby improving the structural stability of the third insulating assembly between the fourth connecting portion 263 and the plurality of electrode assemblies 24, and the third insulating member 29 and the fourth connecting portion 263 can share space in the first direction X, which is conducive to improving the internal space utilization of the battery cell 20.

According to some embodiments of the present application, referring to FIG. 22, along the first direction X, the shell 21 has two wall portions 211 provided oppositely, the two wall portions 211 are respectively located on opposite sides of the plurality of electrode assemblies 24, and the first electrode terminal 22 and the second electrode terminal 25 are respectively provided on the two wall portions 211. The third connecting portion 233 is located on a side of the plurality of electrode assemblies 24 facing the first electrode terminal 22, and the fourth connecting portion 263 is located on a side of the plurality of electrode assemblies 24 facing the second electrode terminal 25.

Along the first direction X, the shell 21 has two wall portions 211 provided oppositely, and the two wall portions 211 are respectively located on opposite sides of the plurality of electrode assemblies 24, that is, the walls of the shell 21 located on opposite sides of the plurality of electrode assemblies 24 in the first direction X are all wall portions 211, and the first electrode terminal 22 and the second electrode terminal 25 are respectively mounted on the two wall portions 211, so that the first electrode terminal 22 and the second electrode terminal 25 are respectively located on opposite sides of the plurality of electrode assemblies 24 in the first direction X.

Exemplarily, in FIG. 22, the first current collecting member 23 and the second current collecting member 26 are both provided inside the shell 21, and correspondingly, the third connecting portion 233 of the first current collecting member 23 is located between the plurality of electrode assemblies 24 and the wall portion 211 provided with the first electrode terminal 22 in the first direction X, and the fourth connecting portion 263 of the second current collecting member 26 is located between the plurality of electrode assemblies 24 and the wall portion 211 provided with the second electrode terminal 25 in the first direction X.

The first electrode terminal 22 and the second electrode terminal 25 are respectively provided on the two wall portions 211 located on opposite sides of the plurality of electrode assemblies 24 in the first direction X, and the third connecting portion 233 of the first current collecting member 23 and the fourth connecting portion 263 of the second current collecting member 26 are respectively located on opposite sides of the plurality of electrode assemblies 24. On the one hand, it is convenient to connect the third connecting portion 233 of the first current collecting member 23 to the first electrode terminal 22, and to connect the fourth connecting portion 263 of the second current collecting member 26 to the second electrode terminal 25. On the other hand, it is possible to realize that the third connecting portion 233 of the first current collecting member 23 and the fourth connecting portion 263 of the second current collecting member 26 are away from each other, which is conducive to reducing the risk of short circuit between the third connecting portion 233 and the fourth connecting portion 263, so as to improve the reliability of the battery cell 20.

According to some embodiments of the present application, as shown in FIG. 22, the first current collecting member 23 and the second current collecting member 26 are both provided inside the shell 21, the battery cell 20 may further comprise a third insulating member 29 and a fourth insulating member 30, and the third insulating member 29 and the fourth insulating member 30 are respectively provided on opposite sides of the plurality of electrode assemblies 24 along the first direction X, the third insulating member 29 is located between the third connecting portion 233 and the plurality of electrode assemblies 24 to insulate and isolate the third connecting portion 233 from the electrode assembly 24, and the fourth insulating member 30 is located between the fourth connecting portion 263 and the plurality of electrode assemblies 24 to insulate and isolate the fourth connecting portion 263 from the electrode assembly 24.

The third connecting portion 233 of the first current collecting member 23 is located on a side of the third insulating member 29 away from the plurality of electrode assemblies 24 in the first direction X, so as to insulate and isolate the third connecting portion 233 from the electrode assemblies 24 by the third insulating member 29. Similarly, the fourth connecting portion 263 of the second current collecting member 26 is located on a side of the fourth insulating member 30 away from the plurality of electrode assemblies 24 in the first direction X, so as to insulate and isolate the fourth connecting portion 263 from the electrode assemblies 24 by the fourth insulating member 30.

Exemplarily, the third insulating member 29 may be made of a variety of materials, such as silicone, rubber or plastic. Similarly, the fourth insulating member 30 may also be made of a variety of materials, such as silicone, rubber or plastic.

The battery cell 20 is also provided with a third insulating member 29 and a fourth insulating member 30, and the third insulating member 29 and the fourth insulating member 30 are respectively provided on opposite sides of the plurality of electrode assemblies 24 in the first direction X, so that the third insulating member 29 is located between the third connecting portion 233 and the plurality of electrode assemblies 24, and the fourth insulating member 30 is located between the fourth connecting portion 263 and the plurality of electrode assemblies 24, thereby achieving insulation and isolation between the third connecting portion 233 and the electrode assembly 24 and between the fourth connecting portion 263 and the electrode assembly 24, which helps to reduce the risk of short circuit of the battery cell 20 and improve the reliability of the battery cell 20.

In some embodiments, as shown in FIG. 22, along the first direction X, a first clamping groove 31 is provided on a side of the third insulating member 29 away from the electrode assembly 24, and the third connecting portion 233 is accommodated in the first clamping groove 31.

By providing a first clamping groove 31 on a side of the third insulating member 29 away from the electrode assembly 24 along the first direction X, the third connecting portion 233 of the first current collecting member 23 can be accommodated in the first clamping groove 31, thereby improving the structural stability of the third insulating assembly between the third connecting portion 233 and the plurality of electrode assemblies 24, and the third insulating member 29 and the third connecting portion 233 can share space in the first direction X, which is conducive to improving the internal space utilization of the battery cell 20.

In some embodiments, continuing to refer to FIG. 22, along the first direction X, a second clamping groove 32 is provided on a side of the fourth insulating member 30 away from the electrode assembly 24, and the fourth connecting portion 263 is accommodated in the second clamping groove 32.

By providing a second clamping groove 32 on a side of the fourth insulating member 30 away from the electrode assembly 24 along the first direction X, the fourth connecting portion 263 of the second current collecting member 26 can be accommodated in the second clamping groove 32, thereby improving the structural stability of the fourth insulating assembly between the fourth connecting portion 263 and the plurality of electrode assemblies 24, and the fourth insulating member 30 and the fourth connecting portion 263 can share space in the first direction X, which is conducive to improving the internal space utilization of the battery cell 20.

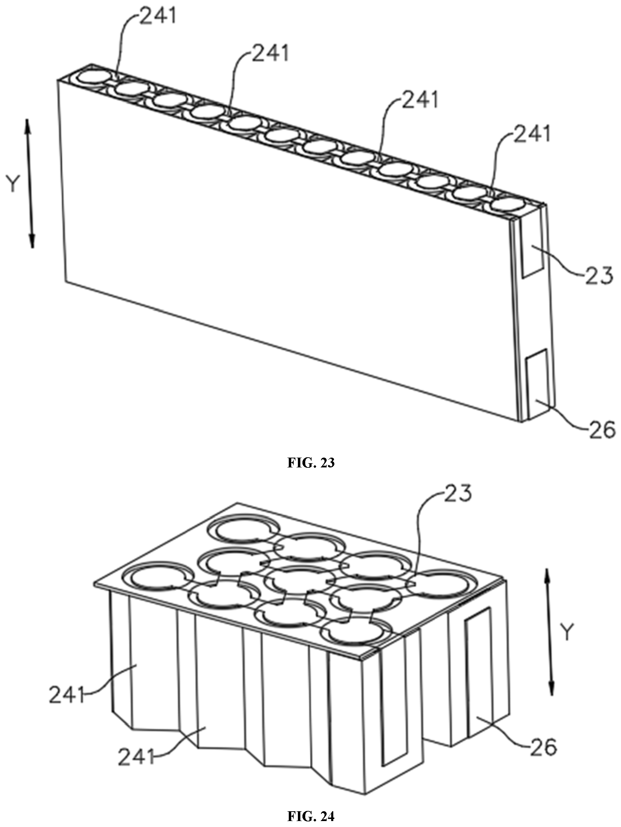

It should be noted that in the embodiment where the first tab 242 and the second tab 243 are respectively provided at opposite ends of the main body portion 241 along the second direction Y, the shape of the main body portion 241 of the electrode assembly 24 can be various. For example, as shown in FIG. 18 and FIG. 22, the main body portion 241 of the electrode assembly 24 is of a cuboid structure, and the first tab 242 and the second tab 243 are respectively connected to opposite ends of the main body portion 241 in the second direction Y. Of course, the structure of the battery cell 20 is not limited thereto. Referring to FIG. 23, FIG. 23 is a schematic view showing assembling of a first current collecting member 23 and an electrode assembly 24 in a battery cell 20 according to yet some other embodiments of the present application. The main body portion 241 of the electrode assembly 24 is cylindrical, and the first tab 242 and the second tab 243 are respectively connected to opposite ends of the main body portion 241 in the second direction Y. For another example, referring to FIG. 24, FIG. 24 is a schematic view showing assembling of a first current collecting member 23 and an electrode assembly 24 in a battery cell 20 according to still some other embodiments of the present application. The main body portion 241 of the electrode assembly 24 has a shape of polygon prism, and the first tab 242 and the second tab 243 are respectively connected to opposite ends of the main body portion 241 in the second direction Y.

In some embodiments, along the first direction X, a buffer member (not shown) is provided between two adjacent electrode assemblies 24. That is, among the plurality of electrode assemblies 24 provided along the first direction X, two adjacent electrode assemblies 24 are isolated by a buffer member.

Exemplarily, the buffer member can be of various types, such as foam, silicone pads or rubber pads.

A buffer member is provided between two adjacent electrode assemblies 24 in the first direction X, so that the buffer member can play a buffering role between the two adjacent electrode assemblies 24 to allow the buffer member to absorb the expansion force and collision force between the plurality of electrode assemblies 24, thereby effectively alleviating collision between the two adjacent electrode assemblies 24, and effectively alleviating mutual extrusion due to expansion of the two adjacent electrode assemblies 24, which can effectively improve the reliability and service life of the battery cell 20.

According to some embodiments of the present application, referring to FIG. 3 and FIG. 4, FIG. 10 and FIG. 11, FIG. 15 and FIG. 16, FIG. 17 and FIG. 18, and FIG. 22, the battery cell 20 comprises N electrode assemblies 24 stacked along the first direction X, with N≥5.

Exemplarily, the number of the electrode assemblies 24 stacked along the first direction X inside the shell 21 of the battery cell 20 may be five, six, seven, eight, nine, or the like.

It should be noted that, in some embodiments, the battery cell 20 may also comprise multiple rows of electrode assemblies 24 provided along the third direction Z, each row of electrode assemblies 24 comprises a plurality of electrode assemblies 24 stacked along the first direction X, and in the embodiment where the first tab 242 and the second tab 243 are both located at the same end of the main body portion 241, every two tabs close to each other in two adjacent rows of electrode assemblies 24 are the first tab 242 or the second tab 243, so that the two tabs close to each other in two adjacent rows of electrode assemblies 24 can be connected to the same first electrode terminal 22 through a first current collecting member 23 or connected to the same second electrode terminal 25 through a second current collecting member 26.

By setting the number of electrode assemblies 24 stacked along the first direction X of the battery cell 20 to be greater than or equal to 5, a large-capacity battery cell 20 can be achieved. The large-capacity battery cell 20 can be achieved without increasing the winding size or stacking size of a single electrode assembly 24, which is conducive to reducing the manufacturing difficulty and manufacturing cost of a single electrode assembly 24.

According to some embodiments of the present application, continuing to refer to FIG. 3 and FIG. 4, FIG. 10 and FIG. 11, FIG. 15 and FIG. 16, FIG. 17 and FIG. 18, and FIG. 22, the shell 21 may comprise a shell body 212 and an end cover 213. An accommodating cavity with an opening 2121 is formed inside the shell body 212, the accommodating cavity is configured to accommodate the electrode assembly 24, the end cover 213 closes the opening 2121, and the end cover 213 is the wall portion 211.

The end cover 213 is the wall portion 211. That is to say, the first electrode terminal 22 is mounted on the end cover 213, and the second electrode terminal 25 is also mounted on the end cover 213.

It should be noted that the structure of the battery cell 20 is not limited thereto. In some embodiments, the battery cell 20 may be of other structures. For example, the shell 21 may comprise the shell body 212 and the end cover 213. An accommodating cavity with an opening 2121 is formed inside the shell body 212, and the accommodating cavity is configured to accommodate the electrode assembly 24. The end cover 213 closes the opening 2121. The shell body 212 comprises the wall portion 211, that is, the wall portion 211 is a wall of the shell body 212. The wall portion 211 can be the bottom wall of the shell body 212 provided opposite to the end cover 213, or a side wall of the shell body 212 that is connected to and adjacent to the end cover 213. In other words, the first electrode terminal 22 and the second electrode terminal 25 are both mounted on the shell body 212.

By providing the wall portion 211 of the shell 21 as the end cover 213 of the shell 21 for closing the opening 2121, for the battery cell 20 adopting such a structure, it is convenient to assemble components such as the first electrode terminal 22 on the end cover 213, and to connect the first current collecting member 23 and the first electrode terminal 22, which is conducive to reducing the assembly difficulty of the battery cell 20, so as to improve the production efficiency of the battery cell 20. Similarly, by providing the wall portion 211 of the shell 21 as a wall of the shell body 212, the battery cell 20 adopting such a structure can make the region of the shell 21 mounted with the first electrode terminal 22 and other components away from the end cover 213, thereby alleviating the phenomenon that the force generated by the first electrode terminal 22 and other components pulling or twisting the wall portion 211 directly acts on the end cover 213, which is conducive to reducing the risk of connection failure between the end cover 213 and the shell body 212, and further effectively reducing the risk of liquid leakage of the battery cell 20 during use.

According to some embodiments of the present application, the present application further provides a battery 100, and the battery 100 comprises the battery cell 20 according to any one of the above solutions.

Referring to FIG. 2, the battery 100 may further comprise a box 10, and the battery cell 20 is accommodated in the box 10.

In some embodiments, the box 10 may comprise a first box body 11 and a second box body 12. The first box body 11 and the second box body 12 cover each other, and the first box body 11 and the second box body 12 together define an assembling space for accommodating the battery cell 20.

Optionally, the second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box 10 formed by the first box body 11 and the second box body 12 may be in various shapes, such as a cylinder or a cuboid. Exemplarily, in FIG. 2, the box 10 is of a cuboid structure.

Optionally, there may be one or a plurality of battery cells 20 arranged in the box 10. Exemplarily, in FIG. 2, a plurality of battery cells 20 are provided in the box 10 of the battery 100, and the plurality of battery cells 20 may be connected in series, parallel or parallel-series connection, where the parallel-series connection means that some of the plurality of battery cells 20 are connected in series and some are connected in parallel. The plurality of battery cells 20 may be directly connected in series, parallel or parallel-series connection together, and then, the whole formed by the plurality of battery cells 20 is accommodated in the box 10. Of course, the battery 100 may also be in the form of a battery module composed of a plurality of battery cells 20 in series, parallel or parallel-series connection first, and then, a plurality of battery modules are connected in series, parallel or parallel-series connection to form a whole which is accommodated in the box 10.

The battery 100 may further comprise other structures. For example, the battery 100 may further comprise a busbar, and the plurality of battery cells 20 may be connected through the busbar so as to achieve electrical connection between the plurality of battery cells 20.

It should be noted that in some embodiments, the battery 100 may not be provided with a box 10. The battery 100 comprises a plurality of battery cells 20, and the battery 100 composed of the plurality of battery cells 20 may be directly assembled onto an electrical apparatus to provide electric energy to the electrical apparatus through the plurality of battery cells 20. In other words, the box 10 may be used as part of the electrical apparatus. The electrical apparatus is, for example, a vehicle 1000, and the box 10 may be used as part of a chassis structure of the vehicle 1000. For example, part of the box 10 may become at least part of a floor of the vehicle 1000, or part of the box 10 may become at least part of a cross beam and a longitudinal beam of the vehicle 1000.

According to some embodiments of the present application, the present application further provides an electrical apparatus, the electrical apparatus comprises a battery cell 20 according to any one of the above solutions, and the battery cell 20 is configured to provide electric energy to the electrical apparatus.

The electrical apparatus may be any one of the above devices or systems adopting the battery cell 20.

According to some embodiments of the present application, the present application further provides an energy storage cabinet comprising a plurality of battery cells 20 of any one of the above solutions.

The energy storage cabinet comprises a cabinet body, a plurality of battery cells 20 are provided in the cabinet body, and the plurality of battery cells 20 are provided along the second direction Y.

According to some embodiments of the present application, referring to FIG. 10 to FIG. 14, the present application provides a battery cell 20. The battery cell 20 comprises a shell 21, a first electrode terminal 22, a second electrode terminal 25, a first current collecting member 23, a second current collecting member 26, a first insulating member 27, a second insulating member 28, a third insulating member 29, and a plurality of electrode assemblies 24. The shell 21 has a wall portion 211, the shell 21 comprises a shell body 212 and an end cover 213, an accommodating cavity having an opening 2121 is formed inside the shell body 212, the end cover 213 closes the opening 2121, and the end cover 213 is the wall portion 211. The plurality of electrode assemblies 24 are all accommodated in the accommodating cavity. The plurality of electrode assemblies 24 are stacked along the first direction X, and the wall portion 211 is provided on a side of the plurality of electrode assemblies 24 along the first direction X. The electrode assembly 24 comprises a main body portion 241, a first tab 242 and a second tab 243. Along the second direction Y, the first tab 242 and the second tab 243 are both provided at the same end of the main body portion 241, the first tabs 242 of the plurality of electrode assemblies 24 are located at the same end of the main body portion 241, and the second tabs 243 of the plurality of electrode assemblies 24 are located at the same end of the main body portion 241. The first electrode terminal 22 and the second electrode terminal 25 are both provided on the same wall portion 211, and the first electrode terminal 22 and the second electrode terminal 25 are provided at intervals along the third direction Z. Every two of the first direction X, the second direction Y and the third direction Z are perpendicular to each other. The first current collecting member 23 and the second current collecting member 26 are both provided in the shell 21, and the first current collecting member 23 and the second current collecting member 26 are provided at intervals along the third direction Z. The first current collecting member 23 comprises a first connecting portion 232 and a third connecting portion 233 that are connected to each other. The first connecting portion 232 is located on a side of the main body portion 241 provided with the first tab 242 in the second direction Y, and the first connecting portion 232 is connected to the first tabs 242 of the plurality of electrode assemblies 24. The third connecting portion 233 is located between the wall portion 211 and the plurality of electrode assemblies 24 in the first direction X. A first protrusion 234 is provided on a side of the third connecting portion 233 away from the plurality of electrode assemblies 24. The first protrusion 234 is welded to the first electrode terminal 22 to electrically connect the first electrode terminal 22 and the plurality of electrode assemblies 24. The first connecting portion 232 is provided with a first clearance area 231, the first clearance area 231 runs through the first connecting portion 232 along the second direction Y. The first tab 242 passes through the first clearance area 231 and is connected to a side of the first connecting portion 232 away from the main body portion 241. The first clearance area 231 is a through hole provided on the first connecting portion 232 or a notch provided at the edge of the first connecting portion 232 in the third direction Z. The second current collecting member 26 comprises a second connecting portion 262 and a fourth connecting portion 263 that are connected to each other. The second connecting portion 262 is located on a side of the main body portion 241 provided with the second tab 243 in the second direction Y, and the second connecting portion 262 is connected to the second tabs 243 of the plurality of electrode assemblies 24. The fourth connecting portion 263 is located between the wall portion 211 and the plurality of electrode assemblies 24 in the first direction X. A second protrusion 264 is provided on a side of the fourth connecting portion 263 away from the plurality of electrode assemblies 24. The second protrusion 264 is welded to the second electrode terminal 25 to electrically connect the second electrode terminal 25 and the plurality of electrode assemblies 24. The second connecting portion 262 is provided with a second clearance area 261, the second clearance area 261 runs through the second connecting portion 262 along the second direction Y. The second tab 243 passes through the second clearance area 261 and is connected to a side of the second connecting portion 262 away from the main body portion 241. The second clearance area 261 is a through hole provided on the second connecting portion 262 or a notch provided at the edge of the second connecting portion 262 in the third direction Z. The first insulating member 27 is provided on a side of the first connecting portion 232 and the second connecting portion 262 away from the main body portion 241 along the second direction Y to insulate and isolate the first connecting portion 232 from the shell 21 and the second connecting portion 262 from the shell 21. The second insulating member 28 is provided between the first connecting portion 232 and the second connecting portion 262 and the main body portion 241 along the second direction Y to insulate and isolate the first connecting portion 232 from the main body portion 241 and the second connecting portion 262 from the main body portion 241. The third insulating member 29 is provided between the third connecting portion 233 and the fourth connecting portion 263 and the plurality of electrode assemblies 24 along the first direction X to insulate and isolate the third connecting portion 233 from the electrode assemblies 24 and the fourth connecting portion 263 from the electrode assemblies 24. Along the first direction X, a first clamping groove 31 is provided on a side of the third insulating member 29 away from the electrode assembly 24, and the third connecting portion 233 is accommodated in the first clamping groove 31; a second clamping groove 32 is provided on a side of the third insulating member 29 away from the electrode assembly 24, and the fourth connecting portion 263 is accommodated in the second clamping groove 32.

It should be noted that in the case of no conflict, the embodiments in the present application and the features in the embodiments may be combined with each other.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery cell, comprising:
a shell, having a wall portion;
a first electrode terminal, mounted on the wall portion;
a plurality of electrode assemblies, accommodated inside the shell, wherein the plurality of electrode assemblies are stacked along a first direction, the electrode assembly comprises a main body portion and a first tab, the first tab is provided at an end of the main body portion along a second direction, the first tabs of the plurality of electrode assemblies are located at the same end of the main body portion, and the second direction intersects with the first direction; and
a first current collecting member, electrically connecting the first electrode terminal and each of the first tabs.

2. The battery cell according to claim 1, wherein along the second direction, at least part of the first current collecting member is located on a side of the main body portion provided with the first tab, and part of the first tab is located on a side of the first current collecting member away from the main body portion and is connected to the first current collecting member.

3. The battery cell according to claim 2, wherein a first clearance area is provided on the first current collecting member, the first clearance area runs through the first current collecting member along the second direction, and the first tab passes through the first clearance area and is connected to a side of the first current collecting member away from the main body portion.

4. The battery cell according to claim 3, wherein the first clearance area is a through hole provided on the first current collecting member; or
the first clearance area is a notch provided at the edge of the first current collecting member.

5. The battery cell according to any one of claims 1 to 4, wherein the first current collecting member is provided inside the shell; or
along the second direction, a first pore channel for each of the first tabs to extend out is provided on a side of the shell close to the first tab, each of the first tabs is capable of extending out of the shell through the corresponding first pore channel, the first current collecting member is provided outside the shell, and the first current collecting member is electrically connected to the first tab that extends out.

6. The battery cell according to any one of claims 1 to 5, wherein the electrode assembly further comprises a second tab, along the second direction, the second tab is provided at an end of the main body portion, the second tabs of the plurality of the electrode assemblies are located at the same end of the main body portion, and a polarity of the second tab is opposite to a polarity of the first tab;
and wherein the battery cell further comprises a second electrode terminal and a second current collecting member, the second electrode terminal is mounted on the wall portion, and the second current collecting member electrically connects the second electrode terminal and each of the second tabs.

7. The battery cell according to claim 6, wherein along the second direction, at least part of the second current collecting member is located on a side of the main body portion provided with the second tab, and part of the second tab is located on a side of the second current collecting member away from the main body portion and is connected to the second current collecting member.

8. The battery cell according to claim 7, wherein a second clearance area is provided on the second current collecting member, the second clearance area runs through the first current collecting member along the second direction, and the second tab passes through the second clearance area and is connected to a side of the second current collecting member away from the main body portion.

9. The battery cell according to claim 8, wherein the second clearance area is a through hole provided on the second current collecting member; or
the second clearance area is a notch provided at the edge of the second current collecting member.

10. The battery cell according to any one of claims 6 to 9, wherein the second current collecting member is provided inside the shell; or
along the second direction, a second pore channel for each of the second tabs to extend out is provided on a side of the shell close to the second tab, each of the second tabs is capable of extending out of the shell through the corresponding second pore channel, the second current collecting member is provided outside the shell, and the second current collecting member is electrically connected to the second tab that extends out.

11. The battery cell according to any one of claims 6 to 10, wherein along the second direction, the first tab and the second tab are both provided at the same end of the main body portion, the first tab and the second tab are provided at intervals along a third direction, and the first direction, the second direction and the third direction are not coplanar and every two of them intersect with each other;
wherein the first current collecting member comprises a first connecting portion electrically connecting each of the first tabs, the second current collecting member comprises a second connecting portion electrically connecting each of the second tabs, the first connecting portion and the second connecting portion are both located on a side of the main body portion provided with the first tab and the second tab in the second direction, and the first connecting portion and the second connecting portion are provided at intervals along the third direction.

12. The battery cell according to claim 11, wherein the battery cell further comprises:
a first insulating member, provided on a side of the first connecting portion and the second connecting portion away from the main body portion along the second direction to insulate and isolate the first connecting portion from the shell and the second connecting portion from the shell.

13. The battery cell according to claim 11 or 12, wherein the battery cell further comprises:
a second insulating member, provided between the first connecting portion and the second connecting portion and the main body portion along the second direction to insulate and isolate the first connecting portion from the main body portion and the second connecting portion from the main body portion.

14. The battery cell according to any one of claims 11 to 13, wherein along the second direction, the wall portion is located on a side of the plurality of electrode assemblies, the first tab and the second tab are both provided at an end of the main body portion facing the wall portion, and the first current collecting member and the second current collecting member are both provided on a side of the main body portion facing the wall portion.

15. The battery cell according to claim 14, wherein along the second direction, a first protrusion is provided on a side of the first current collecting member facing the wall portion, and the first protrusion is connected to the first electrode terminal; and/or,
along the second direction, a second protrusion is provided on a side of the second current collecting member facing the wall portion, and the second protrusion is connected to the second electrode terminal.

16. The battery cell according to any one of claims 11 to 13, wherein along the first direction, the wall portion is located on at least one side of the plurality of electrode assemblies;
wherein the first current collecting member further comprises a third connecting portion connected to the first connecting portion, the third connecting portion is located on a side of the plurality of electrode assemblies facing the wall portion in the first direction, and the third connecting portion is connected to the first electrode terminal;
the second current collecting member further comprises a fourth connecting portion connected to the second connecting portion, the fourth connecting portion is located on a side of the plurality of electrode assemblies facing the wall portion in the first direction, and the fourth connecting portion is connected to the second electrode terminal.

17. The battery cell according to claim 16, wherein along the first direction, a first protrusion is provided on a side of the third connecting portion facing the wall portion, and the first protrusion is connected to the first electrode terminal; and/or,
along the first direction, a second protrusion is provided on a side of the fourth connecting portion facing the wall portion, and the second protrusion is connected to the second electrode terminal.

18. The battery cell according to claim 16 or 17, wherein along the first direction, the first electrode terminal and the second electrode terminal are both provided on the same side of the plurality of electrode assemblies, and the third connecting portion and the fourth connecting portion are both located on a side of the plurality of electrode assemblies facing the first electrode terminal and the second electrode terminal.

19. The battery cell according to claim 18, wherein the battery cell further comprises:
a third insulating member, provided between the third connecting portion and the fourth connecting portion and the plurality of electrode assemblies along the first direction to insulate and isolate the third connecting portion from the electrode assembly and the fourth connecting portion from the electrode assembly.

20. The battery cell according to claim 19, wherein along the first direction, a first clamping groove is provided on a side of the third insulating member away from the electrode assembly, and the third connecting portion is accommodated in the first clamping groove; and/or,
along the first direction, a second clamping groove is provided on a side of the third insulating member away from the electrode assembly, and the fourth connecting portion is accommodated in the second clamping groove.

21. The battery cell according to claim 16 or 17, wherein along the first direction, the shell has two wall portions provided oppositely, the two wall portions are respectively located on opposite sides of the plurality of electrode assemblies, and the first electrode terminal and the second electrode terminal are respectively provided on the two wall portions;
wherein the third connecting portion is located on a side of the plurality of electrode assemblies facing the first electrode terminal, and the fourth connecting portion is located on a side of the plurality of electrode assemblies facing the second electrode terminal.

22. The battery cell according to claim 21, wherein the battery cell further comprises:
a third insulating member and a fourth insulating member, respectively provided on opposite sides of the plurality of electrode assemblies along the first direction, wherein the third insulating member is located between the third connecting portion and the plurality of electrode assemblies to insulate and isolate the third connecting portion from the electrode assembly, and the fourth insulating member is located between the fourth connecting portion and the plurality of electrode assemblies to insulate and isolate the fourth connecting portion from the electrode assembly.

23. The battery cell according to claim 22, wherein along the first direction, a first clamping groove is provided on a side of the third insulating member away from the electrode assembly, and the third connecting portion is accommodated in the first clamping groove; and/or,
along the first direction, a second clamping groove is provided on a side of the fourth insulating member away from the electrode assembly, and the fourth connecting portion is accommodated in the second clamping groove.

24. The battery cell according to any one of claims 6 to 10, wherein along the second direction, the first tab and the second tab are respectively provided at opposite ends of the main body portion;
wherein the first current collecting member comprises a first connecting portion electrically connecting each of the first tabs, the first connecting portion is located on a side of the main body portion provided with the first tab in the second direction, the second current collecting member comprises a second connecting portion electrically connecting each of the second tabs, and the second connecting portion is located on a side of the main body portion provided with the second tab in the second direction.

25. The battery cell according to claim 24, wherein the battery cell further comprises:
two first insulating member, respectively provided on opposite sides of the plurality of electrode assemblies along the second direction, wherein one of the first insulating members is located on a side of the first connecting portion away from the main body portion to insulate and isolate the first connecting portion from the shell, and the other first insulating member is located on a side of the second connecting portion away from the main body portion to insulate and isolate the second connecting portion from the shell.

26. The battery cell according to claim 24 or 25, wherein the battery cell further comprises:
two second insulating members, respectively provided on opposite sides of the plurality of electrode assemblies along the second direction, wherein one of the second insulating members is located between the first connecting portion and the main body portion to insulate and isolate the first connecting portion from the main body portion, and the other second insulating member is located between the second connecting portion and the main body portion to insulate and isolate the second connecting portion from the main body portion.

27. The battery cell according to any one of claims 24 to 26, wherein along the first direction, the wall portion is located on at least one side of the plurality of electrode assemblies;
wherein the first current collecting member further comprises a third connecting portion connected to the first connecting portion, the third connecting portion is located on a side of the plurality of electrode assemblies facing the wall portion in the first direction, and the third connecting portion is connected to the first electrode terminal;
the second current collecting member further comprises a fourth connecting portion connected to the second connecting portion, the fourth connecting portion is located on a side of the plurality of electrode assemblies facing the wall portion in the first direction, and the fourth connecting portion is connected to the second electrode terminal.

28. The battery cell according to claim 27, wherein along the first direction, a first protrusion is provided on a side of the third connecting portion facing the wall portion, and the first protrusion is connected to the first electrode terminal; and/or,
along the first direction, a second protrusion is provided on a side of the fourth connecting portion facing the wall portion, and the second protrusion is connected to the second electrode terminal.

29. The battery cell according to claim 27 or 28, wherein along the first direction, the first electrode terminal and the second electrode terminal are both provided on the same side of the plurality of electrode assemblies, and the third connecting portion and the fourth connecting portion are both located on a side of the plurality of electrode assemblies facing the first electrode terminal and the second electrode terminal.

30. The battery cell according to claim 29, wherein the battery cell further comprises:
a third insulating member, provided between the third connecting portion and the fourth connecting portion and the plurality of electrode assemblies along the first direction to insulate and isolate the third connecting portion from the electrode assembly and the fourth connecting portion from the electrode assembly.

31. The battery cell according to claim 30, wherein along the first direction, a first clamping groove is provided on a side of the third insulating member away from the electrode assembly, and the third connecting portion is accommodated in the first clamping groove; and/or,
along the first direction, a second clamping groove is provided on a side of the third insulating member away from the electrode assembly, and the fourth connecting portion is accommodated in the second clamping groove.

32. The battery cell according to claim 27 or 28, wherein along the first direction, the shell has two wall portions provided oppositely, the two wall portions are respectively located on opposite sides of the plurality of electrode assemblies, and the first electrode terminal and the second electrode terminal are respectively provided on the two wall portions;
wherein the third connecting portion is located on a side of the plurality of electrode assemblies facing the first electrode terminal, and the fourth connecting portion is located on a side of the plurality of electrode assemblies facing the second electrode terminal.

33. The battery cell according to claim 32, wherein the battery cell further comprises:
a third insulating member and a fourth insulating member, respectively provided on opposite sides of the plurality of electrode assemblies along the first direction, wherein the third insulating member is located between the third connecting portion and the plurality of electrode assemblies to insulate and isolate the third connecting portion from the electrode assembly, and the fourth insulating member is located between the fourth connecting portion and the plurality of electrode assemblies to insulate and isolate the fourth connecting portion from the electrode assembly.

34. The battery cell according to claim 33, wherein along the first direction, a first clamping groove is provided on a side of the third insulating member away from the electrode assembly, and the third connecting portion is accommodated in the first clamping groove; and/or,
along the first direction, a second clamping groove is provided on a side of the fourth insulating member away from the electrode assembly, and the fourth connecting portion is accommodated in the second clamping groove.

35. The battery cell according to any one of claims 1 to 34, wherein along the first direction, a buffer member is provided between two adjacent electrode assemblies.

36. The battery cell according to any one of claims 1 to 35, wherein the battery cell comprises N electrode assemblies stacked along the first direction, with N≥5.

37. The battery cell according to any one of claims 1 to 36, wherein the shell comprises:
a shell body, an accommodating cavity having an opening being formed inside the shell body, and the accommodating cavity being configured to accommodate the electrode assembly; and
an end cover for closing the opening;
wherein the end cover is the wall portion; or
the shell body comprises the wall portion.

38. A battery, comprising the battery cell according to any one of claims 1 to 37.

39. An electrical apparatus, comprising the battery cell according to any one of claims 1 to 37, wherein the battery cell is configured to provide electric energy.

40. An energy storage cabinet, comprising the plurality of battery cells according to any one of claims 1 to 37.
